# EUROPÄISCHE PATENTANMELDUNG

(11) **EP 4 814 428 A1**
(43) Veröffentlichungstag der Anmeldung: **30.09.2026**
(21) Anmeldenummer: 25165918.1
(22) Anmeldetag: 25.03.2025
(51) Int. Cl.: F28D 7/16, F28F 7/02, B33Y 80/00

(54) **WÄRMETAUSCHER**

(71) Anmelder: Promix Solutions AG, 8406 Winterthur (CH)
(72) Erfinder: Heusser, Rolf, 8400 Winterthur (CH)
(74) Vertreter: Herrmann, Johanna

(57) **Zusammenfassung**

Ein Wärmetauscher (5), enthält ein Mantelelement (3) und ein erstes Einsatzelement (1), wobei das erste Einsatzelement (1) im Betriebszustand im Inneren des Mantelelements (3) angeordnet ist. Das erste Einsatzelement (1) enthält zumindest ein erstes Einsatzmantelelement (11) und mindestens ein erstes Stegelement (10) und ein zweites Stegelement (20). Durch das erste Einsatzelement (1) ist ein Fluidkanal (4) ausgebildet, wobei das erste Stegelement (10) und das zweite Stegelement (20) den Fluidkanal (4) kreuzen, wobei das erste Stegelement (10) einen ersten Stegelementkanal (12) und das zweite Stegelement (20) einen zweiten Stegelementkanal (22) für ein Wärmeträgerfluid enthalten. Das erste Einsatzmantelelement (11) ist mit zumindest einer Zuleitung (28, 48) und mit zumindest einer Ableitung (29, 49 für ein Wärmeträgerfluid fluidleitend verbunden. Zumindest ein zweites Einsatzelement (2) ist im Inneren des Mantelelements (3) angeordnet, welches mit dem ersten Einsatzelement (1) fluiddicht verbunden ist, sodass ein Eintritt von Wärmeträgerfluid in den Fluidkanal (4) zwischen dem ersten Einsatzelement (1) und dem mindestens einen zweiten Einsatzelement (2) ausgeschlossen ist.

## Beschreibung

Die Erfindung betrifft einen kostengünstig herstellbaren Wärmetauscher, der auch als statischer Mischer eingesetzt werden kann oder einen statischen Mischer, der gleichzeitig auch als Wärmetauscher ausgebildet sein kann oder die Funktion eines Wärmetauschers einschliessen kann. Der Wärmetauscher eignet sich insbesondere zum Kühlen oder Wärmen von Massenströmen, mit anderen Worten von fliessfähigen Medien, beispielsweise von Fluiden, wobei die Fluide beispielsweise viskose oder hochviskose Fluide, insbesondere Polymere umfassen können. Es gibt verschiedene Wärmetauscher mit einer Mischerstruktur aus Stegen oder Rohren, wobei die Mischerstruktur einen Mischeffekt im Massenstrom bewirkt und das Wärmeträgerfluid im Inneren der Stege oder Rohre fliesst. Vorteilhafterweise werden solche Wärmetauscher mehrteilig gebaut, insbesondere werden der drucktragende Mantel des Wärmetauschers und die Mischerstrukturen separat hergestellt und dann zu einem Wärmetauscher zusammengebaut. Der drucktragende Mantel und die Mischerstrukturen können aus unterschiedlichen Materialien oder auch mit unterschiedlichen Herstellverfahren hergestellt werden.

Wärmetauscher werden in vielen Bereichen der verarbeitenden Industrie eingesetzt. Nach einem Ausführungsbeispiel kann ein fliessfähiges Medium über zumindest ein ortsfestes Einsatzelement bewegt werden. Das Einsatzelement enthält üblicherweise Einbauelemente, welche eine Umlenkung des Fluidstroms respektive des fliessfähigen Mediums bewirken, der durch den Innenraum des Einsatzelements geführt wird, der von einem Einsatzmantelelement begrenzt wird. Die Einbauelemente werden von einem Wärmeträgerfluid durchströmt. Das Einsatzelement wird vom fliessfähigen Medium durch Erzeugen eines Druckgradienten durchströmt. Der Druckgradient kann beispielsweise durch den Einsatz von Pumpen erzeugt werden.

Eine Vorrichtung zum statischen Mischen und Wärmeaustausch gemäss EP 2 851 118 B1 umfasst ein Mantelelement und einen Mischereinsatz, wobei der Mischereinsatz im Betriebszustand im Inneren des Mantelelements angeordnet ist. Der Mischereinsatz umfasst eine erste Gruppe von Stegelementen sowie eine zweite Gruppe von Stegelementen, wobei die erste Gruppe von Stegelementen sich entlang einer gemeinsamen ersten Gruppenebene erstreckt und die zweite Gruppe von Stegelementen sich entlang einer zweiten gemeinsamen Gruppenebene erstreckt. Die Gruppenebene ist somit dadurch charakterisiert, dass sie die Mittenachse der Stegelemente enthält. Mindestens ein Teil der Stegelemente weist Kanäle auf, wobei die Kanäle sich von einem ersten Ende des Stegelements zu einem zweiten Ende des Stegelements erstrecken. Das Mantelelement enthält je einen korrespondierenden Kanal, der mit dem ersten und zweiten Ende des Stegelements in fluidleitender Verbindung steht, wobei der Übergang von zumindest einem der ersten und zweiten Enden des Stegelements zu dem jeweils korrespondierenden Kanal im Mantelelement spaltfrei erfolgt.

Wenn eine derartige Vorrichtung zur Verarbeitung von hochviskosen Fluiden, beispielsweise Polymerschmelzen eingesetzt wird, müssen die dort eingesetzten statischen Mischer typischerweise Nenndrücke von 50 bis zu 400 bar und Temperaturen von 50 bis zu 300 Grad Celsius standhalten, sodass der Mantel des Einsatzelementes als ein dickwandiges Rohr ausgebildet ist. Daher wurde gemäss EP 3 489 603 B1 vorgeschlagen, einen drucktragenden Mantel und die Einsatzelemente, welche Mischerstrukturen enthalten, separat herzustellen und dann zu einem Wärmetauscher zusammenzubauen. Die Einsatzelemente und der drucktragende Mantel können aus unterschiedlichen Materialien bestehen oder auch mit unterschiedlichen Herstellverfahren hergestellt werden. Dabei werden einzelne Einsatzelemente in Zwischenmantelelemente gepresst und eine Mehrzahl von solchen Zwischenmantelelementen in ein Mantelelement eingebaut. Die Einsatzelemente können relativ komplexe Mischerstrukturen enthalten. Die Einsatzelemente werden durch seitliche Pressung aneinander gefügt, wobei eine Dichtung benachbarter Einsatzelemente durch eine Presskraft erfolgt, die auf die stirnseitigen Dichtflächen wirkt. Zusätzlich können auf den Dichtflächen auch noch Dichtungen eingesetzt werden.

Es hat sich aber gezeigt, dass solche Konstruktionen sehr anfällig auf Leckagen sind. Das Wärmeträgerfluid gelangt durch Kanäle im Zwischenmantelelement und im Einsatzmantelelement in die einzelnen Stegelementkanäle der Stegelemente, die sich im Fluidkanal befinden, welcher den Massestrom enthält. Bei allen Übergängen von Einzelteilen besteht die Gefahr von Undichtheit. So kann der Wärmetauscher bei unsachgemässer Montage oder nach hohen Druck- und Druckverlustbelastungen auf der Massenstromseite undicht werden und es kann Wärmeträgerfluid in den Massestrom gelangen, was nicht erwünscht ist. Insbesondere kann dünnflüssiges Wärmeträgerfluid in den axial zur Durchflussrichtung bestehenden Spalten zwischen dem Mantelelement und den Einsatzelementen fliessen. Dringt Wärmeträgerfluid in diese Spalte ein, so kann es an den stirnseitigen Dichtflächen benachbarter Einsatzelemente in den Massestrom gelangen.

Aufgabe der Erfindung ist es daher, einen Wärmetauscher und statischen Mischer zu schaffen, bei welchem ein Eindringen von Wärmeträgerfluid in den Massestrom ausgeschlossen werden kann. Der Massestrom ist insbesondere ein hochviskoses Fluid. Der Wärmetauscher ist ausgebildet, um einem entsprechend hohen Fluiddruck stand zu halten.

Die Lösung der Aufgabe der Erfindung erfolgt durch einen Wärmetauscher gemäss Anspruch 1. Vorteilhafte Varianten des Wärmetauschers sind Gegenstand der abhängigen Ansprüche.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für einen Wärmetauscher. Die Beschreibung eines bestimmten Wärmetauschers ist nur als beispielhaft anzusehen. In der Beschreibung und den Ansprüchen werden die Begriffe "enthalten", "umfassen", "aufweisen" als "enthalten, aber nicht beschränkt auf" interpretiert.

Der Wärmetauscher gemäss der Erfindung enthält ein Mantelelement und ein erstes Einsatzelement, wobei das erste Einsatzelement im Betriebszustand im Inneren des Mantelelements angeordnet ist. Das erste Einsatzelement enthält zumindest ein erstes Einsatzmantelelement und mindestens ein erstes Stegelement und ein zweites Stegelement. Durch das erste Einsatzelement ist ein Fluidkanal ausgebildet. Das erste Stegelement und das zweite Stegelement kreuzen den Fluidkanal. Das erste Stegelement enthält einen ersten Stegelementkanal und das zweite Stegelement enthält einen zweiten Stegelementkanal für ein Wärmeträgerfluid. Das erste Einsatzmantelelement ist mit zumindest einer Zuleitung und mit zumindest einer Ableitung für das Wärmeträgerfluid fluidleitend verbunden. Zumindest ein zweites Einsatzelement ist im Inneren des Mantelelements angeordnet, welches mit dem ersten Einsatzelement fluiddicht verbunden ist, sodass ein Eintritt von Wärmeträgerfluid in den Fluidkanal zwischen dem ersten Einsatzelement und dem mindestens einen zweiten Einsatzelement ausgeschlossen ist.

Die ersten und zweiten Einsatzelemente sind somit unlösbar und dicht miteinander verbunden. Der Wärmetauscher kann ein separat hergestelltes Mantelelement und separat hergestellte erste und zweite Einsatzelemente umfassen. Das zweite Einsatzelement kann einen dem ersten Einsatzelement entsprechenden Aufbau aufweisen. Das Wärmeträgerfluid kann auch immer noch in den axialen Spalt gelangen, der nach der Montage zwischen dem Mantelelement und dem zumindest einen ersten und zweiten Einsatzelement besteht. Das Wärmeträgerfluid kann aber nicht mehr über stirnseitige Dichtflächen zwischen den ersten und zweiten Einsatzelementen in den Fluidkanal gelangen, welcher zur Aufnahme des fliessfähigen Mediums bestimmt ist.

Die Verbindung der ersten und zweiten Einsatzelemente kann zum Beispiel durch Schweissen oder Löten erfolgen. Die ersten und zweiten Einsatzelemente können monolithisch hergestellt werden. Mit anderen Worten wird durch die ersten und zweiten Einsatzelemente ein einziges Bauteil ausgebildet. Die Herstellung der ersten und zweiten Einsatzelemente kann insbesondere durch ein additives Fertigungsverfahren erfolgen. Die aussenliegenden Stirnseiten der ersten und zweiten Einsatzelemente können durch Klemmen abgedichtet werden oder vorteilhafterweise durch ein dichtendes Verbindungsverfahren, wie Schweissen oder Löten, abgedichtet werden.

Ein weiterer Vorteil des erfindungsgemässen Wärmetauschers liegt in der Verwendung einer beliebigen Kombination von ersten Einsatzelementen und zweiten Einsatzelementen. Der Wärmetauscher ist in einem grossen Druckbereich einsetzbar. Der Druckbereich kann von Umgebungsdruck bis zu einem Druck von über 600 bar reichen. Jedes der ersten und zweiten Einsatzelemente wird im Mantelelement gehalten, welches für einen bestimmten Maximaldruck ausgelegt ist. Insbesondere können die ersten und zweiten Einsatzelemente mit Mantelelementen unterschiedlicher Wandstärke und/oder unterschiedlicher Materialien kombiniert werden. Mit zunehmender Wandstärke wird bei gleichem Nenndurchmesser eine höhere Druckbeständigkeit des Wärmetauschers erzielt. Das Mantelelement ist wesentlich einfacher zu fertigen, daher kann es auch aus einem hochfesten Werkstoff bestehen, für welchen nur eine eingeschränkte Anzahl an Fertigungsverfahren zur Verfügung stehen. Für den Zusammenbau ist es dann nur noch erforderlich, die ersten und zweiten Einsatzelemente, die einen beliebig komplexen Aufbau aufweisen können, das entsprechende Mantelelement einzusetzen.

Zudem kann die Lagerhaltung optimiert werden, indem nur die Einsatzelemente verschiedener Nenndurchmesser und gegebenenfalls unterschiedlicher Baulänge an Lager gehalten werden müssen. Die Mantelelemente können erst nach Eingang der Bestellung gemäss Spezifikation des Kunden für den vom Kunden benötigten Druck des fliessfähigen Mediums gefertigt werden, da deren Fertigung bedarfsgerecht und kundenspezifisch innerhalb einer kurzen Zeit erfolgen kann.

Nach einem Ausführungsbeispiel enthält erste Stegelement ein erstes Ende und ein zweites Ende, wobei das erste Ende und das zweite Ende des ersten Stegelements mit dem ersten Einsatzmantelelement an verschiedenen Stellen verbunden sind. Nach einem Ausführungsbeispiel enthält das zweite Stegelement ein erstes Ende und ein zweites Ende, wobei das erste Ende und das zweite Ende des zweiten Stegelements mit dem ersten Einsatzmantelelement an verschiedenen Stellen verbunden sind.

Mit den Einsatzelementen können beliebige Anordnungen von Stegelementen realisiert werden. Die Stegelemente können beliebige Abmessungen aufweisen. Zudem ist die Aussenseite des Einsatzmantelelements vor Einbau desselben in das Mantelelement allseitig gut zugänglich, was es ermöglicht, das Stegelement oder die Stegelemente an beliebigen Stellen in beliebigen Raumrichtungen mit dem Einsatzmantelelement zum Beispiel durch Löten, Schweissen, Klemmen oder Kleben zu verbinden. Alternativ ist das Einsatzelement in einem Stück mittels eines additiven Fertigungsverfahrens oder eines Giessverfahrens herstellbar. Insbesondere können das Einsatzmantelelement und die Stegelemente einteilig ausgebildet sein.

Das erste und das zweite Einsatzelement können einen Einsatzelementmantelkanal enthalten, der mit einem entsprechenden Stegelementkanal fluidleitend verbunden ist. Insbesondere kann der Einsatzelementmantelkanal mit einem Mantelkanal fluidleitend verbunden sein. Der Mantelkanal kann sich über 20% bis 90% der Oberfläche des entsprechenden ersten oder zweiten Einsatzelements erstrecken. Der Mantelkanal kann mit dem Stegelementkanal oder den Stegelementkanälen in fluidleitender Verbindung stehen. Der Mantelkanal kann eine Mehrzahl von Mantelelementkammern enthalten. Der Mantelkanal kann eine Zuleitung für ein Wärmeträgerfluid und eine Ableitung für das Wärmeträgerfluid enthalten. Zumindest einer der Mantelkanäle kann als ein Wärmeträgerfluidverteiler oder als ein Wärmeträgerfluidsammler ausgebildet sein. Nach einem Ausführungsbeispiel kann jede der Mantelelementkammern entweder die Zuleitung oder die Ableitung für das Wärmeträgerfluid enthalten. Eine Mantelelementkammer kann als ein Wärmeträgerfluidverteiler ausgebildet sein, wenn die Mantelelementkammer eine Zuleitung enthält. Eine Mantelelementkammer kann als ein Wärmeträgerfluidsammler ausgebildet sein, wenn die Mantelelementkammer eine Ableitung enthält.

Nach einem Ausführungsbeispiel kann die Wandstärke des Einsatzmantelelements des ersten und des zweiten Einsatzelements mindestens 2 mm betragen. Insbesondere kann die Wandstärke des Einsatzmantelelements des ersten und des zweiten Einsatzelements mindestens 10 mm betragen.

Nach einem Ausführungsbeispiel kann der Stegelementkanal oder zumindest einer der Stegelementkanäle knickfrei verlaufen. Nach einem Ausführungsbeispiel kann der Stegelementkanal oder zumindest einer der Stegelementkanal knickfrei in den entsprechenden Einsatzelementmantelkanal übergehen.

Zumindest ein Teil der Stegelemente erstreckt sich somit über die gesamte Breitenabmessung oder den Durchmesser des Einsatzmantelelements. Die Stegelementkanäle in den Stegelementen erstrecken sich vom ersten Ende zum zweiten Ende des Stegelements, welches unmittelbar an die Innenwand des Einsatzmantelelements anschliesst. Im Einsatzmantelelement befindet sich gemäss einem Ausführungsbeispiel ein Einsatzelementmantelkanal, der an den Stegelementkanal anschliesst. Die Stegelementkanäle der Stegelemente können somit vom Mantelelement durch die Mantelelementkanäle und die Einsatzelementmantelkanäle mit einem Wärmeträgerfluid, insbesondere einer Wärmeträgerflüssigkeit, gespeist werden und vom Wärmeträgerfluid durchströmt werden. Die Länge des Stegelementkanals entspricht mindestens dem mittleren Durchmesser des ersten oder zweiten Einsatzelements, wenn das Stegelement die Längsachse enthält.

Nach einem Ausführungsbeispiel weist zumindest eines der ersten und zweiten Stegelemente einen Knick auf. Insbesondere kann im Knick eine Umlenkung der Strömung in einen zweiten Stegelementteilkanal erfolgen, der in Bezug auf eine Schnittebene, die durch einen ersten Stegelementteilkanal gelegt worden ist, um mindestens einen Stegelementdurchmesser oder eine Stegelementdicke versetzt angeordnet ist.

Nach einem Ausführungsbeispiel enthält zumindest eines der ersten oder zweiten Stegelemente einen ersten Ast und einen zweiten Ast. Der erste Ast enthält nach einem Ausführungsbeispiel einen ersten Stegelementteilkanal und einen zweiten Stegelementteilkanal. Der zweite Ast enthält nach einem Ausführungsbeispiel einen weiteren ersten Stegelementteilkanal und einen weiteren zweiten Stegelementteilkanal. Nach einem Ausführungsbeispiel verläuft der erste Stegelementteilkanal des ersten Asts parallel zum ersten Stegelementteilkanal des zweiten Asts. Nach einem Ausführungsbeispiel verläuft der zweite Stegelementteilkanal des ersten Asts parallel zum zweiten Stegelementteilkanal des zweiten Asts. Nach einem Ausführungsbeispiel sind die ersten Stegelementteilkanäle im Wesentlichen gleich lang wie die zweiten Stegelementteilkanäle. Der erste Stegelementteilkanal kann in Bezug auf den zweiten Stegelementteilkanal in einem Winkel angeordnet sein der im Bereich von 80 Grad bis ungefähr 100 Grad liegt. Insbesondere kann der erste Stegelementteilkanal einen Knick in Bezug auf den zweiten Stegelementteilkanal ausbilden. Insbesondere kann der erste Stegelementteilkanal in einer ersten Ebene angeordnet sein, und der zweite Stegelementteilkanal kann in einer zweiten Ebene angeordnet sein, die parallel zur ersten Ebene angeordnet ist, aber von der ersten Ebene einen Abstand aufweist, er mindestens dem Stegelementdurchmesser oder der Stegelementdicke entspricht.

Der erste Stegelementkanal kann nach einem Ausführungsbeispiel am ersten Ende des ersten Stegelements in einen ersten Mantelkanal münden. Der erste Mantelkanal kann zumindest teilweise durch das erste Einsatzmantelelement verlaufen oder an oder in der Nähe von dessen Innenwand angeordnet sein. Der erste Stegelementkanal kann am zweiten Ende des ersten Stegelements in einen zweiten Mantelkanal münden. Der zweite Mantelkanal kann zumindest teilweise durch das erste Einsatzmantelelement verlaufen oder an oder in der Nähe von dessen Innenwand angeordnet sein. Die ersten und zweiten Mantelkanäle können zur Verbindung der ersten und zweiten Stegelementkanäle des ersten und des zweiten Asts des entsprechenden ersten oder zweiten Stegelements ausgebildet sein.

Der mittlere Durchmesser entspricht dem Innendurchmesser, wenn das erste oder zweite Einsatzelement als ein Kreisrohr ausgeführt ist. Der mittlere Durchmesser für ein eckiges Einsatzelement wird als dessen Umfang / n (pi) definiert, es handelt sich somit um einen äquivalenten Durchmesser. Die Länge des Stegelementkanals kann insbesondere mindestens 10% über dem mittleren Durchmesser liegen, wenn der Stegelementkanal die Mittenachse kreuzt. Die Länge dieses Stegelementkanals kann insbesondere mindestens 20% über dem mittleren Durchmesser, besonders bevorzugt mindestens 30% über dem mittleren Durchmesser liegen.

Ein Stegelement ist in seinen Abmessungen durch seine Länge, seine Breite und seine Dicke bestimmt. Die Länge des Stegelements wird vom ersten Ende des Stegelements zum zweiten Ende des Stegelements gemessen. Die Länge des Stegelementkanals entspricht im Wesentlichen der Länge des Stegelements.

Die Breite des Stegelements wird im Wesentlichen quer zur Strömungsrichtung gemessen. Das heisst, die Breite erstreckt sich im Wesentlichen in einer Ebene, die in rechtem Winkel zur Länge des Stegelements verläuft und den Querschnitt des Stegelements zeigt. Der Querschnitt des Stegelements wird durch dessen Breite und dessen Dicke charakterisiert. Die Länge zumindest des längsten Stegelements ist mindestens 5-mal so gross wie dessen Breite.

Die Breite des Stegelements ist 0.5 bis 5-mal so gross wie dessen Dicke, vorteilhafterweise 0.75 bis 3-mal so gross wie dessen Dicke. Wenn die Breite des Stegelements 1- bis 2-mal so gross wie dessen Dicke ist, ergibt sich ein besonders bevorzugter Bereich, für welchen eine besonders gute Quervermischung erzielbar ist. Die Breite des Stegelements wird als Normalabstand definiert, welcher sich von der ersten Kante und der zweiten Kante des Stegelements auf der Anströmseite erstreckt. Die Breite des Stegelements auf der Anströmseite kann sich von der Breite gemessen auf der Abströmseite des Stegelements unterscheiden.

Unter Kante wird die vom Fluid angeströmte und umströmte Kante des Stegelements verstanden, welche sich im Wesentlichen parallel zur Länge des Stegelements erstreckt. Die Dicke des Stegelements kann variabel sein. Dabei liegt die minimale Dicke, um weniger als 75% und vorteilhafterweise um weniger als 50% unter der maximalen Dicke. Die Variationen können beispielsweise durch Rippen, durch Einbuchtungen, durch Noppen, durch keilförmige Stege oder einer anderen Unebenheit bedingt sein.

Das Stegelement kann dadurch charakterisiert sein, dass in der Strömungsrichtung ebene Flächen, konvexe oder konkave Flächen vorliegen, die eine Angriffsfläche für das strömende Fluid bieten. Diese in Strömungsrichtung ausgerichteten Flächen bewirken einen erhöhten Abströmwiderstand, insbesondere im Vergleich mit einem Rohrelement, was einen verbesserten Wärmeübergang bewirken kann.

Der Stegelementkanal, der im Inneren des entsprechenden Stegelements verläuft, hat vorzugsweise einen Innendurchmesser, der maximal 75% der Dicke des Stegelements entspricht. Grundsätzlich können auch mehrere im Wesentlichen parallel verlaufende Stegelementkanäle in einem Stegelement enthalten sein.

Der Übergang von zumindest einem der ersten und zweiten Enden des Stegelements zum entsprechenden Einsatzmantelelement erfolgt nach einem Ausführungsbeispiel spaltfrei. Die Stegelemente des Einsatzelementes sowie das Einsatzmantelelement bestehen demnach gemäss einem Ausführungsbeispiel aus einem einzigen Bauteil, welches vorzugsweise durch ein additives Fertigungsverfahren oder ein Giessverfahren hergestellt ist. Charakteristisch für die Eigenschaft, dass der Übergang spaltfrei ist, ist ein fliessender Übergang vom Stegelement zum Einsatzmantelelement. Insbesondere können im Übergangsbereich vom Stegelement zum Einsatzmantelelement an den Kanten Rundungen vorgesehen sein, sodass die Strömung des Wärmeträgerfluids nicht wesentlich gestört wird.

Die Stegelementkanäle verlaufen im Inneren der Stegelemente, sodass keine Verbindung zwischen den Kanälen im Inneren der Stegelemente und dem Raum, welcher die Stegelemente umgibt, besteht.

In einem Gussverfahren wird mindestens segmentweise eine monolithische Struktur bestehend aus gegenüber der Hauptströmungsrichtung in einem Winkel ungleich null angeordneten ersten und zweiten Gruppen von Stegelementen und einem fest mit zumindest einem Teil der Stegelemente verbundenen Einsatzmantelelement, welches als Ummantelungsrohr ausgebildet sein kann, hergestellt. Anstelle eines Gussverfahrens kann auch ein additives Fertigungsverfahren zum Einsatz kommen.

Alternativ besteht auch die Möglichkeit, dass die Ausnehmungen des Einsatzmantelelements mit der Aussenkontur des Stegelements übereinstimmen. Das Stegelement kann gemäss diesem Ausführungsbeispiel durch die Ausnehmung des Einsatzmantelelements hindurchgeschoben werden und derart im Innenraum des Einsatzmantelelements positioniert werden. Gemäss diesem Ausführungsbeispiel kann das Stegelement mit dem Einsatzmantelelement durch Kleben, Löten, Schweissen, Klemmen, Einpressen, oder Einschrumpfen fluiddicht verbunden werden.

Die Stegelementkanäle für das Wärmeträgerfluid in den Stegelementen können durch den früher beschriebenen Gussprozess oder das additive Fertigungsverfahren hergestellt werden, aber auch durch nachträgliches Bearbeiten wie Erodieren oder Bohren erfolgen.

Die Stegelemente können aber auch eine andere Querschnittsform aus der Gruppe der Kreise, Ellipsen, abgerundeten Vierecke oder Vielecke aufweisen. Die Querschnittflächen können in einem einzelnen Stegelement oder zwischen mehreren Stegelementen unterschiedlich sein, so können zum Beispiel die Stegelementdicke und/oder die Stegelementbreite variieren. Das Einsatzmantelelement kann einen beliebigen geschlossenen Querschnitt und/oder eine beliebige Geometrie aufweisen, beispielsweise als ein Rohr oder ein rechteckiger Kanal ausgebildet sein.

Ein Wärmeträgerfluid kann eine beliebige Flüssigkeit wie zum Beispiel Wasser oder Öle aber auch ein Gas, wie Luft, umfassen.

Die Stegelemente können in einem Winkel von ungefähr 25 bis 75 Grad, insbesondere in einem Winkel von ungefähr 30 bis 60 Grad zur Hauptströmungsrichtung angeordnet sein. Die Stegelemente können Stegelementgruppen ausbilden, wobei die Stegelemente jeder Stegelementgruppe zueinander parallel angeordnet sein können. Die Stegelemente einer Stegelementgruppe können sich in einer gemeinsamen Gruppenebene befinden. Nach einem Ausführungsbeispiel kreuzen sich die ersten und zweiten Gruppenebenen. Nach einem weiteren Ausführungsbeispiel schliesst sich ein Stegelement der ersten Gruppe an ein Stegelement der zweiten Gruppe an. Benachbarte Stegelemente haben demzufolge gemäss diesem Ausführungsbeispiel eine unterschiedliche Ausrichtung, da sie zu verschiedenen Gruppen gehören.

Nach einem bevorzugten Ausführungsbeispiel kreuzen sich benachbarte Stegelemente, da derart ein verbesserter Wärmeaustausch erzielbar ist. Der Winkel zwischen zwei sich kreuzenden Stegelementen beträgt vorteilhafterweise 25 bis 75 Grad. In einer Gruppe können beliebig viele Stegelemente nebeneinander angeordnet werden. Die Gruppe ist dadurch gekennzeichnet, dass die Mittenachsen sämtlicher Stegelemente dieselbe oder im Wesentlichen dieselbe Gruppenebene aufspannen. Insbesondere werden 2 bis 20 Stegelemente besonders bevorzugt 4 bis 12 Stegelemente parallel in einer Gruppe angeordnet.

Es können beliebig viele Gruppen von Stegelementen in Hauptströmungsrichtung gesehen hintereinander angeordnet werden. Die hintereinander angeordneten Gruppen werden vorteilhafterweise derart angeordnet, dass sie überlappen, um so viel aktive Wärmeaustauschfläche in einem kleinen Apparatevolumen unterzubringen wie möglich. Mit dem Begriff Überlappen ist gemeint, dass mindestens ein Teil der Stegelemente einer ersten Gruppe und ein Teil der Stegelemente einer nachfolgenden Gruppe und/oder einer vorhergehenden Gruppe im gleichen Rohrabschnitt angeordnet sind, in Hauptströmungsrichtung gesehen. Die Projektion der Länge des Stegelements auf die Längsachse ergibt eine Länge L1 und die Projektion des überlappenden Teils der Stegelemente der benachbarten Gruppe auf die Längsachse ergibt eine Länge L2, wobei L2 kleiner als L1 ist und L2 grösser 0 ist. Der betrachtete Rohrabschnitt wird dabei so definiert, dass er die Länge L1 aufweist, das heisst sich von einem zentral angeordneten Stegelement von dessen ersten Ende zu dessen zweiten Ende in der Projektion auf die Längsachse erstreckt.

Da die Mischwirkung in gleich ausgerichteten hintereinander angeordneten Gruppen von Stegelementen nur in einer Ebene stattfindet, wird nach einer gewissen Anzahl von Gruppen die Ausrichtung derart geändert, dass die Gruppen vorteilhafterweise zueinander versetzt angeordnet sind. Insbesondere werden zwei bis einschliesslich 20 Gruppen vorgesehen, besonders bevorzugt 4 bis einschliesslich 8 Gruppen. Die Versetzung zwischen den gleich ausgerichteten Gruppen erfolgt vorteilhafterweise um einen Winkel von 80 bis 100 Grad. Das heisst, dass die zweite Gruppe um die Längsachse um einen Winkel von 80 bis 100 Grad bezogen auf die erste Gruppe ausgerichtet ist.

Zusätzlich zu den vorgehend beschriebenen Gruppen von sich kreuzenden Stegelementen können speziell im Abschlussbereich von gleich ausgerichteten parallelen Gruppen von Stegelementen auch Gruppen angeordnet sein, die Stegelemente enthalten, die sich nur von der Innenwand des Mantelelements bis zur Kreuzungslinie mit der jeweils anderen Gruppe erstrecken. Nachfolgend werden diese Gruppen als halbe sich kreuzende Steggruppen bezeichnet. Diese Gruppen führen zu einer zusätzlichen Steigerung der Mischleistung. Durch die bessere Mischwirkung und die zusätzlichen Wärmeleitungseffekte des Stegmaterials wird auch der Wärmeaustausch zusätzlich erhöht.

Nach einem Ausführungsbeispiel können die Stegelemente eine erste und eine zweite Gruppe ausbilden. Jede der ersten und zweiten Gruppen kann eine erste bzw. zweite Gruppenebene aufspannen. Insbesondere kann sich die erste Gruppenebene der ersten Gruppe mit der zweiten Gruppenebene der zweiten Gruppe derart kreuzen, dass eine gemeinsame Kreuzungslinie ausgebildet wird, welche einen Schnittpunkt mit der Längsachse hat oder im Wesentlichen quer zur Längsachse verläuft und/oder in einer Normalebene zur Kreuzungslinie, welche die Längsachse enthält, einen minimalen Abstand zur Längsachse aufweist. Nach einem Ausführungsbeispiel kann mindestens eine Gruppe von Stegelementen vorgesehen sein, die sich im Wesentlichen bis zur Kreuzungslinie erstrecken.

Die Stegelemente in einer ersten und zweiten Gruppe können sich gegenseitig berühren oder Zwischenräume aufweisen.

Nach einem Ausführungsbeispiel ist der Mantelkanal als zumindest ein Stegelementverteilkanal und/oder ein Stegelementsammelkanal ausgebildet. Zumindest einer der Stegelementverteilkanäle und/oder der Stegelementsammelkanäle ist nach diesem Ausführungsbeispiel nicht mit dem Stegelementende verbunden, welches an das Einsatzmantelelement anschliesst. Insbesondere können die Mantelkanäle eine Zuleitung für das Wärmeträgerfluid und eine Ableitung für das Wärmeträgerfluid enthalten oder mit zumindest der einen Zuleitung oder zumindest der einen Ableitung für das Wärmeträgerfluid fluidleitend verbunden sein. Insbesondere kann zumindest einer der Mantelkanäle mit einem Stegelementverteilkanal und zumindest ein weiterer Mantelkanal mit dem Stegelementsammelkanal fluidleitend verbunden sein. Der Stegelementverteilkanal kann im mittleren Drittel des Stegelements oder einer Mehrzahl von Stegelementen von zumindest einer Gruppe in den Stegelementkanal einmünden. Der Stegelementsammelkanal kann im kann im mittleren Drittel des Stegelements oder einer Mehrzahl von Stegelementen von zumindest einer Gruppe in den Stegelementkanal einmünden. Der Stegelementverteilkanal kann zur Zuführung von Wärmeträgerfluid zu einer Mehrzahl von ersten und/oder zweiten Stegelementkanälen von entsprechenden ersten und/oder zweiten Stegelementen ausgebildet sein. Der Stegelementsammelkanal kann zur Ableitung von Wärmeträgerfluid von einer Mehrzahl von ersten und/oder zweiten Stegelementkanälen von entsprechenden von entsprechenden ersten und/oder zweiten Stegelementen ausgebildet sein.

Das Wärmeträgerfluid wird vorteilhafterweise dem Mantelelement zugeführt und durchströmt einen im Mantelelement befindlichen Mantelkanal. Der Mantelkanal grenzt an das zumindest erste und zweite Einsatzelement an. Das erste und zweite Einsatzelement weist Öffnungen auf, die zu den entsprechenden Einsatzelementmantelkanälen führen. Von dort gelangt das Wärmeträgerfluid in mindestens einen Teil der Stegelementkanäle der Stegelemente.

Dadurch kann nicht nur die Oberfläche der Innenwandung des Einsatzelementmantelelements, sondern auch die Oberfläche der gewärmten oder gekühlten Stegelemente als Wärmeaustauschfläche genutzt werden. Im Mantelelement kann ein Zulauf sowie ein Ablauf für das Wärmeträgerfluid vorgesehen sein. Insbesondere kann das Mantelelement Anschlüsse für die Zuführung und Abführung des Wärmeträgerfluids enthalten. Der Mantelkanal kann mehrere Mantelelementkammern enthalten, wobei in zumindest einer Mantelelementkammer das Wärmeträgerfluid auf einen Teil der Einsatzelementmantelkanäle oder Stegelementverteilkanäle verteilt werden kann. In zumindest einer zweiten Mantelelementkammer kann das Wärmeträgerfluid von den Einsatzelementmantelkanälen oder Stegelementsammelkanälen gesammelt werden, sodass der Wärmetauscher möglichst gleichmässig durchströmt wird. Es können auch verschiedene Abschnitte oder Segmente des Wärmetauschers durch getrennte Mantelkanäle mit Wärmeträgerfluid durchströmt werden, sodass der Wärmetauscher unterschiedliche Abschnitte oder Segmente enthält, die von unterschiedlich temperierten Wärmeträgerfluid durchströmt werden können. Dies erlaubt eine unterschiedliche Temperaturführung in den einzelnen Segmenten. Es hat sich gezeigt, dass für eine hohe Wärmeübertragung in einem kleinen Apparatevolumen bei Mantelelementdurchmessern von 60 mm und mehr mindestens die Hälfte aller Stegelemente zumindest teilweise mit dem Wärmeträgerfluid durchströmt werden sollten.

Es hat sich gezeigt, dass sowohl ein Gussverfahren, ein additives Fertigungsverfahren, ein Lötverfahren, ein Klebeverfahren, ein Einschrumpfverfahren, ein Klemmverfahren als auch ein Schweissverfahren kostengünstige Herstellungsverfahren für Stegelemente und einem spaltfrei monolithisch mit den Stegelementen verbundenen Einsatzelement sein können, wenn das Einsatzmantelelement von einem Mantelelement umgeben ist, welches im Betriebszustand auch einer hohen Druckbelastung standhalten kann. Es kann dabei das Einsatzelement, umfassend das Einsatzmantelelement und die entsprechenden Stegelemente in einem Stück hergestellt werden, sodass auch bei hoher Druckbelastung ausgeschlossen werden kann, dass Wärmeträgerfluid in den Fluidkanal gelangen kann, der das fliessfähige Medium enthält. Alternativ kann das Einsatzelement aus einzelnen Segmenten bestehen, die nachträglich zum Beispiel durch Schweissen oder geschraubte Flanschverbindungen, durch Klemmen oder durch Verspannen verbunden werden. Des Weiteren lassen sich sowohl für ein Schweissverfahren als auch für ein Gussverfahren die Aussengeometrie der Stegelemente und die Stegelementgeometrie sowie die Geometrie der Stegelementkanäle für das Wärmeträgerfluid leicht entkoppeln. So können für die Aussengeometrie der Stegelemente vorteilhafterweise rechteckige Profile verwendet werden und die Stegelementkanalgeometrie kann vorteilhafterweise als ein runder Querschnitt, das heisst insbesondere ein kreisförmiger oder ovaler Querschnitt gewählt werden. Daher können Stegelemente mit idealem Profil für die Quervermischung und/oder hoher Eigenfestigkeit für grosse maximale Fluiddrücke hergestellt werden.

Es hat sich gezeigt, dass die Stegelementkanäle für das Wärmeträgerfluid in den Stegelementen vorteilhaft nach dem Giessprozess durch Erodieren und noch vorteilhafter durch Bohren hergestellt werden, sodass auch Stegelementkanäle mit kleinen Durchmessern hergestellt werden können. Besonders vorteilhaft können die Stegelemente und das Einsatzmantelelement jedes Einsatzelements mittels eines additiven Fertigungsverfahren in einem einzigen Arbeitsschritt zu einem Einsatzelement hergestellt werden.

Es hat sich des Weiteren gezeigt, dass mit den erfindungsgemässen Gruppen von Stegelementen und speziell mit Gruppen, in denen sich benachbarte Stegelemente kreuzen, und/oder speziell mit überlappenden Gruppen von Stegelementen eine sehr gute Wärmeübertragung und/oder Mischleistung erzeugt werden kann. Insbesondere kann die Anordnung einer zweiten Gruppe, die um 80 bis 100 Grad zur ersten Gruppe versetzt ist, für einen guten Wärmeübergang förderlich sein. Überraschenderweise hat sich auch gezeigt, dass speziell das Anbringen von zusätzlichen Teilgruppen und speziell bei viskosen Fluiden eine weitere Verbesserung des Wärmeübergangs und/oder der Mischleistung erzielbar ist.

Auch der Wärmeübergang und/oder die Mischleistung in der Nähe der Innenwand des Einsatzmantelelements ist durch den direkten Übergang der Stegelemente in das Einsatzmantelelement wesentlich verbessert, da auch an der Innenwand befindliche Grenzschichten des fliessfähigen Mediums an der Erzielung eines optimalen Wärmeübergangs oder einer homogenen Mischung beteiligt sind. Insbesondere kann nicht nur eine optimale Erneuerung der Grenzschichten zwischen fliessfähigem Medium und Einsatzmantelelement, sondern auch zwischen fliessfähigem Medium und Stegelementoberfläche erzeugt werden. Eine optimale Grenzschichterneuerung führt daher zu einer optimalen Nutzung der Wärmeaustauschfläche. Die optimale Nutzung der Wärmeaustauschfläche führt auch dazu, dass der Wärmetauscher für eine gegebene Kühl- oder Heizaufgabe mit sehr kleinem Apparatevolumen und mit sehr kleinem Druckverlust gebaut werden kann.

Dank des optimierten Wärmeübergangs zeigt der Wärmetauscher gemäss der Erfindung ein sehr enges Verweilzeitspektrum des zu heizenden oder kühlenden fliessfähigen Mediums. Dadurch können Ablagerungen oder Zersetzung von fliessfähigem Medium bestmöglich verhindert werden. Bei Kühlaufgaben, welche die Kühlung eines viskosen Fluids betreffen, wie zum Beispiel eines Polymers, kann dank der optimalen Erneuerung der Grenzschichten eine sehr niedrige Schmelzetemperatur nahe am Einfrierpunkt erreicht werden. Hierdurch wird insbesondere vermieden, dass sich verfestigtes Polymer an den Wärmeaustauschflächen ablagert. Der direkte Übergang der einzelnen Stegelemente in das Einsatzmantelelement und die Einhausung des Einsatzelementes in das Mantelelement führt zu einer sehr stabilen Konstruktion, die sich auch für die Betriebsweise mit hohen Fluidbetriebsdrücken eignet. Dadurch kann der erfindungsgemässe Wärmetauscher speziell zum Betrieb mit viskosen Fluiden sehr kompakt gebaut werden. Die Vorrichtung eignet sich grundsätzlich zum Mischen und Kühlen respektive Heizen von beliebigen fliessfähigen Medien wie Flüssigkeiten und Gasen, speziell aber für viskose und sehr viskose Fluide wie beispielsweise Polymere.

Nach jedem der Ausführungsbeispiele kann der Wärmetauscher zumindest ein drittes Einsatzelement enthalten, welches mit dem ersten und zweiten Einsatzelement lösbar verbunden ist. Diese Variante kann für Wärmetauscher grösserer Baulänge gewählt werden, um den Zusammenbau oder die Demontage, beispielsweise zu Reinigungszwecken, zu erleichtern. Insbesondere kann das dritte Einsatzelement entweder mit dem ersten oder dem zweiten Einsatzelement mittels einer Klemmvorrichtung dichtend zusammenfügbar sein.

Die Erfindung betrifft auch ein Verfahren zur Herstellung eines Wärmetauschers nach einem der vorhergehenden Ausführungsbeispiele, wobei das erste Einsatzelement und zumindest das eine zweite Einsatzelement mittels eines additiven Fertigungsverfahrens hergestellt werden.

Nachfolgend wird der erfindungsgemässe Wärmetauscher anhand einiger Ausführungsbeispiele dargestellt. Es zeigen
Fig. 1a: einen Längsschnitt durch einen Wärmetauscher nach einem ersten Ausführungsbeispiel,
Fig. 1b: einen Radialschnitt durch den Wärmetauscher gemäss Fig. 1a,
Fig. 2a: einen Längsschnitt durch einen Wärmetauscher nach einem zweiten Ausführungsbeispiel,
Fig. 2b: einen Radialschnitt durch den Wärmetauscher gemäss Fig. 2a,
Fig. 3: einen Längsschnitt durch einen Wärmetauscher nach einem dritten Ausführungsbeispiel,
Fig. 4: einen Längsschnitt durch einen Wärmetauscher nach einem vierten Ausführungsbeispiel,
Fig. 5a: einen Längsschnitt durch einen Wärmetauscher nach einem fünften Ausführungsbeispiel,
Fig. 5b: einen Radialschnitt durch den Wärmetauscher gemäss Fig. 5a,
Fig. 6a: einen Längsschnitt durch einen Wärmetauscher nach einem sechsten Ausführungsbeispiel,
Fig. 6b: einen Radialschnitt durch den Wärmetauscher gemäss Fig. 6a.
Fig. 7: einen Längsschnitt durch einen Teil eines ersten Einsatzelements eines Wärmetauschers nach einem siebenten Ausführungsbeispiel,
Fig. 8: einen Längsschnitt durch einen Teil eines ersten Einsatzelements eines Wärmetauschers nach einem achten Ausführungsbeispiel,
Fig. 9a: einen Längsschnitt durch einen Teil eines ersten Einsatzelements eines Wärmetauschers nach einem neunten Ausführungsbeispiel,
Fig. 9b: einen zweiten Längsschnitt durch einen Teil eines ersten Einsatzelements eines Wärmetauschers nach dem neunten Ausführungsbeispiel,
Fig. 10: einen Längsschnitt durch einen Teil eines ersten Einsatzelements eines Wärmetauschers nach einem zehnten Ausführungsbeispiel.

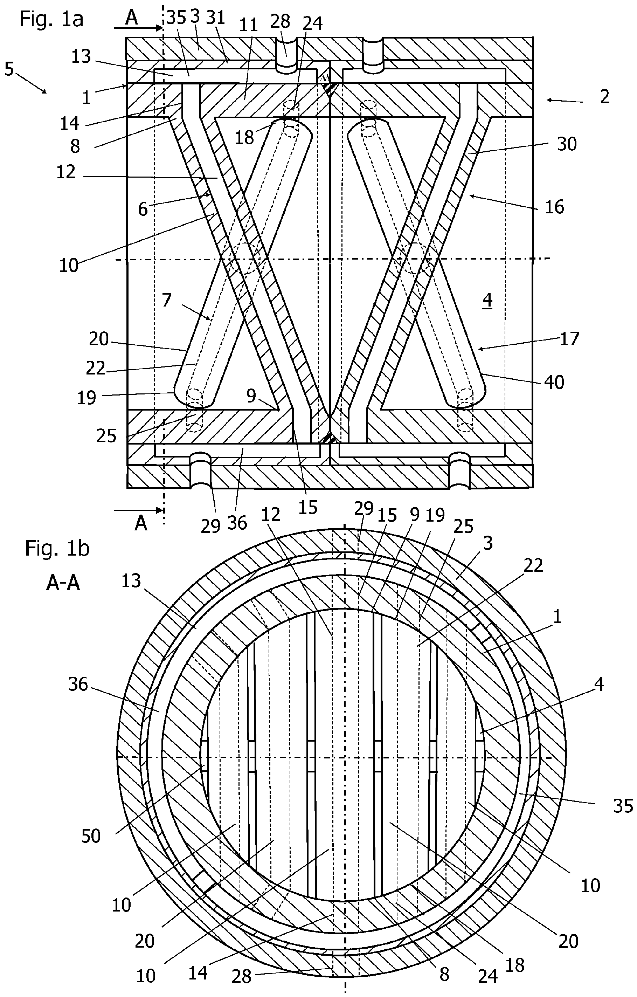

Fig. 1a zeigt einen Längsschnitt durch einen Wärmetauscher 5 nach einem ersten Ausführungsbeispiel. Fig. 1b zeigt einen Radialschnitt durch den Wärmetauscher 5 gemäss Fig. 1a entlang der in Fig. 1a mit A-A bezeichneten Schnittebene. Fig. 1b zeigt exemplarisch drei zu einer ersten Gruppe 6 gehörige Stegelemente 10 sowie zwei zu einer zweiten Gruppe 7 zugehörige Stegelemente 20. Der Wärmetauscher 5 zum statischen Mischen und Wärmeaustausch gemäss Fig. 1a und Fig. 1b enthält ein Mantelelement 3, ein erstes Einsatzelement 1 und ein zweites Einsatzelement 2, wobei das erste Einsatzelement 1 und das zweite Einsatzelement 2 im Betriebszustand im Inneren des Mantelelements 3 angeordnet sind. Das Mantelelement 3 ist als Hohlkörper ausgestaltet. Das erste Einsatzelement 1 und das zweite Einsatzelement 2 sind im Hohlkörper aufgenommen. Das erste Einsatzelement 1 und das zweite Einsatzelement 2 sind nach dem vorliegenden Ausführungsbeispiel zweiteilig aufgebaut. Nach dem vorliegenden Ausführungsbeispiel umfasst das erste Einsatzelement 1 ein erstes Einsatzmantelelement 11, welches eine Mehrzahl von ersten und zweiten Stegelementen 10, 20 enthält. Das erste Einsatzmantelelement 11 ist von einem Mantelhülsenelement 31 umgeben, welches zumindest einen Mantelkanal 13 enthält.

Das Mantelelement 3 hat eine Längsachse, die sich im Wesentlichen in Hauptströmungsrichtung eines Massestroms erstreckt, welcher das Mantelelement 3 und das erste Einsatzelement 1 und das zweite Einsatzelement 2 im Betriebszustand in einem vom ersten Einsatzelement 1 und dem zweiten Einsatzelement 2 ausgebildeten Fluidkanal 4 durchströmt. Mit dem Massestrom ist ein fliessfähiges Medium gemeint, welches den Fluidkanal 4 des Wärmetauschers durchströmt und welches von einem Wärmeträgerfluid gekühlt oder erwärmt werden soll. Das erste Einsatzelement 1 enthält ein erstes Einsatzmantelelement 11 und mindestens ein erstes Stegelement 10 und ein zweites Stegelement 20. Das erste Stegelement 10 enthält ein erstes Ende 8 und ein zweites Ende 9, wobei das erste Ende 8 und das zweite Ende 9 des ersten Stegelements 10 mit dem Einsatzmantelelement 11 an verschiedenen Stellen verbunden sind. Das zweite Stegelement 20 enthält ein erstes Ende 18 und ein zweites Ende 19, wobei das erste Ende 18 und das zweite Ende 19 des zweiten Stegelements 20 mit dem ersten Einsatzmantelelement 11 an verschiedenen Stellen verbunden sind. Das erste Stegelement 10 und das zweite Stegelement 20 kreuzen den Fluidkanal 4.

Das erste Stegelement 10 enthält einen ersten Stegelementkanal 12. Der erste Stegelementkanal 12 erstreckt sich vom ersten Ende 8 des ersten Stegelements 10 zum zweiten Ende 9 des ersten Stegelements 10. Das zweite Stegelement 20 enthält einen zweiten Stegelementkanal 22. Der zweite Stegelementkanal 22 erstreckt sich vom ersten Ende 18 des zweiten Stegelements 20 zum zweiten Ende 19 des zweiten Stegelements 20. Das erste Einsatzelement 1 enthält einen Mantelkanal 13, der mit den ersten und zweiten Stegelementkanälen 12, 22 in fluidleitender Verbindung steht. Der Mantelkanal 13 ist zur Aufnahme und zum Austausch des Wärmeträgerfluids mit den ersten und zweiten Stegelementkanälen 12, 22 ausgebildet. Zumindest einer der ersten und zweiten Stegelementkanäle 12, 22 steht mit dem Mantelkanal 13 in fluidleitender Verbindung.

Fig. 1a zeigt das erste Stegelement 10, durch welches der Längsschnitt gelegt ist, sodass dessen erster Stegelementkanal 12 sichtbar ist und das zweite Stegelement 20, welches sich hinter dem ersten Stegelement 10 befindet und daher nicht geschnitten dargestellt ist. Weitere Stegelemente, die hinter dem ersten und zweiten Stegelement angeordnet sind, sind in dieser Darstellung weggelassen.

Unter der Länge eines Stegelements wird die Abmessung von dessen ersten Ende bis zu dessen zweiten Ende entlang der Mittenachse des Stegelements verstanden. Unter der Dicke des Stegelements wird die Abmessung normal zur Mittenachse von einer Kante zur gegenüberliegenden Kante verstanden. Insbesondere kann die Dicke bei rohrförmigen Stegelementen dem Durchmesser des Stegelements entsprechen.

Der erste Stegelementkanal 12 kann nach dem vorliegenden Ausführungsbeispiel am ersten Ende 8 des ersten Stegelements 10 in einen ersten Einsatzelementmantelkanal 14 münden. Der erste Einsatzelementmantelkanal 14 verläuft durch das erste Einsatzmantelelement 11 von dessen Innenwand zu dessen Aussenwand. Der erste Einsatzelementmantelkanal 14 kann sich nach dem vorliegenden Ausführungsbeispiel in radialer Richtung erstrecken. Der erste Stegelementkanal 12 kann am zweiten Ende 9 des ersten Stegelements 10 in einen zweiten Einsatzelementmantelkanal 15 münden. Der zweite Einsatzelementmantelkanal 15 verläuft durch das erste Einsatzmantelelement 11 von dessen Innenwand zu dessen Aussenwand. Der zweite Einsatzelementmantelkanal 14 kann sich nach dem vorliegenden Ausführungsbeispiel in radialer Richtung erstrecken.

Der zweite Stegelementkanal 22 kann nach dem vorliegenden Ausführungsbeispiel am ersten Ende 18 des zweiten Stegelements 20 in einen ersten Einsatzelementmantelkanal 24 münden. Der erste Einsatzelementmantelkanal 24 verläuft durch das erste Einsatzmantelelement 11 von dessen Innenwand zu dessen Aussenwand. Der erste Einsatzelementmantelkanal 24 kann sich nach dem vorliegenden Ausführungsbeispiel in radialer Richtung erstrecken oder einen Knick aufweisen, was schematisch im linken Teil der Fig. 1b dargestellt ist. Der zweite Stegelementkanal 22 kann am zweiten Ende 19 des zweiten Stegelements 20 in einen zweiten Einsatzelementmantelkanal 25 münden. Der zweite Einsatzelementmantelkanal 25 verläuft durch das erste Einsatzmantelelement 11 von dessen Innenwand zu dessen Aussenwand. Der zweite Einsatzelementmantelkanal 25 kann sich nach dem vorliegenden Ausführungsbeispiel in radialer Richtung erstrecken oder einen Knick aufweisen, was schematisch im linken Teil der Fig. 1b dargestellt ist.

Das erste Einsatzelement 1 umfasst gemäss Fig. 1a und Fig. 1b eine gegenüber der Hauptströmungsrichtung in einem Winkel ungleich null angeordnete erste und zweite Gruppe 6, 7 von ersten Stegelementen 10 und zweiten Stegelementen 20 und einem fest mit zumindest einem Teil ersten Stegelemente 10 und der zweiten Stegelemente 20 verbundenen Einsatzmantelelement 11.

Fig. 1a zeigt ein erstes Einsatzelement 1 und ein zweites Einsatzelement 2, die denselben Aufbau haben und gespiegelt zueinander angeordnet sind. Jedes der ersten und zweiten Einsatzelemente 1, 2 ist im Inneren des Mantelelements 3 angeordnet. Alternativ kann das erste Einsatzelement 1 und zweite Einsatzelement 2 durch ein einziges Bauteil ausgebildet sein, was zeichnerisch nicht dargestellt ist. Das erste Einsatzelement 1 und das zweite Einsatzelement 2 umfassen je eine erste Gruppe 6 von ersten Stegelementen 10 sowie eine zweite Gruppe 7 von zweiten Stegelementen 20. In Fig. 1a ist weiteres eine erste Gruppe 16 von ersten Stegelementen 30 und eine zweite Gruppe 17 von zweiten Stegelementen 40 gezeigt, die zum zweiten Einsatzelement 2 gehörig sind. An diese ersten und zweiten Gruppen 6, 7, 16, 17 können weitere Gruppen von Stegelementen anschliessen, was zeichnerisch nicht dargestellt ist. Nach dem vorliegenden Ausführungsbeispiel sind alle Gruppenpaare gleich aufgebaut. Daher gilt die nachfolgende Beschreibung für die ersten Gruppen 6, 16 sowie die zweiten Gruppen 7, 17. Jede Gruppe kann eine Mehrzahl von Stegelementen umfassen. Je nach der Grösse des Raums und/oder der Breite der Stegelemente können 2 bis 20, vorzugsweise 4 bis 12 Stegelemente einer Gruppe parallel zueinander angeordnet sein.

Die erste Gruppe 6 von ersten Stegelementen 10 erstreckt sich entlang einer gemeinsamen ersten Gruppenebene. Die Gruppenebene enthält die Längsachse eines im Inneren des ersten Stegelements 10 verlaufenden ersten Stegelementkanals 12, wenn der erste Stegelementkanal 12 derart angeordnet ist, dass seine Längsachse mit der Mittenachse des ersten Stegelements 10 zusammenfällt. In der vorliegenden Darstellung verläuft die Gruppenebene in einem rechten Winkel zur Zeichnungsebene.

Die zweite Gruppe 7 von zweiten Stegelementen 20 erstreckt sich entlang einer zweiten gemeinsamen Gruppenebene. Die zweite Gruppenebene ist in gleicher Weise definiert wie die erste Gruppenebene. Die ersten und zweiten Gruppenebenen kreuzen sich. In der vorliegenden Darstellung kreuzen sie sich genau auf der Längsachse der ersten und zweiten Einsatzelemente 1, 2. Die erste Gruppe 6 der ersten Stegelemente 10 enthält somit nach dem vorliegenden Ausführungsbeispiel eine Mehrzahl von ersten Stegelementen 10. Eines der ersten Stegelemente 10 der ersten Gruppe schliesst an ein zweites Stegelement 20 der zweiten Gruppe an. Das zumindest eine erste Stegelement 10 ist somit kreuzweise zum zumindest einen zweiten Stegelement 20 angeordnet. Die ersten Stegelemente 10 der ersten Gruppe 6 wechseln somit mit den zweiten Stegelementen 20 der zweiten Gruppe 7 ab. Das erste Stegelement 10 ist entlang seiner Längsachse geschnitten, sodass eine Hälfte des ersten Stegelementkanals 12 sichtbar ist. Das zweite Stegelement 20 befindet sich in Bezug auf die Zeichnungsebene hinter dem ersten Stegelement 10. Es ist daher nicht geschnitten und der durch das zweite Stegelement 20 verlaufende zweite Stegelementkanal 22 ist nur mittels einer strichlierten Linie dargestellt. Jeder der ersten Stegelementkanäle 12 jedes der ersten Stegelemente 10 der ersten Gruppe verläuft von einem entsprechenden ersten Ende 8 zu einem entsprechenden zweiten Ende 9 des ersten Stegelements 10. Jeder der ersten oder zweiten Stegelementkanäle 12, 22 kann eine Querschnittsfläche in der Form eines Rundelements aufweisen. Das Rundelement kann ein Element aus der Gruppe der Kreise, Ellipsen, abgerundeten Vierecke oder Vielecke umfassen.

Nach einem Ausführungsbeispiel kreuzt sich die Gruppenebene der ersten Gruppe 6 mit der Gruppenebene der zweiten Gruppe 7 derart, dass eine gemeinsame Kreuzungslinie ausgebildet wird, welche einen Schnittpunkt mit der Längsachse hat oder im Wesentlichen quer zur Längsachse verläuft und/oder in einer Normalebene zur Kreuzungslinie, welche die Längsachse enthält, einen minimalen Abstand zur Längsachse aufweist. Die ersten Stegelemente 10 und die zweiten Stegelemente 20 können eine in Bezug auf die Schnittebene symmetrische Konfiguration aufweisen, sodass der Wärmeaustausch in dem oberhalb der Längsachse gelegenen Teilbereich des Raums im Wesentlichen gleich gut erfolgt wie im unterhalb der Längsachse gelegenen Teilbereich des Raums.

Die erste und zweite Gruppenebene ist in einem Winkel von 25 bis 75 Grad zur Längsachse des Fluidkanals 4 angeordnet. In der vorliegenden Darstellung beträgt der Winkel 30 bis 60 Grad zur Längsachse des Fluidkanals 4, in vielen Fällen im Wesentlichen 45 Grad zur Längsachse des Fluidkanals 4.

Das Mantelelement 3 enthält einen Mantelkanal 13, der mehrere Mantelelementkammern 35, 36 enthalten kann. Der Mantelkanal 13 enthält eine Zuleitung 28 und eine Ableitung 29 für ein Wärmeträgerfluid. Die Zuleitung 28 kann einen Zulaufstutzen umfassen. Die Ableitung 29 kann einen Ablassstutzen umfassen. Der Mantelkanal 13 ist als mindestens ein Verteilerkanal für die Verteilung des Wärmeträgerfluids auf eine Mehrzahl von Einsatzelementmantelkanälen 14 und als mindestens ein Sammelkanal für die Zusammenführung des Wärmeträgerfluids von einer Mehrzahl an Einsatzelementmantelkanälen 15 ausgebildet. Der Verteilerkanal ist nach diesem Ausführungsbeispiel in der Mantelelementkammer 35 angeordnet. Der Sammelkanal ist nach diesem Ausführungsbeispiel in der Mantelelementkammer 36 angeordnet, die in Fig. 1b sichtbar ist. Beispielsweise steht je ein Einsatzelementmantelkanal 14 bzw. ein Einsatzelementmantelkanal 15 mit dem ersten und zweiten Ende 8, 9 des zumindest einen ersten Stegelements 10 in fluidleitender Verbindung. Für jedes der ersten Stegelemente 10 und der zweiten Stegelemente 20 bildet der Einsatzelementmantelkanal 14 einen Zuleitungskanal für den entsprechenden ersten oder zweiten Stegelementkanal 12, 22 aus, welcher das Wärmeträgerfluid dem entsprechenden ersten Stegelementkanal 12 des ersten Stegelements 10 oder dem zweiten Stegelementkanal 22 des zweiten Stegelements 20 zuführt. Der Einsatzelementmantelkanal 15 bildet einen Ableitungskanal aus, welcher das Wärmeträgerfluid vom ersten Stegelementkanal 12 des ersten Stegelements 10 oder vom zweiten Stegelementkanal 22 des zweiten Stegelements 20 in den Mantelkanal 13 leitet. In Fig. 1a ist das erste Stegelement 10 der Gruppe 6 bzw. das erste Stegelement 30 der Gruppe 16 jeweils geschnitten dargestellt, die zweiten Stegelemente 20 der Gruppe 7 bzw. die zweiten Stegelemente 40 der Gruppe 17 liegen in der Zeichnungsebene dahinter. Die Stegelementkanäle 22 der zweiten Stegelemente 20 sind in dieser Darstellung nicht sichtbar, sie sind mit strichlierten Linien eingezeichnet.

Jeder der ersten Stegelementkanäle 11 und der zweiten Stegelementkanäle 22 mündet spaltfrei in den jeweils korrespondierenden Einsatzelementmantelkanal 14, 15 im ersten Einsatzmantelelement 11 des ersten Einsatzelementes 1 bzw. im korrespondierenden Einsatzmantelelement des zweiten Einsatzelements 2. Insbesondere bilden das erste Einsatzmantelelement 11 und jedes der ersten Stegelemente 10 sowie jedes der zweiten Stegelemente 20 ein monolithisches Bauelement aus, welches beispielsweise durch ein Schweissverfahren, ein Schrumpfverfahren, ein Giessverfahren, ein Spritzgiessverfahren oder additives Fertigungsverfahren herstellbar ist.

Um die ersten Stegelemente 10, die zweiten Stegelemente 20 sowie die zugehörigen ersten und zweiten Stegelementkanäle 12, 22 fehlerfrei, insbesondere lunkerfrei, herzustellen, können die Übergänge vom ersten Einsatzmantelelement 11 zu jedem der ersten Stegelementkanäle 12 bzw. zu jedem der zweiten Stegelementkanäle 22 mit Rundungen versehen sein, was zeichnerisch nicht dargestellt ist. Jede der Rundungen kann insbesondere einen Radius von mindestens 0.5 mm bis 10 mm aufweisen. Die Rundungen können auch eine Beruhigung der Strömung des fliessfähigen Mediums ausserhalb der Stegelemente und/oder eine Optimierung der Strömung des Wärmeträgerfluids in den ersten und zweiten Stegelementkanälen 12, 22 sowie den Einsatzelementmantelkanälen 14, 15 bewirken.

Es können beliebig viele Gruppen 6, 7, 16, 17 von Stegelementen in Hauptströmungsrichtung des fliessfähigen Mediums gesehen hintereinander angeordnet werden. Das erste Einsatzelement 1 oder das zweite Einsatzelement 2 kann auch nur aus einer ersten Gruppe 6 und einer zweiten Gruppe 7 von Stegelementen bestehen. Daher werden in der Beschreibung die erste Gruppe 6 und die zweite Gruppe 7 stellvertretend für eine Mehrzahl weiterer gleichartiger erster oder zweiter Gruppen angesehen. Wie viele Gruppenpaare im Einzelfall vorgesehen sind, hängt von der konkreten Wärmeaustausch- und/oder Mischaufgabe ab. Das heisst, wenn in den folgenden Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, wie beispielsweise in Fig. 1b gezeigt, von dieser Beschreibung mit erfasst sein. Der Einfachheit halber wird die Beschreibung auf eines der Gruppenpaare beschränkt.

Jede der Gruppen kann den gleichen Aufbau wie die vorhergehende Gruppe aufweisen, der Aufbau benachbarter Gruppen kann sich auch voneinander unterscheiden. Jedes der in Fig. 1a bis Fig. 10 gezeigten Ausführungsbeispiele kann mit jedem anderen Ausführungsbeispiel beliebig kombiniert werden.

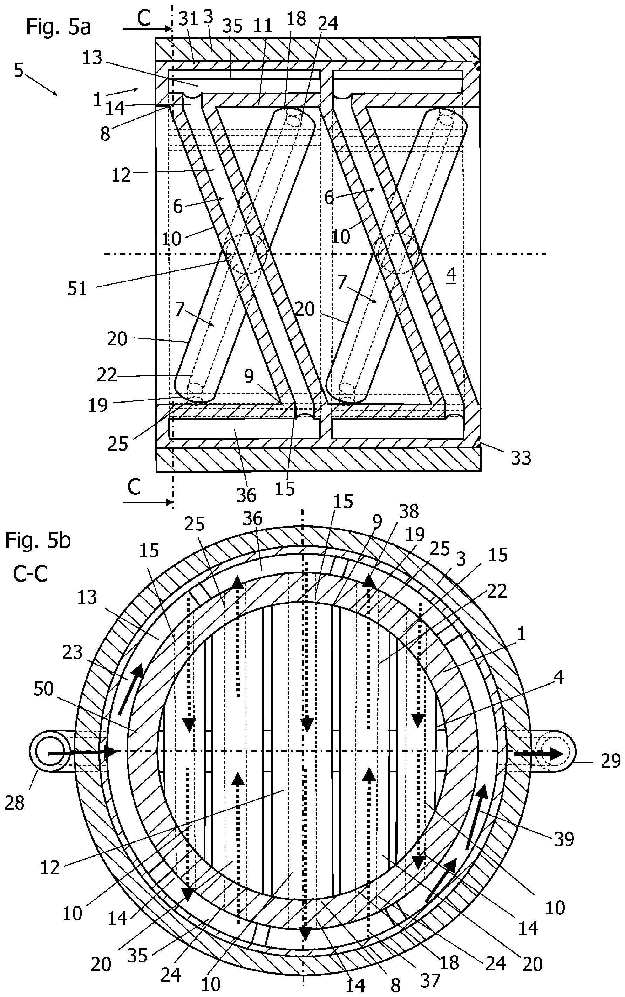

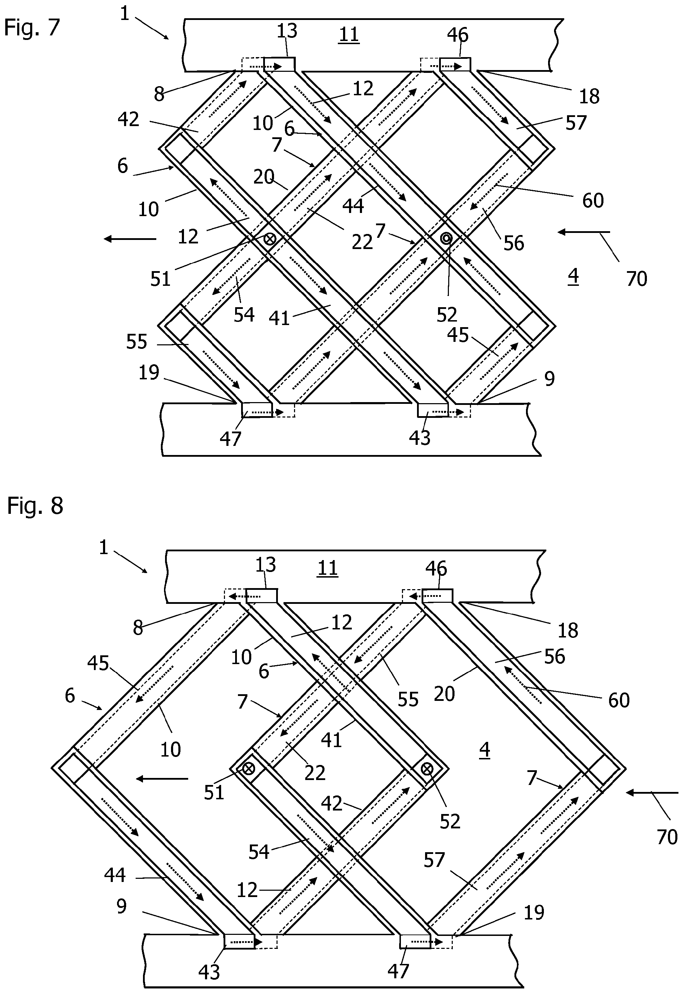

Es können auch zumindest teilweise Gruppen verwendet werden, deren Stegelemente keinen Stegelementkanal enthalten. Des Weiteren können Stegelemente vorgesehen sein, die zumindest einen Knick enthalten. Fig. 7 bis 9 zeigen mögliche Ausführungsvarianten für Stegelemente mit Knicken. Die Stegelemente können miteinander über einen Quersteg 50 verbunden sein. Der Quersteg 50 ist in Fig. 1b sichtbar. Der Quersteg 50 kann zur zusätzlichen Versteifung der Stegelemente dienen. Entsprechend dem in Fig. 5a oder Fig. 5b dargestellten Ausführungsbeispiel kann auch der Quersteg einen Stegelementkanal 51 enthalten, wie beispielsweise in Fig. 5a oder Fig. 5b gezeigt ist.

Die ersten Stegelementkanäle 12 und die zweiten Stegelementkanäle 22 verlaufen im Inneren der entsprechenden ersten Stegelemente 10 bzw. der zweiten Stegelemente 20, sodass keine Verbindung zwischen den Stegelementkanälen im Inneren der Stegelemente und dem Raum, welcher die Stegelemente umgibt, besteht. Der Raum enthält im Betriebszustand das fliessfähige Medium.

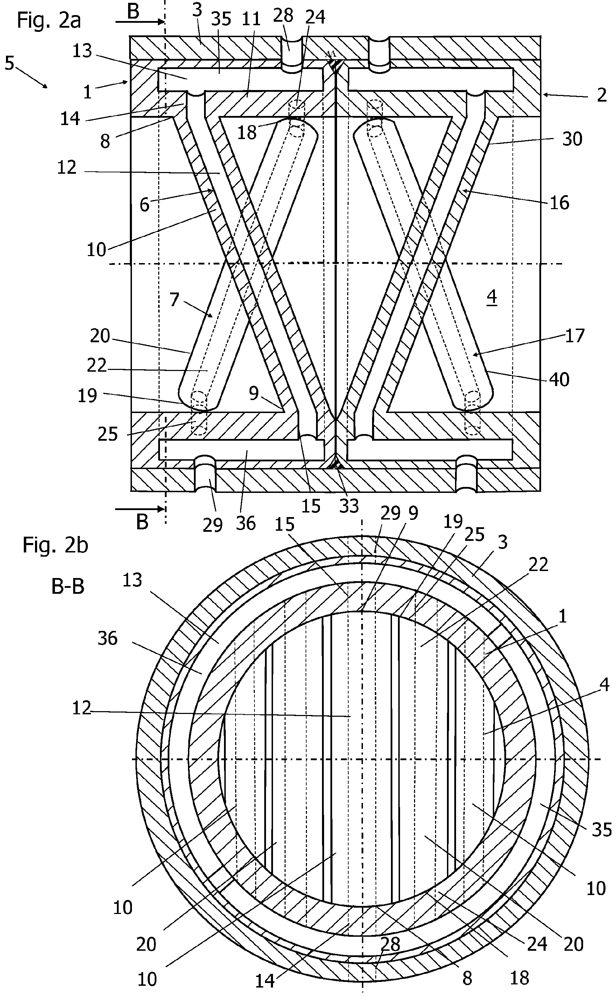

Fig. 2a zeigt einen Längsschnitt durch einen Wärmetauscher 5 nach einem zweiten Ausführungsbeispiel. Fig. 2b zeigt einen Radialschnitt durch den Wärmetauscher 5 gemäss Fig. 2a entlang der in Fig. 2a mit B-B bezeichneten Schnittebene. Für gleiche oder gleichwirkende Bauteile wurden dieselben Bezugszeichen wie für das erste Ausführungsbeispiel verwendet. Wenn nicht anders angegeben, wird auf die Beschreibung zum ersten Ausführungsbeispiel verwiesen. Das erste Einsatzelement 1 und das zweite Einsatzelement 2 sind nach dem vorliegenden Ausführungsbeispiel einteilig aufgebaut, beispielsweise bei Herstellung des ersten und des zweiten Einsatzelements mittels eines additiven Fertigungsverfahrens. Das erste Einsatzelement 1 enthält einen Mantelkanal 13, der mit den ersten und zweiten Stegelementkanälen 12, 22 in fluidleitender Verbindung steht. Der Mantelkanal 13 ist zur Aufnahme und zum Austausch des Wärmeträgerfluids mit den ersten und zweiten Stegelementkanälen 12, 22 ausgebildet. Zumindest einer der ersten und zweiten Stegelementkanäle 12, 22 steht mit dem Mantelkanal 13 in fluidleitender Verbindung. Ein Vorteil der einteiligen Ausführung des ersten und zweiten Einsatzelements besteht darin, dass das Wärmeträgerfluid verlustfrei in die ersten und zweiten Stegelementkanäle 12, 22 eingeleitet werden kann und diese auch verlustfrei wieder verlassen kann. Zwischen dem ersten Einsatzelement 1 und dem zweiten Einsatzelement 2 und dem Mantelelement 3 kann noch ein axialer Spalt bestehen, in welchen Wärmeträgerfluid eindringen kann, welches über die Zuleitung 28 in den Mantelkanal 13 gelangt oder den Mantelkanal 13 über die Ableitung 29 verlassen kann.

Das erste Einsatzelement 1 wird mit dem zweiten Einsatzelement 2 an dessen Stirnseite unlösbar verbunden. Diese Verbindung kann beispielsweise als Schweissnaht 33 ausgebildet sein.

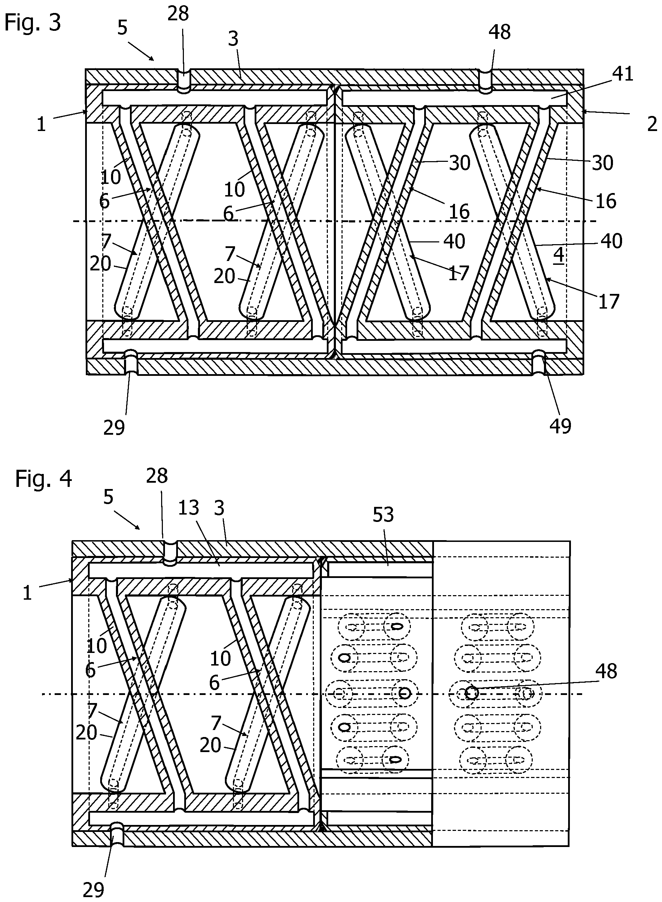

Fig. 3 zeigt einen Längsschnitt durch einen Wärmetauscher nach einem dritten Ausführungsbeispiel, welcher sich von dem Ausführungsbeispiel gemäss Fig. 2a und Fig. 2b nur dahingehend unterscheidet, dass das erste Einsatzelement 1 je zwei erste Gruppen 6 und je zwei zweite Gruppen 7 von Stegelementen 10, 20 enthält. Auch das zweite Einsatzelement 2 enthält je zwei erste Gruppen 16 und je zwei zweite Gruppen 17 von Stegelementen 30, 40. Für gleiche oder gleichwirkende Bauteile wurden dieselben Bezugszeichen wie für das erste Ausführungsbeispiel verwendet. Wenn nicht anders angegeben, wird auf die Beschreibung zum ersten Ausführungsbeispiel verwiesen. Das erste Einsatzelement 1 und das zweite Einsatzelement 2 sind nach dem vorliegenden Ausführungsbeispiel einteilig aufgebaut, beispielsweise bei Herstellung des ersten und des zweiten Einsatzelements mittels eines additiven Fertigungsverfahrens. Das erste Einsatzelement 1 und das zweite Einsatzelement 2 können wie im ersten Ausführungsbeispiel gezeigt, auch mehrteilig aufgebaut sein. Wie in den vorhergehenden Ausführungsbeispielen gezeigt, sind die ersten und zweiten Einsatzelemente 1,2 in einem Mantelelement 3 angeordnet. Wie im ersten Ausführungsbeispiel gezeigt, ist das erste Einsatzelement 1 in spiegelbildlicher Anordnung zum zweiten Einsatzelement 2 gezeigt.

Fig. 4 zeigt einen teilweisen Längsschnitt durch einen Wärmetauscher 5 nach einem vierten Ausführungsbeispiel, welches sich von dem Wärmetauscher 5 nach dem dritten Ausführungsbeispiel dahingehend unterscheidet, dass das zweite Einsatzelement 2 in Bezug auf das erste Einsatzelement 1 um einen Winkel von 90 Grad um die Längsachse des Fluidkanals 4 gedreht ist. Der linke Teil der Fig. 4 zeigt einen Längsschnitt analog zu Fig. 1a oder Fig. 2a oder Fig. 3. Im rechten Teil der Fig. 4 ist für den linken Teil des zweiten Einsatzelements 2 nur das Mantelelement 3 geschnitten dargestellt, sowie der Mantelkanal 53 des zweiten Einsatzelements 2, welcher dem Mantelkanal 13 des ersten Einsatzelements 1 entspricht. Der rechte Teil des Mantelelements 3 ist nicht geschnitten dargestellt, sodass in dieser Darstellung nur eine der Zuleitung 28 entsprechende Zuleitung 48 sichtbar ist.

Das erste Einsatzelement 1 kann in Bezug auf das zweite Einsatzelement 2 um einen Winkel von 20 Grad bis 90 Grad gedreht sein. Die Zufuhr von Wärmeträgerfluid zum Mischraum erfolgt über die Zuleitung 28, 48 und dessen Abfuhr über die Ableitung 29 sowie eine weitere nicht dargestellte Ableitung. Weil das zweite Einsatzelement 2 in seiner Gesamtheit um einen Winkel von 20 Grad bis 90 Grad zum ersten Mantelelement 1 verdreht ist, können auch der zweite Zulauf 48 und der zweite Ablauf 49 um einen Winkel von 20 Grad bis 90 Grad verdreht sein.

Fig. 5a zeigt einen Längsschnitt durch einen Wärmetauscher 5 nach einem fünften Ausführungsbeispiel, wobei in Fig. 5a nur ein erstes Einsatzelement 1 gezeigt wird, welches Bestandteil einer Anordnung sein kann, wie beispielsweise in Fig. 3 oder Fig. 4 gezeigt ist. Eine Schweissnaht 33 ist schematisch angedeutet, die symbolisieren soll, dass an das dargestellte erste Einsatzelement 1 ein weiteres erstes Einsatzelement 1 oder ein zweites Einsatzelement 2 nach einem der Ausführungsbeispiele angeordnet sein kann. Fig. 5b zeigt einen Radialschnitt durch den Wärmetauscher 5 gemäss Fig. 5a entlang der in Fig. 5a mit C-C bezeichneten Schnittebene. Für gleiche oder gleichwirkende Bauteile wurden dieselben Bezugszeichen wie für das erste Ausführungsbeispiel verwendet. Wenn nicht anders angegeben, wird auf die Beschreibung zum ersten Ausführungsbeispiel verwiesen. Das erste Einsatzelement 1 ist nach dem vorliegenden Ausführungsbeispiel einteilig aufgebaut, beispielsweise bei Herstellung des ersten Einsatzelements 1 mittels eines additiven Fertigungsverfahrens.

Fig. 5b zeigt exemplarisch drei zu einer ersten Gruppe 6 gehörige Stegelemente 10 sowie zwei zu einer zweiten Gruppe 7 zugehörige Stegelemente 20. Der Wärmetauscher 5 zum statischen Mischen und Wärmeaustausch gemäss Fig. 5a und Fig. 5b enthält ein Mantelelement 3, ein erstes Einsatzelement 1 und gegebenenfalls mindestens ein zweites Einsatzelement 2, wobei das erste Einsatzelement 1 und gegebenenfalls das zweite Einsatzelement 2 im Betriebszustand im Inneren des Mantelelements 3 angeordnet sind. Das Mantelelement 3 ist als Hohlkörper ausgestaltet. Das erste Einsatzelement 1 und gegebenenfalls das zweite Einsatzelement 2 sind im Hohlkörper aufgenommen. Das erste Einsatzelement 1 ist nach dem vorliegenden Ausführungsbeispiel einteilig aufgebaut. Nach dem vorliegenden Ausführungsbeispiel umfasst das erste Einsatzelement 1 ein erstes Einsatzmantelelement 11, welches eine Mehrzahl von ersten und zweiten Stegelementen 10, 20 enthält. Das erste Einsatzmantelelement 11 umfasst auch ein Mantelhülsenelement 31, welches zumindest einen Mantelkanal 13 enthält. Das Mantelelement 3 hat eine Längsachse, die sich im Wesentlichen in Hauptströmungsrichtung eines Massestroms erstreckt, welcher das Mantelelement 3 und das erste Einsatzelement 1 im Betriebszustand in einem vom ersten Einsatzelement 1 und gegebenenfalls mindestens einem zweiten Einsatzelement 2 ausgebildeten Fluidkanal 4 durchströmt. Mit dem Massestrom ist ein fliessfähiges Medium gemeint, welches den Fluidkanal 4 des Wärmetauschers durchströmt und welches von einem Wärmeträgerfluid gekühlt oder erwärmt werden soll.

Das erste Stegelement 10 bzw. jedes der ersten Stegelemente, enthält ein erstes Ende 8 und ein zweites Ende 9, wobei das erste Ende 8 und das zweite Ende 9 des ersten Stegelements 10 mit dem Einsatzmantelelement 11 an verschiedenen Stellen verbunden sind. Das zweite Stegelement 20 bzw. jedes der zweiten Stegelemente enthält ein erstes Ende 18 und ein zweites Ende 19, wobei das erste Ende 18 und das zweite Ende 19 des zweiten Stegelements 20 mit dem ersten Einsatzmantelelement 11 an verschiedenen Stellen verbunden sind. Das erste Stegelement 10 und das zweite Stegelement 20 kreuzen den Fluidkanal 4.

Das erste Stegelement 10 enthält einen ersten Stegelementkanal 12. Der erste Stegelementkanal 12 erstreckt sich vom ersten Ende 8 des ersten Stegelements 10 zum zweiten Ende 9 des ersten Stegelements 10. Das zweite Stegelement 20 enthält einen zweiten Stegelementkanal 22. Der zweite Stegelementkanal 22 erstreckt sich vom ersten Ende 18 des zweiten Stegelements 20 zum zweiten Ende 19 des zweiten Stegelements 20. Das erste Einsatzelement 1 enthält einen Mantelkanal 13, der mit den ersten und zweiten Stegelementkanälen 12, 22 in fluidleitender Verbindung steht. Der Mantelkanal 13 ist zur Aufnahme und zum Austausch des Wärmeträgerfluids mit den ersten und zweiten Stegelementkanälen 12, 22 ausgebildet. Zumindest einer der ersten und zweiten Stegelementkanäle 12, 22 steht mit dem Mantelkanal 13 in fluidleitender Verbindung.

Fig. 5a zeigt das erste Stegelement 10, durch welches der Längsschnitt gelegt ist, sodass dessen erster Stegelementkanal 12 sichtbar ist und das zweite Stegelement 20, welches sich hinter dem ersten Stegelement 10 befindet und daher nicht geschnitten dargestellt ist. Weitere Stegelemente, die hinter dem ersten und zweiten Stegelement 10, 20 angeordnet sind, sind in dieser Darstellung weggelassen.

Unter der Länge eines Stegelements wird die Abmessung von dessen ersten Ende bis zu dessen zweiten Ende entlang der Mittenachse des Stegelements verstanden. Unter der Dicke des Stegelements wird die Abmessung normal zur Mittenachse von einer Kante zur gegenüberliegenden Kante verstanden. Insbesondere kann die Dicke bei rohrförmigen Stegelementen dem Durchmesser des Stegelements entsprechen.

Der erste Stegelementkanal 12 kann nach dem vorliegenden Ausführungsbeispiel am ersten Ende 8 des ersten Stegelements 10 in einen ersten Einsatzelementmantelkanal 14 münden. Der erste Einsatzelementmantelkanal 14 verläuft durch das erste Einsatzmantelelement 11 von dessen Innenwand zu dessen Aussenwand. Der erste Einsatzelementmantelkanal 14 kann sich nach dem vorliegenden Ausführungsbeispiel in radialer Richtung erstrecken. Der erste Stegelementkanal 12 kann am zweiten Ende 9 des ersten Stegelements 10 in einen zweiten Einsatzelementmantelkanal 15 münden. Der zweite Einsatzelementmantelkanal 15 verläuft durch das erste Einsatzmantelelement 11 von dessen Innenwand zu dessen Aussenwand. Der zweite Einsatzelementmantelkanal 15 kann sich nach dem vorliegenden Ausführungsbeispiel in radialer Richtung erstrecken.

Der zweite Stegelementkanal 22 kann nach dem vorliegenden Ausführungsbeispiel am ersten Ende 18 des zweiten Stegelements 20 in einen ersten Einsatzelementmantelkanal 24 münden. Der erste Einsatzelementmantelkanal 24 verläuft durch das erste Einsatzmantelelement 11 von dessen Innenwand zu dessen Aussenwand. Der erste Einsatzelementmantelkanal 24 kann sich nach dem vorliegenden Ausführungsbeispiel in radialer Richtung erstrecken oder einen Knick aufweisen, wie beispielsweise in Fig. 1b dargestellt ist. Der zweite Stegelementkanal 22 kann am zweiten Ende 19 des zweiten Stegelements 20 in einen zweiten Einsatzelementmantelkanal 25 münden. Der zweite Einsatzelementmantelkanal 25 verläuft durch das erste Einsatzmantelelement 11 von dessen Innenwand zu dessen Aussenwand. Der zweite Einsatzelementmantelkanal 25 kann sich nach dem vorliegenden Ausführungsbeispiel in radialer Richtung erstrecken oder einen Knick aufweisen, was schematisch im linken Teil der Fig. 1b dargestellt ist.

Das erste Einsatzelement 1 umfasst gemäss Fig. 5a und Fig. 5b je zwei gegenüber der Hauptströmungsrichtung in einem Winkel ungleich null angeordnete erste und zweite Gruppen 6, 7 von ersten Stegelementen 10 und zweiten Stegelementen 20 und einem fest mit zumindest einem Teil ersten Stegelemente 10 und der zweiten Stegelemente 20 verbundenen Einsatzmantelelement 11. An diese ersten und zweiten Gruppen 6, 7 können weitere Gruppen von Stegelementen anschliessen, was zeichnerisch nicht dargestellt ist. Nach dem vorliegenden Ausführungsbeispiel sind alle Gruppenpaare gleich aufgebaut. Daher gilt die nachfolgende Beschreibung für die ersten Gruppen 6 sowie die zweiten Gruppen 7. Jede Gruppe kann eine Mehrzahl von Stegelementen umfassen. Je nach der Grösse des Raums und/oder der Breite der Stegelemente können 2 bis 20, vorzugsweise 4 bis 12 Stegelemente einer Gruppe parallel zueinander angeordnet sein.

Die erste Gruppe 6 von ersten Stegelementen 10 erstreckt sich entlang einer gemeinsamen ersten Gruppenebene. Die Gruppenebene enthält die Längsachse eines im Inneren des ersten Stegelements 10 verlaufenden ersten Stegelementkanals 12, wenn der erste Stegelementkanal 12 derart angeordnet ist, dass seine Längsachse mit der Mittenachse des ersten Stegelements 10 zusammenfällt. In der vorliegenden Darstellung verläuft die Gruppenebene in einem rechten Winkel zur Zeichnungsebene.

Die zweite Gruppe 7 von zweiten Stegelementen 20 erstreckt sich entlang einer zweiten gemeinsamen Gruppenebene. Die zweite Gruppenebene ist in gleicher Weise definiert wie die erste Gruppenebene. Die ersten und zweiten Gruppenebenen kreuzen sich. In der vorliegenden Darstellung kreuzen sie sich genau auf der Längsachse der ersten und zweiten Einsatzelemente 1, 2. Die erste Gruppe 6 der ersten Stegelemente 10 enthält somit nach dem vorliegenden Ausführungsbeispiel eine Mehrzahl von ersten Stegelementen 10. Eines der ersten Stegelemente 10 der ersten Gruppe schliesst an ein zweites Stegelement 20 der zweiten Gruppe an. Das zumindest eine erste Stegelement 10 ist somit kreuzweise zum zumindest einen zweiten Stegelement 20 angeordnet. Die ersten Stegelemente 10 der ersten Gruppe 6 wechseln somit mit den zweiten Stegelementen 20 der zweiten Gruppe 7 ab. Das erste Stegelement 10 ist entlang seiner Längsachse geschnitten, sodass eine Hälfte des ersten Stegelementkanals 12 sichtbar ist. Das zweite Stegelement 20 befindet sich in Bezug auf die Zeichnungsebene hinter dem ersten Stegelement 10. Es ist daher nicht geschnitten und der durch das zweite Stegelement 20 verlaufende zweite Stegelementkanal 22 ist nur mittels einer strichlierten Linie dargestellt. Jeder der ersten Stegelementkanäle 12 jedes der ersten Stegelemente 10 der ersten Gruppe verläuft von einem entsprechenden ersten Ende 8 zu einem entsprechenden zweiten Ende 9 des ersten Stegelements 10. Jeder der ersten oder zweiten Stegelementkanäle 12, 22 kann eine Querschnittsfläche in der Form eines Rundelements aufweisen. Das Rundelement kann ein Element aus der Gruppe der Kreise, Ellipsen, abgerundeten Vierecke oder Vielecke umfassen.

Nach einem Ausführungsbeispiel kreuzt sich die Gruppenebene der ersten Gruppe 6 mit der Gruppenebene der zweiten Gruppe 7 derart, dass eine gemeinsame Kreuzungslinie ausgebildet wird, welche einen Schnittpunkt mit der Längsachse hat oder im Wesentlichen quer zur Längsachse verläuft und/oder in einer Normalebene zur Kreuzungslinie, welche die Längsachse enthält, einen minimalen Abstand zur Längsachse aufweist. Im Bereich der Kreuzungslinie ist nach dem vorliegenden Ausführungsbeispiel je Quersteg 50 angeordnet.

Nach dem vorliegenden Ausführungsbeispiel wird das Wärmeträgerfluid von der Zuleitung 28 in eine Mantelelementkammer 23 des Mantelkanals 13 des ersten Einsatzelements 1 zugeführt. Die Mantelelementkammer 23 ist mit zumindest einem der ersten Einsatzelementmantelkanäle 14 und der zweiten Einsatzelementmantelkanäle 15 fluidleitend verbunden. Das Wärmeträgerfluid wird nach dem vorliegenden Ausführungsbeispiel von der ersten Mantelelementkammer 23 in den zweiten Einsatzelementmantelkanal 15 geführt. Vom zweiten Einsatzelementmantelkanal 15 gelangt das Wärmeträgerfluid in den ersten Stegelementkanal 12 und durchströmt das erste Stegelement 10. Vom ersten Stegelementkanal 12 gelangt das Wärmeträgerfluid in eine zweite Mantelelementkammer 35. Von der zweiten Mantelelementkammer 35 gelangt das Wärmeträgerfluid über den ersten Einsatzmantelelementkanal 24 in den zweiten Stegelementkanal 22 des zweiten Stegelements 20. Das Wärmeträgerfluid durchströmt den zweiten Stegelementkanal 22 und gelangt über den zweiten Einsatzmantelelementkanal 25 in eine dritte Mantelelementkammer 36. Von der dritten Mantelelementkammer 36 wird das Wärmeträgerfluid in den zweiten Einsatzelementmantelkanal 15 eines weiteren ersten Stegelements 10 der Gruppe 6 geführt. Vom zweiten Einsatzelementmantelkanal 15 gelangt das Wärmeträgerfluid in den ersten Stegelementkanal 12 und durchströmt das erste Stegelement 10. Vom ersten Stegelementkanal 12 gelangt das Wärmeträgerfluid über einen weiteren ersten Einsatzelementmantelkanal 14 in eine vierte Mantelelementkammer 37. Von der vierten Mantelelementkammer 37 gelangt das Wärmeträgerfluid über einen weiteren ersten Einsatzmantelelementkanal 24 in den zweiten Stegelementkanal 22 des Weiteren zweiten Stegelements 20 der Gruppe 7. Das Wärmeträgerfluid durchströmt den weiteren zweiten Stegelementkanal 22 und gelangt über einen weiteren zweiten Einsatzmantelelementkanal 25 in eine fünfte Mantelelementkammer 38. Von der fünften Mantelelementkammer 38 wird das Wärmeträgerfluid in einen weiteren zweiten Einsatzelementmantelkanal 15 eines weiteren ersten Stegelements 10 der Gruppe 6 geführt. Vom zweiten Einsatzelementmantelkanal 15 gelangt das Wärmeträgerfluid in den ersten Stegelementkanal 12 und durchströmt das erste Stegelement 10. Vom ersten Stegelementkanal 12 gelangt das Wärmeträgerfluid über einen weiteren ersten Einsatzelementmantelkanal 14 in eine sechste Mantelelementkammer 39. Von der sechsten Mantelelementkammer 39 gelangt das Wärmeträgerfluid in die Ableitung 29.

Die ersten Stegelemente 10 und die zweiten Stegelemente 20 können wie in den vorhergehenden Ausführungsbeispiel eine in Bezug auf die Schnittebene im Wesentlichen symmetrische Konfiguration aufweisen, sodass der Wärmeaustausch in dem in Fig. 5a oberhalb der Längsachse gelegenen Teilbereich des Raums im Wesentlichen gleich gut erfolgt wie im unterhalb der Längsachse gelegenen Teilbereich des Raums. Die erste und zweite Gruppenebene ist in einem Winkel von 25 bis 75 Grad zur Längsachse des Fluidkanals 4 angeordnet. In der vorliegenden Darstellung beträgt der Winkel 30 bis 60 Grad zur Längsachse des Fluidkanals 4, in vielen Fällen im Wesentlichen 45 Grad zur Längsachse des Fluidkanals 4.

Jeder der ersten Stegelementkanäle 11 und der zweiten Stegelementkanäle 22 mündet spaltfrei in den jeweils korrespondierenden Einsatzelementmantelkanal 14, 15 im ersten Einsatzmantelelement 11 des ersten Einsatzelementes 1 bzw. im korrespondierenden Einsatzmantelelement des zweiten Einsatzelements 2. Insbesondere bilden das erste Einsatzmantelelement 11 und jedes der ersten Stegelemente 10 sowie jedes der zweiten Stegelemente 20 ein monolithisches Bauelement aus, welches beispielsweise durch ein Schweissverfahren, ein Schrumpfverfahren, ein Giessverfahren, ein Spritzgiessverfahren oder additives Fertigungsverfahren herstellbar ist.

Um die ersten Stegelemente 10, die zweiten Stegelemente 20 sowie die zugehörigen ersten und zweiten Stegelementkanäle 12, 22 fehlerfrei, insbesondere lunkerfrei, herzustellen, können die Übergänge vom ersten Einsatzmantelelement 11 zu jedem der ersten Stegelementkanäle 12 bzw. zu jedem der zweiten Stegelementkanäle 22 mit Rundungen versehen sein, was zeichnerisch nicht dargestellt ist. Jede der Rundungen kann insbesondere einen Radius von mindestens 0.5 mm bis 10 mm aufweisen. Die Rundungen können auch eine Beruhigung der Strömung des fliessfähigen Mediums ausserhalb der Stegelemente und/oder eine Optimierung der Strömung des Wärmeträgerfluids in den ersten und zweiten Stegelementkanälen 12, 22 sowie den Einsatzelementmantelkanälen 14, 15, 24, 25 bewirken.

Es können beliebig viele Gruppen 6, 7, 16, 17 von Stegelementen in Hauptströmungsrichtung des fliessfähigen Mediums gesehen hintereinander angeordnet werden. Das erste Einsatzelement 1 oder das zweite Einsatzelement 2 kann auch nur aus einer ersten Gruppe 6 und einer zweiten Gruppe 7 von Stegelementen bestehen. Daher werden in der Beschreibung die erste Gruppe 6 und die zweite Gruppe 7 stellvertretend für eine Mehrzahl weiterer gleichartiger erster oder zweiter Gruppen angesehen. Wie viele Gruppenpaare im Einzelfall vorgesehen sind, hängt von der konkreten Wärmeaustausch- und/oder Mischaufgabe ab. Das heisst, wenn in den folgenden Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, wie beispielsweise in Fig. 5b gezeigt, von dieser Beschreibung mit erfasst sein. Der Einfachheit halber wird die Beschreibung zumeist auf eines der Gruppenpaare beschränkt.

Jede der Gruppen kann den gleichen Aufbau wie die vorhergehende Gruppe aufweisen, der Aufbau benachbarter Gruppen kann sich auch voneinander unterscheiden. Jedes der in Fig. 5a bis Fig. 10 gezeigten Ausführungsbeispiele kann mit jedem anderen Ausführungsbeispiel beliebig kombiniert werden.

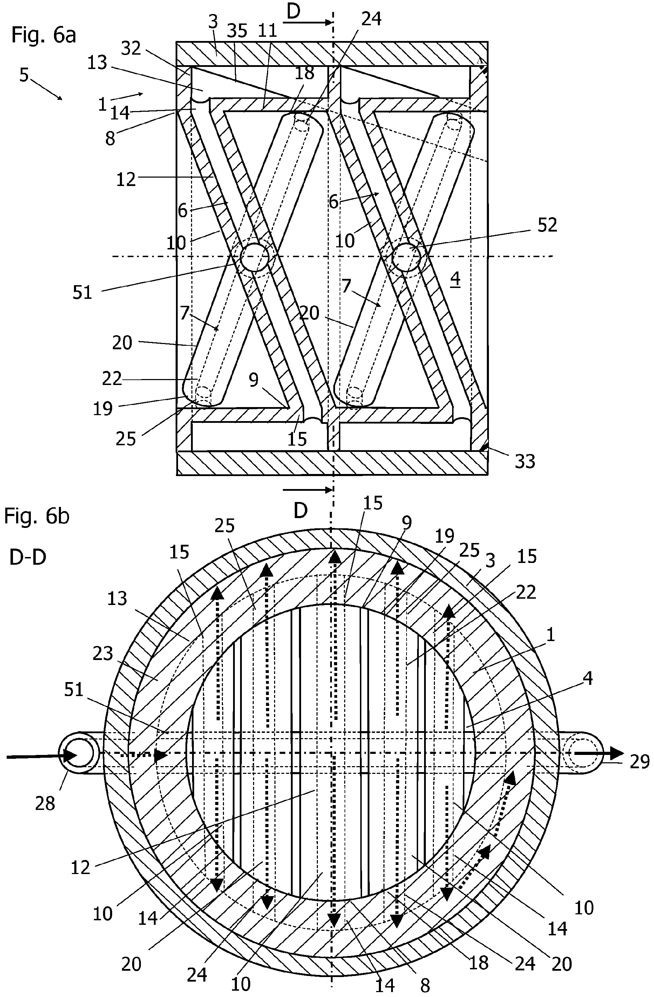

Es können auch zumindest teilweise Gruppen verwendet werden, deren Stegelemente keinen Stegelementkanal enthalten. Des Weiteren können Stegelemente vorgesehen sein, die zumindest einen Knick enthalten. Fig. 7 bis 9 zeigen mögliche Ausführungsvarianten für Stegelemente mit Knicken. Die Stegelemente können miteinander über einen Quersteg 50 verbunden sein. Der Quersteg 50 ist in Fig. 1b sichtbar. Der Quersteg 50 kann zur zusätzlichen Versteifung der Stegelemente dienen. Entsprechend dem in Fig. 6a oder Fig. 6b dargestellten Ausführungsbeispiel kann auch der Quersteg einen Stegelementverteilkanal 51, 52 enthalten.

Die ersten Stegelementkanäle 12 und die zweiten Stegelementkanäle 22 verlaufen im Inneren der entsprechenden ersten Stegelemente 10 bzw. der zweiten Stegelemente 20, sodass keine Verbindung zwischen den Stegelementkanälen im Inneren der Stegelemente und dem Raum, welcher die Stegelemente umgibt, besteht. Der Raum enthält im Betriebszustand das fliessfähige Medium.

Fig. 6a zeigt einen Längsschnitt durch einen Wärmetauscher 5 nach einem sechsten Ausführungsbeispiel, wobei in Fig. 6a nur ein erstes Einsatzelement 1 gezeigt wird, welches Bestandteil einer Anordnung sein kann, wie beispielsweise in Fig. 3 oder Fig. 4 gezeigt ist. Eine Schweissnaht 33 ist schematisch angedeutet, die symbolisieren soll, dass an das dargestellte erste Einsatzelement 1 ein weiteres erstes Einsatzelement 1 oder ein zweites Einsatzelement 2 nach einem der Ausführungsbeispiele angeordnet sein kann. Fig. 6b zeigt einen Radialschnitt durch den Wärmetauscher 5 gemäss Fig. 6a entlang der in Fig. 6a mit D-D bezeichneten Schnittebene. Für gleiche oder gleichwirkende Bauteile wurden dieselben Bezugszeichen wie für das erste Ausführungsbeispiel verwendet. Wenn nicht anders angegeben, wird auf die Beschreibung zum ersten Ausführungsbeispiel verwiesen. Das erste Einsatzelement 1 ist nach dem vorliegenden Ausführungsbeispiel einteilig aufgebaut, beispielsweise bei Herstellung des ersten Einsatzelements 1 mittels eines additiven Fertigungsverfahrens.

Fig. 6b zeigt exemplarisch drei zu einer ersten Gruppe 6 gehörige Stegelemente 10 sowie zwei zu einer zweiten Gruppe 7 zugehörige Stegelemente 20. Der Wärmetauscher 5 zum statischen Mischen und Wärmeaustausch gemäss Fig. 6a und Fig. 6b enthält ein Mantelelement 3, ein erstes Einsatzelement 1 und gegebenenfalls mindestens ein zweites Einsatzelement 2, wobei das erste Einsatzelement 1 und gegebenenfalls das zweite Einsatzelement 2 im Betriebszustand im Inneren des Mantelelements 3 angeordnet sind. Das Mantelelement 3 ist als Hohlkörper ausgestaltet. Das erste Einsatzelement 1 und gegebenenfalls das zweite Einsatzelement 2 sind im Hohlkörper aufgenommen. Das erste Einsatzelement 1 ist nach dem vorliegenden Ausführungsbeispiel einteilig aufgebaut. Nach dem vorliegenden Ausführungsbeispiel umfasst das erste Einsatzelement 1 ein erstes Einsatzmantelelement 11, welches eine Mehrzahl von ersten und zweiten Stegelementen 10, 20 enthält. Das erste Einsatzmantelelement 11 umfasst auch zumindest eine Trennwand 32, welche derart angeordnet ist, dass zusammen mit dem Mantelelement 3 zumindest ein Mantelkanal 13 ausgebildet wird. Die Trennwand 32 kann wendelförmig ausgebildet sein. Die Trennwand kann nach einem nicht dargestellten Ausführungsbeispiel auch vom Mantelelement 3 ausgebildet werden. Das Mantelelement 3 hat eine Längsachse, die sich im Wesentlichen in Hauptströmungsrichtung eines Massestroms erstreckt, welcher das Mantelelement 3 und das erste Einsatzelement 1 im Betriebszustand in einem vom ersten Einsatzelement 1 und gegebenenfalls mindestens einem zweiten Einsatzelement 2 ausgebildeten Fluidkanal 4 durchströmt. Mit dem Massestrom ist ein fliessfähiges Medium gemeint, welches den Fluidkanal 4 des Wärmetauschers durchströmt und welches von einem Wärmeträgerfluid gekühlt oder erwärmt werden soll.

Das erste Stegelement 10 bzw. jedes der ersten Stegelemente, enthält ein erstes Ende 8 und ein zweites Ende 9, wobei das erste Ende 8 und das zweite Ende 9 des ersten Stegelements 10 mit dem Einsatzmantelelement 11 an verschiedenen Stellen verbunden sind. Das zweite Stegelement 20 bzw. jedes der zweiten Stegelemente enthält ein erstes Ende 18 und ein zweites Ende 19, wobei das erste Ende 18 und das zweite Ende 19 des zweiten Stegelements 20 mit dem ersten Einsatzmantelelement 11 an verschiedenen Stellen verbunden sind. Das erste Stegelement 10 und das zweite Stegelement 20 kreuzen den Fluidkanal 4.

Das erste Stegelement 10 enthält einen ersten Stegelementkanal 12. Der erste Stegelementkanal 12 erstreckt sich vom ersten Ende 8 des ersten Stegelements 10 zum zweiten Ende 9 des ersten Stegelements 10. Das zweite Stegelement 20 enthält einen zweiten Stegelementkanal 22. Der zweite Stegelementkanal 22 erstreckt sich vom ersten Ende 18 des zweiten Stegelements 20 zum zweiten Ende 19 des zweiten Stegelements 20. Das erste Einsatzelement 1 enthält einen ersten Stegelementverteilkanal 51, der mit den ersten und zweiten Stegelementkanälen 12, 22 einer ersten Stegelementanordnung in fluidleitender Verbindung steht. Der erste Stegelementverteilkanal 51 ist zur Aufnahme und zum Austausch des Wärmeträgerfluids mit den ersten und zweiten Stegelementkanälen 12, 22 ausgebildet. Zumindest einer der ersten und zweiten Stegelementkanäle 12, 22 steht mit dem Mantelkanal 13 in fluidleitender Verbindung. Das erste Einsatzelement 1 enthält einen zweiten Stegelementkanal 52, der mit den ersten und zweiten Stegelementkanälen 12, 22 einer zweiten Stegelementanordnung in fluidleitender Verbindung steht. Der erste Stegelementverteilkanal 51 und der zweite Stegelementverteilkanal 52 können von einer gemeinsamen Zuleitung 28 gespeist werden, wie in Fig. 6b schematisch dargestellt. Der oder die Mantelkanäle 13 können mit einer Ableitung 29 in fluidleitender Verbindung stehen, die zum Abtransport des Wärmeträgerfluids dient.

Fig. 6a zeigt das erste Stegelement 10, durch welches der Längsschnitt gelegt ist, sodass dessen erster Stegelementkanal 12 sichtbar ist und das zweite Stegelement 20, welches sich hinter dem ersten Stegelement 10 befindet und daher nicht geschnitten dargestellt ist. Weitere Stegelemente, die hinter dem ersten und zweiten Stegelement 10, 20 angeordnet sind, sind in dieser Darstellung weggelassen.

Unter der Länge eines Stegelements wird die Abmessung von dessen ersten Ende bis zu dessen zweiten Ende entlang der Mittenachse des Stegelements verstanden. Unter der Dicke des Stegelements wird die Abmessung normal zur Mittenachse von einer Kante zur gegenüberliegenden Kante verstanden. Insbesondere kann die Dicke bei rohrförmigen Stegelementen dem Durchmesser des Stegelements entsprechen.

Der erste Stegelementkanal 12 kann nach dem vorliegenden Ausführungsbeispiel am ersten Ende 8 des ersten Stegelements 10 in einen ersten Einsatzelementmantelkanal 14 münden. Der erste Einsatzelementmantelkanal 14 verläuft durch das erste Einsatzmantelelement 11 von dessen Innenwand zu dessen Aussenwand. Der erste Einsatzelementmantelkanal 14 kann sich nach dem vorliegenden Ausführungsbeispiel in radialer Richtung erstrecken. Der erste Stegelementkanal 12 kann am zweiten Ende 9 des ersten Stegelements 10 in einen zweiten Einsatzelementmantelkanal 15 münden. Der zweite Einsatzelementmantelkanal 15 verläuft durch das erste Einsatzmantelelement 11 von dessen Innenwand zu dessen Aussenwand. Der zweite Einsatzelementmantelkanal 15 kann sich nach dem vorliegenden Ausführungsbeispiel in radialer Richtung erstrecken.

Der zweite Stegelementkanal 22 kann nach dem vorliegenden Ausführungsbeispiel am ersten Ende 18 des zweiten Stegelements 20 in einen ersten Einsatzelementmantelkanal 24 münden. Der erste Einsatzelementmantelkanal 24 verläuft durch das erste Einsatzmantelelement 11 von dessen Innenwand zu dessen Aussenwand. Der erste Einsatzelementmantelkanal 24 kann sich nach dem vorliegenden Ausführungsbeispiel in radialer Richtung erstrecken oder einen Knick aufweisen, wie beispielsweise in Fig. 1b dargestellt ist. Der zweite Stegelementkanal 22 kann am zweiten Ende 19 des zweiten Stegelements 20 in einen zweiten Einsatzelementmantelkanal 25 münden. Der zweite Einsatzelementmantelkanal 25 verläuft durch das erste Einsatzmantelelement 11 von dessen Innenwand zu dessen Aussenwand. Der zweite Einsatzelementmantelkanal 25 kann sich nach dem vorliegenden Ausführungsbeispiel in radialer Richtung erstrecken oder einen Knick aufweisen, was schematisch im linken Teil der Fig. 1b dargestellt ist.

Das erste Einsatzelement 1 umfasst gemäss Fig. 6a und Fig. 6b je zwei gegenüber der Hauptströmungsrichtung in einem Winkel ungleich null angeordnete erste und zweite Gruppen 6, 7 von ersten Stegelementen 10 und zweiten Stegelementen 20 und einem fest mit zumindest einem Teil ersten Stegelemente 10 und der zweiten Stegelemente 20 verbundenen Einsatzmantelelement 11. An diese ersten und zweiten Gruppen 6, 7 können weitere Gruppen von Stegelementen anschliessen, was zeichnerisch nicht dargestellt ist. Nach dem vorliegenden Ausführungsbeispiel sind alle Gruppenpaare gleich aufgebaut. Daher gilt die nachfolgende Beschreibung für die ersten Gruppen 6 sowie die zweiten Gruppen 7. Jede Gruppe kann eine Mehrzahl von Stegelementen umfassen. Je nach der Grösse des Raums und/oder der Breite der Stegelemente können 2 bis 20, vorzugsweise 4 bis 12 Stegelemente einer Gruppe parallel zueinander angeordnet sein.

Die erste Gruppe 6 von ersten Stegelementen 10 erstreckt sich entlang einer gemeinsamen ersten Gruppenebene. Die Gruppenebene enthält die Längsachse eines im Inneren des ersten Stegelements 10 verlaufenden ersten Stegelementkanals 12, wenn der erste Stegelementkanal 12 derart angeordnet ist, dass seine Längsachse mit der Mittenachse des ersten Stegelements 10 zusammenfällt. In der vorliegenden Darstellung verläuft die Gruppenebene in einem rechten Winkel zur Zeichnungsebene.

Die zweite Gruppe 7 von zweiten Stegelementen 20 erstreckt sich entlang einer zweiten gemeinsamen Gruppenebene. Die zweite Gruppenebene ist in gleicher Weise definiert wie die erste Gruppenebene. Die ersten und zweiten Gruppenebenen kreuzen sich. In der vorliegenden Darstellung kreuzen sie sich genau auf der Längsachse der ersten und zweiten Einsatzelemente 1, 2. Die erste Gruppe 6 der ersten Stegelemente 10 enthält somit nach dem vorliegenden Ausführungsbeispiel eine Mehrzahl von ersten Stegelementen 10. Eines der ersten Stegelemente 10 der ersten Gruppe schliesst an ein zweites Stegelement 20 der zweiten Gruppe an. Das zumindest eine erste Stegelement 10 ist somit kreuzweise zum zumindest einen zweiten Stegelement 20 angeordnet. Die ersten Stegelemente 10 der ersten Gruppe 6 wechseln somit mit den zweiten Stegelementen 20 der zweiten Gruppe 7 ab. Das erste Stegelement 10 ist entlang seiner Längsachse geschnitten, sodass eine Hälfte des ersten Stegelementkanals 12 sichtbar ist. Das zweite Stegelement 20 befindet sich in Bezug auf die Zeichnungsebene hinter dem ersten Stegelement 10. Es ist daher nicht geschnitten und der durch das zweite Stegelement 20 verlaufende zweite Stegelementkanal 22 ist nur mittels einer strichlierten Linie dargestellt. Jeder der ersten Stegelementkanäle 12 jedes der ersten Stegelemente 10 der ersten Gruppe verläuft von einem entsprechenden ersten Ende 8 zu einem entsprechenden zweiten Ende 9 des ersten Stegelements 10. Jeder der ersten oder zweiten Stegelementkanäle 12, 22 kann eine Querschnittsfläche in der Form eines Rundelements aufweisen. Das Rundelement kann ein Element aus der Gruppe der Kreise, Ellipsen, abgerundeten Vierecke oder Vielecke umfassen.

Nach einem Ausführungsbeispiel kreuzt sich die Gruppenebene der ersten Gruppe 6 mit der Gruppenebene der zweiten Gruppe 7 derart, dass eine gemeinsame Kreuzungslinie ausgebildet wird, welche einen Schnittpunkt mit der Längsachse hat oder im Wesentlichen quer zur Längsachse verläuft und/oder in einer Normalebene zur Kreuzungslinie, welche die Längsachse enthält, einen minimalen Abstand zur Längsachse aufweist. Im Bereich der Kreuzungslinie ist nach dem vorliegenden Ausführungsbeispiel je ein erster Stegelementverteilkanal 51 und ein zweiter Stegelementverteilkanal 52 angeordnet. Nach dem vorliegenden Ausführungsbeispiel ist der erste Stegelementverteilkanal 51 mit einer Zuleitung 28 und einer Ableitung 29 für ein Wärmeträgerfluid verbunden, was in Fig. 6b sichtbar ist. Der zweite Stegelementverteilkanal 52, der in Fig. 6b vom ersten Stegelementverteilkanal 51 verdeckt ist, kann ebenfalls mit einer Zuleitung und Ableitung verbunden sein.

Nach dem vorliegenden Ausführungsbeispiel wird das Wärmeträgerfluid von der Zuleitung 28 oder den Zuleitungen in zumindest einen der Stegelementverteilkanäle 51, 52 geleitet. Vom Stegelementverteilkanal 51 sowie dem in Fig. 6b nicht sichtbaren, dahinter liegenden Stegelementverteilkanal 52 wird das Wärmeträgerfluid in die zugehörigen ersten Stegelementkanäle 12 sowie die zugehörigen zweiten Stegelementkanäle 22 geleitet. Das Wärmeträgerfluid strömt in den entsprechenden ersten Stegelementkanälen 12 und in den zweiten Stegelementkanälen 22 in Richtung der Mantelelementkammer 23. Die Mantelelementkammer 23 ist mit den ersten Einsatzelementmantelkanälen 14 und den zweiten Einsatzelementmantelkanälen 15, sowie den ersten und zweiten Enden 8, 18 der ersten und zweiten Stegelemente 10, 20 sowie mit den gegenüber liegenden ersten Einsatzelementmantelkanälen 24 und den zweiten Einsatzelementmantelkanälen 25 sowie den gegenüberliegenden ersten und zweiten Enden 9, 19 der ersten und zweiten Stegelemente 10, 20 fluidleitend verbunden. Das Wärmeträgerfluid wird nach dem vorliegenden Ausführungsbeispiel durch die Mantelelementkammer 23 zu der oder den Ableitungen 29 geführt. Über die Ableitung 29 verlässt das Wärmeträgerfluid den Wärmetauscher 5.

Die ersten Stegelemente 10 und die zweiten Stegelemente 20 können wie in den vorhergehenden Ausführungsbeispiel eine in Bezug auf die Schnittebene im Wesentlichen symmetrische Konfiguration aufweisen, sodass der Wärmeaustausch in dem in Fig. 6a oberhalb der Längsachse gelegenen Teilbereich des Raums im Wesentlichen gleich gut erfolgt wie im unterhalb der Längsachse gelegenen Teilbereich des Raums. Die erste und zweite Gruppenebene ist in einem Winkel von 25 bis 75 Grad zur Längsachse des Fluidkanals 4 angeordnet. In der vorliegenden Darstellung beträgt der Winkel 30 bis 60 Grad zur Längsachse des Fluidkanals 4, in vielen Fällen im Wesentlichen 45 Grad zur Längsachse des Fluidkanals 4.

Jeder der ersten Stegelementkanäle 11 und der zweiten Stegelementkanäle 22 mündet spaltfrei in den jeweils korrespondierenden ersten Einsatzelementmantelkanal 14, 24 bzw. den korrespondierenden zweiten Einsatzelementmantelkanal 15, 25 im ersten Einsatzmantelelement 11 des ersten Einsatzelementes 1. Insbesondere bilden das erste Einsatzmantelelement 11 und jedes der ersten Stegelemente 10 sowie jedes der zweiten Stegelemente 20 ein monolithisches Bauelement aus, welches beispielsweise durch ein Schweissverfahren, ein Schrumpfverfahren, ein Giessverfahren, ein Spritzgiessverfahren oder additives Fertigungsverfahren herstellbar ist.

Um die ersten Stegelemente 10, die zweiten Stegelemente 20 sowie die zugehörigen ersten und zweiten Stegelementkanäle 12, 22 fehlerfrei, insbesondere lunkerfrei, herzustellen, können die Übergänge vom ersten Einsatzmantelelement 11 zu jedem der ersten Stegelementkanäle 12 bzw. zu jedem der zweiten Stegelementkanäle 22 mit Rundungen versehen sein, was zeichnerisch nicht dargestellt ist. Jede der Rundungen kann insbesondere einen Radius von mindestens 0.5 mm bis 10 mm aufweisen. Die Rundungen können auch eine Beruhigung der Strömung des fliessfähigen Mediums ausserhalb der Stegelemente und/oder eine Optimierung der Strömung des Wärmeträgerfluids in den ersten und zweiten Stegelementkanälen 12, 22 sowie den zugehörigen ersten und zweiten Einsatzelementmantelkanälen 14, 15, 24, 25 bewirken.

Es können beliebig viele Gruppen 6, 7, 16, 17 von Stegelementen in Hauptströmungsrichtung des fliessfähigen Mediums gesehen hintereinander angeordnet werden. Das erste Einsatzelement 1 oder gegebenenfalls das zweite Einsatzelement 2 kann auch nur aus einer ersten Gruppe 6 und einer zweiten Gruppe 7 von Stegelementen bestehen. Daher werden in der Beschreibung die erste Gruppe 6 und die zweite Gruppe 7 stellvertretend für eine Mehrzahl weiterer gleichartiger erster oder zweiter Gruppen angesehen. Wie viele Gruppenpaare im Einzelfall vorgesehen sind, hängt von der konkreten Wärmeaustausch- und/oder Mischaufgabe ab. Das heisst, wenn in den folgenden Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, wie beispielsweise in Fig. 6b gezeigt, von dieser Beschreibung mit erfasst sein. Der Einfachheit halber wird die Beschreibung zumeist auf eines der Gruppenpaare beschränkt.

Jede der Gruppen kann den gleichen Aufbau wie die vorhergehende Gruppe aufweisen, der Aufbau benachbarter Gruppen kann sich auch voneinander unterscheiden. Jedes der in Fig. 6a bis Fig. 10 gezeigten Ausführungsbeispiele kann mit jedem anderen Ausführungsbeispiel beliebig kombiniert werden.

Die ersten Stegelementkanäle 12 und die zweiten Stegelementkanäle 22 verlaufen im Inneren der entsprechenden ersten Stegelemente 10 bzw. der zweiten Stegelemente 20, sodass keine Verbindung zwischen den Stegelementkanälen im Inneren der Stegelemente und dem Raum, welcher die Stegelemente umgibt, besteht. Der Raum enthält im Betriebszustand das fliessfähige Medium.

Fig. 7 zeigt einen Längsschnitt durch einen Teil eines ersten Einsatzelements 1 eines Wärmetauschers 5 nach einem siebenten Ausführungsbeispiel. Das erste Einsatzelement 1 kann Bestandteil einer Anordnung sein, wie beispielsweise in Fig. 3 oder Fig. 4 gezeigt ist. Für gleiche oder gleichwirkende Bauteile wurden dieselben Bezugszeichen wie für das erste Ausführungsbeispiel verwendet. Wenn nicht anders angegeben, wird auf die Beschreibung zum ersten Ausführungsbeispiel verwiesen. Das erste Einsatzelement 1 ist nach dem vorliegenden Ausführungsbeispiel einteilig aufgebaut, beispielsweise bei Herstellung des ersten Einsatzelements 1 mittels eines additiven Fertigungsverfahrens. Nach dem vorliegenden Ausführungsbeispiel umfasst das erste Einsatzelement 1 ein erstes Einsatzmantelelement 11, welches eine Mehrzahl von ersten und zweiten Stegelementen 10, 20 enthält.

Fig. 7 zeigt exemplarisch vier zu einer ersten Gruppe 6 gehörige Stegelemente 10 sowie vier zu einer zweiten Gruppe 7 zugehörige Stegelemente 20. Im Einsatzmantelelement 11 ist ein Mantelkanal 13 ausgebildet, über welchen die Stegelementkanäle der zu einer Gruppe gehörigen Stegelemente miteinander verbunden sind.

Das erste Einsatzelement 1 hat eine Längsachse, die sich im Wesentlichen in Hauptströmungsrichtung eines Massestroms erstreckt, welcher das erste Einsatzelement 1 im Betriebszustand in einem vom ersten Einsatzelement 1 ausgebildeten Fluidkanal 4 durchströmt. Mit dem Massestrom ist ein fliessfähiges Medium gemeint, welches den Fluidkanal 4 des Wärmetauschers durchströmt und welches von einem Wärmeträgerfluid gekühlt oder erwärmt werden soll.

Das erste Stegelement 10 bzw. jedes der ersten Stegelemente, enthält ein erstes Ende 8 und ein zweites Ende 9, wobei das erste Ende 8 und das zweite Ende 9 des ersten Stegelements 10 mit dem Einsatzmantelelement 11 an verschiedenen Stellen verbunden sind. Das zweite Stegelement 20 bzw. jedes der zweiten Stegelemente enthält ein erstes Ende 18 und ein zweites Ende 19, wobei das erste Ende 18 und das zweite Ende 19 des zweiten Stegelements 20 mit dem ersten Einsatzmantelelement 11 an verschiedenen Stellen verbunden sind. Das erste Stegelement 10 bzw. jedes der ersten Stegelemente 10 und das zweite Stegelement 20 bzw. jedes der zweiten Stegelemente 20 kreuzen den Fluidkanal 4.

Das erste Stegelement 10 bzw. jedes der ersten Stegelemente 10 enthält einen ersten Stegelementkanal 12. Der erste Stegelementkanal 12 erstreckt sich vom ersten Ende 8 des ersten Stegelements 10 zum zweiten Ende 9 des ersten Stegelements 10. Das zweite Stegelement 20 bzw. jedes der zweiten Stegelemente 20 enthält einen zweiten Stegelementkanal 22. Der zweite Stegelementkanal 22 erstreckt sich vom ersten Ende 18 des zweiten Stegelements 20 zum zweiten Ende 19 des zweiten Stegelements 20.

Das erste Einsatzelement 1 enthält einen Stegelementverteilkanal 51, der mit den ersten und zweiten Stegelementkanälen 12, 22 der ersten Stegelemente 10 und der zweiten Stegelemente 20 in fluidleitender Verbindung steht. Der erste Stegelementverteilkanal 51 ist zur Aufnahme und zum Austausch des Wärmeträgerfluids mit den ersten und zweiten Stegelementkanälen 12, 22 ausgebildet. Die ersten und zweiten Stegelementkanäle 12, 22 stehen mit dem Mantelkanal 13 in fluidleitender Verbindung. Das erste Einsatzelement 1 enthält einen Stegelementsammelkanal 52, der mit den ersten und zweiten Stegelementkanälen 12, 22 in fluidleitender Verbindung steht. Der Stegelementverteilkanal 51 wird von einer Zuleitung gespeist werden, die im Schnitt nicht sichtbar ist und die entsprechend der Fig. 5b oder Fig. 6b ausgebildet sein kann. Der Stegelementsammelkanal 52 kann in eine Ableitung münden, wie in Fig. 5b oder Fig. 6b schematisch dargestellt. Die Ableitung dient zum Abtransport des Wärmeträgerfluids.

Fig. 7 zeigt das erste Stegelement 10, durch welches der Längsschnitt gelegt ist, sodass dessen erster Stegelementkanal 12 teilweise sichtbar ist und das zweite Stegelement 20, welches sich hinter dem ersten Stegelement 10 befindet und ebenfalls teilweise geschnitten dargestellt ist. Weitere Stegelemente können hinter dem ersten und zweiten Stegelement 10, 20 angeordnet sein, sie sind in dieser Darstellung nicht sichtbar.

Unter der Länge eines Stegelements wird die Abmessung von dessen ersten Ende bis zu dessen zweiten Ende verstanden, wobei die Länge entlang der Mittenachse des Stegelements gemessen wird. Unter der Dicke des Stegelements wird die Abmessung normal zur Mittenachse von einer Kante zur gegenüberliegenden Kante verstanden. Insbesondere kann die Dicke bei rohrförmigen Stegelementen dem Durchmesser des Stegelements entsprechen.

Nach dem vorliegenden Ausführungsbeispiel weisen die ersten und zweiten Stegelemente 10, 20 je einen Knick auf. Nach dem vorliegenden Ausführungsbeispiel erfolgt im Knick eine Umlenkung der Strömung in einen Stegelementteilkanal, der in Bezug auf die Schnittebene um mindestens einen Stegelementdurchmesser oder einer Stegelementdicke versetzt angeordnet ist. Das erste Stegelement 10 enthält somit einen ersten Stegelementteilkanal 41 und einen zweiten Stegelementteilkanal 42. Der erste Stegelementteilkanal 41 ist in Bezug auf den zweiten Stegelementteilkanal 42 in einem Winkel angeordnet, der im Bereich von 80 Grad bis ungefähr 100 Grad liegt. Zudem verläuft der erste Stegelementteilkanal 41 in einer ersten Ebene, hier der Schnittebene, und der zweite Stegelementteilkanal 42 in einer zweiten Ebene, die parallel zur ersten Ebene angeordnet ist, aber von der ersten Ebene einen Abstand aufweist, er mindestens dem Stegelementdurchmesser oder der Stegelementdicke entspricht. Der erste Stegelementteilkanal 41 kann eine Länge aufweisen, die sich von der Länge des zweiten Stegelementteilkanals 42 unterscheidet. Insbesondere kann der erste Stegelementteilkanal 41 länger oder kürzer als der zweite Stegelementteilkanal 42 sein.

Der erste Stegelementkanal 12 kann nach dem vorliegenden Ausführungsbeispiel am ersten Ende 8 des ersten Stegelements 10 in einen ersten Mantelkanal 13 münden. Der erste Mantelkanal 13 verläuft zumindest teilweise durch das erste Einsatzmantelelement 11 oder an oder in der Nähe von dessen Innenwand. Der erste Stegelementkanal 12 kann am zweiten Ende 9 des ersten Stegelements 10 in einen zweiten Mantelkanal 43 münden. Der zweite Mantelkanal 43 verläuft zumindest teilweise durch das erste Einsatzmantelelement 11 oder an dessen Innenwand. Die ersten und zweiten Mantelkanäle 13, 43 können zur Verbindung der ersten Stegelementkanäle 12 des ersten und des zweiten Asts des ersten Stegelements 10 ausgebildet sein.

Nach dem vorliegenden Ausführungsbeispiel umfasst das erste Stegelement 10 einen ersten Ast und einen zweiten Ast. Der erste Ast enthält den ersten Stegelementteilkanal 41 und den zweiten Stegelementteilkanal 42. Der zweite Ast enthält einen weiteren ersten Stegelementteilkanal 44 und einen weiteren zweiten Stegelementteilkanal 45. Nach dem vorliegenden Ausführungsbeispiel verläuft der erste Stegelementteilkanal 41 des ersten Asts parallel zum ersten Stegelementteilkanal 44 des zweiten Asts. Der zweite Stegelementteilkanal 42 des ersten Asts verläuft parallel zum zweiten Stegelementteilkanal 45 des zweiten Asts. Nach dem vorliegenden Ausführungsbeispiel sind die ersten Stegelementteilkanäle 41, 44 länger als die zweiten Stegelementteilkanäle 42, 45.

Zudem verläuft der erste Stegelementteilkanal 41 in einer ersten Ebene, hier der Schnittebene, und der zweite Stegelementteilkanal 42 in einer zweiten Ebene, die parallel zur ersten Ebene angeordnet ist, aber von der ersten Ebene einen Abstand aufweist, er mindestens dem Stegelementdurchmesser oder der Stegelementdicke entspricht. Der erste Stegelementteilkanal 41 kann eine Länge aufweisen, die sich von der Länge des zweiten Stegelementteilkanals 42 unterscheidet. Insbesondere kann der erste Stegelementteilkanal 41 länger oder kürzer als der zweite Stegelementteilkanal 42 sein.

Der zweite Stegelementkanal 22 kann nach dem vorliegenden Ausführungsbeispiel am ersten Ende 18 des zweiten Stegelements 20 in einen dritten Mantelkanal 46 münden. Der dritte Mantelkanal 46 verläuft zumindest teilweise durch das erste Einsatzmantelelement 11 oder an oder in der Nähe von dessen Innenwand. Der zweite Stegelementkanal 22 kann am zweiten Ende 19 des zweiten Stegelements 20 in einen vierten Mantelkanal 47 münden. Der vierte Mantelkanal 47 verläuft zumindest teilweise durch das erste Einsatzmantelelement 11 oder an dessen Innenwand. Die dritten und vierten Mantelkanäle 46, 47 können zur Verbindung der zweiten Stegelementkanäle 22 des ersten und des zweiten Asts des zweiten Stegelements 20 ausgebildet sein.

Nach dem vorliegenden Ausführungsbeispiel umfasst das zweite Stegelement 20 einen ersten Ast und einen zweiten Ast. Der erste Ast enthält einen ersten Stegelementteilkanal 54 und den zweiten Stegelementteilkanal 55. Der zweite Ast enthält einen weiteren ersten Stegelementteilkanal 56 und einen weiteren zweiten Stegelementteilkanal 57. Nach dem vorliegenden Ausführungsbeispiel verläuft der erste Stegelementteilkanal 54 des ersten Asts parallel zum ersten Stegelementteilkanal 56 des zweiten Asts. Der zweite Stegelementteilkanal 55 des ersten Asts verläuft parallel zum zweiten Stegelementteilkanal 57 des zweiten Asts. Nach dem vorliegenden Ausführungsbeispiel sind die ersten Stegelementteilkanäle 54, 56 länger als die zweiten Stegelementteilkanäle 55, 57.

Das erste Einsatzelement 1 kann, wie in den vorherigen Ausführungsbeispielen je zwei gegenüber der Hauptströmungsrichtung in einem Winkel ungleich null angeordnete erste und zweite Gruppen 6, 7 von ersten Stegelementen 10 und zweiten Stegelementen 20 und einem fest mit zumindest einem Teil ersten Stegelemente 10 und der zweiten Stegelemente 20 verbundenen Einsatzmantelelement 11 umfassen. An diese ersten und zweiten Gruppen 6, 7 können weitere Gruppen von Stegelementen anschliessen, was zeichnerisch nicht dargestellt ist. Nach dem vorliegenden Ausführungsbeispiel sind alle Gruppenpaare gleich aufgebaut. Daher gilt die nachfolgende Beschreibung für die ersten Gruppen 6 sowie die zweiten Gruppen 7. Jede Gruppe kann eine Mehrzahl von Stegelementen umfassen. Je nach der Grösse des Raums und/oder der Breite der Stegelemente können 2 bis 20, vorzugsweise 4 bis 12 Stegelemente einer Gruppe parallel zueinander angeordnet sein.

Die erste Gruppe 6 von ersten Stegelementen 10 erstreckt sich über vier Gruppenebenen. Die Gruppenebenen enthalten die Längsachse des jeweils im Inneren des ersten Stegelements 10 verlaufenden ersten Stegelementkanals 12, wenn der erste Stegelementkanal 12 derart angeordnet ist, dass seine Längsachse mit der Mittenachse des ersten Stegelements 10 zusammenfällt. In der vorliegenden Darstellung verlaufen die Gruppenebenen in einem rechten Winkel zur Zeichnungsebene. Die zweite Gruppe 7 von zweiten Stegelementen 20 erstreckt sich über vier Gruppenebenen. Die Gruppenebenen der ersten und zweiten Stegelemente 10, 20 können sich kreuzen oder parallel zueinander verlaufen.

In der vorliegenden Darstellung kreuzen sich die jeweils ersten Stegelementteilkanäle 41 des jeweiligen ersten Asts und die ersten Stegelementteilkanäle 44 des jeweiligen zweiten Asts des ersten Stegelements 10 oder der ersten Stegelemente 10 mit den ersten Stegelementteilkanälen 54 des jeweiligen ersten Asts und den ersten Stegelementteilkanälen 56 des jeweiligen zweiten Asts des zweiten Stegelements 20 oder der zweiten Stegelemente 20. Die erste Gruppe 6 der ersten Stegelemente 10 kann eine Mehrzahl von ersten Stegelementen 10 umfassen, wie in den vorhergehenden Ausführungsbeispielen dargestellt. Die zweite Gruppe 7 der zweiten Stegelemente 20 kann eine Mehrzahl von zweiten Stegelementen 20 umfassen, wie in den vorhergehenden Ausführungsbeispielen dargestellt.

Eines der ersten Stegelemente 10 der ersten Gruppe 6 schliesst an ein zweites Stegelement 20 der zweiten Gruppe 7 an. Das zumindest eine erste Stegelement 10 ist somit kreuzweise zum zumindest einen zweiten Stegelement 20 angeordnet. Die ersten Stegelemente 10 der ersten Gruppe 6 wechseln somit mit den zweiten Stegelementen 20 der zweiten Gruppe 7 ab. Das erste Stegelement 10 ist entlang seiner Längsachse im Bereich des ersten Stegelementteilkanals 41 des ersten Asts sowie des ersten Stegelementteilkanals 44 des zweiten Asts geschnitten, sodass im geschnittenen Bereich eine Hälfte des ersten Stegelementkanals 12 sichtbar ist. Der zweite Stegelementteilkanal 42 des ersten Asts des ersten Stegelements 10 und der zweite Stegelementteilkanal 45 des zweiten Asts des ersten Stegelements 10 ist versetzt zu dem entsprechenden ersten Stegelementteilkanal 41, 44 des ersten und zweiten Asts angeordnet, daher nicht geschnitten dargestellt.

Das zweite Stegelement 20 befindet sich in Bezug auf die Zeichnungsebene teilweise hinter dem ersten Stegelement 10. Dessen erster Stegelementteilkanal 54 des ersten Asts sowie der zugehörige erste Stegelementteilkanal 56 des zweiten Asts ist daher nicht geschnitten dargestellt und der durch das zweite Stegelement 20 verlaufende zweite Stegelementkanal 22 ist in diesem Bereich daher nur mittels einer strichlierten Linie dargestellt. Der zweite Stegelementteilkanal 55 des ersten Asts des zweiten Stegelements 20 oder der zweiten Stegelemente 20 und der zweite Stegelementteilkanal 57 des zweiten Asts des zweiten Stegelements 20 oder der zweiten Stegelemente 20 ist versetzt angeordnet und liegt in der Zeichnungsebene und ist daher geschnitten dargestellt.

Jeder der ersten oder zweiten Stegelementkanäle 12, 22 kann eine Querschnittsfläche in der Form eines Rundelements aufweisen. Das Rundelement kann ein Element aus der Gruppe der Kreise, Ellipsen, abgerundeten Vierecke oder Vielecke umfassen.

Nach diesem Ausführungsbeispiel kreuzt sich die ersten Gruppe 6 mit der zweiten Gruppe 7 derart, dass zwei gemeinsame Kreuzungslinien ausgebildet werden, welche einen Schnittpunkt mit der Längsachse des Einsatzelements 1 haben. In diesen beiden Schnittpunkten sind nach dem vorliegenden Ausführungsbeispiel ein Stegelementverteilkanal 51 für ein Wärmeträgerfluid und ein Stegelementsammelkanal 52 für das Wärmeträgerfluid angeordnet. Die Funktionsweise des Stegelementverteilkanals 51 und des Stegelementsammelkanals 52 entspricht dem in Fig. 6a und 6b dargestellten Ausführungsbeispiel. Allerdings unterscheidet sich der Strömungsverlauf des Wärmeträgerfluids 60 durch die Stegelementkanäle. Das im Betriebszustand durch die Stegelementkanäle strömende Wärmeträgerfluid 60 wird durch strichlierte Pfeile dargestellt. Die Strömung des fliessfähigen Mediums 70 ist durch durchgezogene Pfeile symbolisiert und erfolgt in dieser Darstellung von rechts nach links.

Nach dem vorliegenden Ausführungsbeispiel wird das Wärmeträgerfluid von einer nicht dargestellten Zuleitung in den Stegelementverteilkanal 51 geleitet. Vom Stegelementverteilkanal 51 wird das Wärmeträgerfluid 60 in den ersten Stegelementkanal 12 des ersten Stegelementteilkanals 41 des ersten Asts des ersten Stegelements 10 eingeleitet. Ein erster Teil des Wärmeträgerfluids strömt im ersten Stegelementteilkanal 41 in Richtung des zweiten Stegelementteilkanals 42 des ersten Asts und von dort in den ersten Mantelkanal 13. Ein zweiter Teil des Wärmeträgerfluids strömt im ersten Stegelementteilkanal 41 zum zweiten Mantelkanal 43. Vom ersten Mantelkanal 13 strömt der erste Teil des Wärmeträgerfluids in den ersten Stegelementteilkanal 44 des zweiten Asts des ersten Stegelements 10 bis zum Stegelementsammelkanal 52. Der zweite Teil des Wärmeträgerfluids strömt vom zweiten Mantelkanal 43 in den zweiten Stegelementteilkanal 45 des zweiten Asts des ersten Stegelements 10 und von dort in den Stegelementsammelkanal 52.

Ein dritter Teil des Wärmeträgerfluids strömt im ersten Stegelementteilkanal 54 des ersten Asts des zweiten Stegelements 20 zum dritten Mantelkanal 46. Ein vierter Teil des Wärmeträgerfluids strömt im ersten Stegelementteilkanal 54 des ersten Asts des zweiten Stegelements 20 in Richtung des zweiten Stegelementteilkanals 55 des ersten Asts des zweiten Stegelements 20 und von dort in den vierten Mantelkanal 47. Vom dritten Mantelkanal 46 strömt der dritte Teil des Wärmeträgerfluids in den zweiten Stegelementteilkanal 57 des zweiten Asts des zweiten Stegelements 20 und von dort in den ersten Stegelementteilkanal 56 des zweiten Asts des zweiten Stegelements 20 bis zum Stegelementsammelkanal 52. Der vierte Teil des Wärmeträgerfluids strömt vom vierten Mantelkanal 47 in den ersten Stegelementteilkanal 56 des zweiten Asts des zweiten Stegelements 20 und von dort in den Stegelementsammelkanal 52.

Für jedes weitere erste oder zweite Stegelement der ersten oder zweiten Gruppe, die an die dargestellten Stegelemente anschliessen, erfolgt die Strömung des Wärmeträgerfluids analog. Das Wärmeträgerfluid kann analog zu den vorherigen Ausführungsbeispielen über eine Zuleitung zum Stegelementverteilkanal geleitet werden. Das Wärmeträgerfluid kann wie in den vorhergehenden Ausführungsbeispiel den Wärmetauscher über eine Ableitung verlassen.

Die ersten Stegelemente 10 und die zweiten Stegelemente 20 können wie in den vorhergehenden Ausführungsbeispielen in einem Winkel von 25 bis 75 Grad zur Längsachse des Fluidkanals 4 angeordnet sein. Üblicherweise beträgt der Winkel 30 bis 60 Grad zur Längsachse des Fluidkanals 4, in vielen Fällen im Wesentlichen 45 Grad zur Längsachse des Fluidkanals 4.

Jeder der ersten Stegelementkanäle 10 und der zweiten Stegelementkanäle 20 mündet spaltfrei in das erste Einsatzmantelelement 11 des ersten Einsatzelementes 1. Insbesondere bilden das erste Einsatzmantelelement 11 und jedes der ersten Stegelemente 10 sowie jedes der zweiten Stegelemente 20 ein monolithisches Bauelement aus, welches beispielsweise durch ein Schweissverfahren, ein Schrumpfverfahren, ein Giessverfahren, ein Spritzgiessverfahren oder additives Fertigungsverfahren herstellbar ist.

Es können beliebig viele Gruppen 6, 7 von Stegelementen in Hauptströmungsrichtung des fliessfähigen Mediums gesehen hintereinander angeordnet werden. Das erste Einsatzelement 1 oder gegebenenfalls das zweite Einsatzelement 2 kann auch nur aus einer ersten Gruppe 6 und einer zweiten Gruppe 7 von Stegelementen bestehen. Daher werden in der Beschreibung die erste Gruppe 6 und die zweite Gruppe 7 stellvertretend für eine Mehrzahl weiterer gleichartiger erster oder zweiter Gruppen angesehen. Wie viele Gruppenpaare im Einzelfall vorgesehen sind, hängt von der konkreten Wärmeaustausch- und/oder Mischaufgabe ab. Das heisst, wenn in den folgenden Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, von dieser Beschreibung mit erfasst sein. Der Einfachheit halber wird die Beschreibung zumeist auf eines der Gruppenpaare beschränkt.

Jede der Gruppen kann den gleichen Aufbau wie die vorhergehende Gruppe aufweisen, der Aufbau benachbarter Gruppen kann sich auch voneinander unterscheiden. Jedes der gezeigten Ausführungsbeispiele kann mit jedem anderen Ausführungsbeispiel beliebig kombiniert werden.

Die ersten Stegelementkanäle 12 und die zweiten Stegelementkanäle 22 verlaufen im Inneren der entsprechenden ersten Stegelemente 10 bzw. der zweiten Stegelemente 20, sodass keine Verbindung zwischen den Stegelementkanälen im Inneren der Stegelemente und dem Raum, welcher die Stegelemente umgibt, besteht. Der Raum enthält im Betriebszustand das fliessfähige Medium.

Fig. 8 zeigt einen Längsschnitt durch einen Teil eines erstem Einsatzelements 1 eines Wärmetauschers 5 nach einem achten Ausführungsbeispiel. Das erste Einsatzelement 1 kann Bestandteil einer Anordnung sein kann, wie beispielsweise in Fig. 3 oder Fig. 4 gezeigt ist. Für gleiche oder gleichwirkende Bauteile wurden dieselben Bezugszeichen wie für das erste Ausführungsbeispiel verwendet. Wenn nicht anders angegeben, wird auf die Beschreibung zum ersten Ausführungsbeispiel verwiesen. Das erste Einsatzelement 1 ist nach dem vorliegenden Ausführungsbeispiel einteilig aufgebaut, beispielsweise bei Herstellung des ersten Einsatzelements 1 mittels eines additiven Fertigungsverfahrens. Nach dem vorliegenden Ausführungsbeispiel umfasst das erste Einsatzelement 1 ein erstes Einsatzmantelelement 11, welches eine Mehrzahl von ersten und zweiten Stegelementen 10, 20 enthält.

Fig. 8 zeigt exemplarisch zwei zu einer ersten Gruppe 6 gehörige Stegelemente 10 sowie zwei zu einer zweiten Gruppe 7 zugehörige Stegelemente 20. Im Einsatzmantelelement 11 sind je ein erster Mantelkanal 13 und ein zweiter Mantelkanal 43 ausgebildet, über welchen die Stegelementkanäle der zur ersten Gruppe 6 gehörigen Stegelemente miteinander verbunden sind. Im Einsatzmantelelement 11 sind je ein dritter Mantelkanal 46 und ein vierter Mantelkanal 47 ausgebildet, über welchen die Stegelementkanäle der zur zweiten Gruppe 7 gehörigen Stegelemente miteinander verbunden sind.

Das erste Einsatzelement 1 hat eine Längsachse, die sich im Wesentlichen in Hauptströmungsrichtung eines Massestroms erstreckt, welcher das erste Einsatzelement 1 im Betriebszustand in einem vom ersten Einsatzelement 1 ausgebildeten Fluidkanal 4 durchströmt. Mit dem Massestrom ist ein fliessfähiges Medium gemeint, welches den Fluidkanal 4 des Wärmetauschers durchströmt und welches von einem Wärmeträgerfluid gekühlt oder erwärmt werden soll.

Das erste Stegelement 10 bzw. jedes der ersten Stegelemente 10, enthält ein erstes Ende 8 und ein zweites Ende 9, wobei das erste Ende 8 und das zweite Ende 9 des ersten Stegelements 10 mit dem Einsatzmantelelement 11 an verschiedenen Stellen verbunden sind. Das zweite Stegelement 20 bzw. jedes der zweiten Stegelemente 20 enthält ein erstes Ende 18 und ein zweites Ende 19, wobei das erste Ende 18 und das zweite Ende 19 des zweiten Stegelements 20 mit dem ersten Einsatzmantelelement 11 an verschiedenen Stellen verbunden sind. Das erste Stegelement 10 bzw. jedes der ersten Stegelemente 10 und das zweite Stegelement 20 bzw. jedes der zweiten Stegelemente 20 kreuzen den Fluidkanal 4.

Das erste Stegelement 10 bzw. jedes der ersten Stegelemente 10 enthält einen ersten Stegelementkanal 12. Der erste Stegelementkanal 12 erstreckt sich vom ersten Ende 8 des ersten Stegelements 10 zum zweiten Ende 9 des ersten Stegelements 10. Das zweite Stegelement 20 bzw. jedes der zweiten Stegelemente 20 enthält einen zweiten Stegelementkanal 22. Der zweite Stegelementkanal 22 erstreckt sich vom ersten Ende 18 des zweiten Stegelements 20 zum zweiten Ende 19 des zweiten Stegelements 20.

Das erste Einsatzelement 1 enthält einen ersten und einen zweiten Stegelementverteilkanal und Stegelementsammelkanal 51, 52 der mit den ersten und zweiten Stegelementkanälen 12, 22 der ersten Stegelemente 10 und der zweiten Stegelemente 20 in fluidleitender Verbindung steht. Der erste Stegelementverteilkanal und Stegelementsammelkanal 51 ist zur Aufnahme und zum Austausch des Wärmeträgerfluids mit den ersten Stegelementkanälen 12 ausgebildet. Der zweite Stegelementverteilkanal und Stegelementsammelkanal 52 ist zur Aufnahme und zum Austausch des Wärmeträgerfluids mit den zweiten Stegelementkanälen 22 ausgebildet. Die ersten Stegelementkanäle 12 stehen mit dem ersten Mantelkanal 13 und dem zweiten Mantelkanal 43 in fluidleitender Verbindung. Die zweiten Stegelementkanäle 22 stehen mit dem dritten Mantelkanal 46 und dem vierten Mantelkanal 47 in fluidleitender Verbindung. Der erste und zweite Stegelementverteilkanal und Stegelementsammelkanal 51, 52 wird von mindestens einer Zuleitung gespeist, die im Schnitt nicht sichtbar ist und die entsprechend der Fig. 5b oder Fig. 6b ausgebildet sein kann. Der erste und zweite Stegelementverteilkanal und Stegelementsammelkanal 51, 52 kann in eine Ableitung münden, wie in Fig. 5b oder Fig. 6b schematisch dargestellt. Die Ableitung dient zum Abtransport des Wärmeträgerfluids.

Fig. 8 zeigt das erste Stegelement 10, durch welches der Längsschnitt gelegt ist, sodass dessen erster Stegelementkanal 12 teilweise sichtbar ist und das zweite Stegelement 20, welches sich teilweise hinter dem ersten Stegelement 10 befindet und ebenfalls teilweise geschnitten dargestellt ist. Weitere Stegelemente können hinter dem ersten und zweiten Stegelement 10, 20 angeordnet sein, sie sind in dieser Darstellung nicht sichtbar.

Unter der Länge eines Stegelements wird die Abmessung von dessen ersten Ende bis zu dessen zweiten Ende verstanden, wobei die Länge entlang der Mittenachse des Stegelements gemessen wird. Unter der Dicke des Stegelements wird die Abmessung normal zur Mittenachse von einer Kante zur gegenüberliegenden Kante verstanden. Insbesondere kann die Dicke bei rohrförmigen Stegelementen dem Durchmesser des Stegelements entsprechen.

Nach dem vorliegenden Ausführungsbeispiel weisen die ersten und zweiten Stegelemente 10, 20 je einen Knick auf. Nach dem vorliegenden Ausführungsbeispiel erfolgt im Knick eine Umlenkung der Strömung in einen zweiten Stegelementteilkanal, der in Bezug auf die Schnittebene, die durch einen ersten Stegelementteilkanal gelegt worden ist, um mindestens einen Stegelementdurchmesser oder eine Stegelementdicke versetzt angeordnet ist.

Nach dem vorliegenden Ausführungsbeispiel umfasst das erste Stegelement einen ersten Ast und einen zweiten Ast. Der erste Ast enthält den ersten Stegelementteilkanal 41 und den zweiten Stegelementteilkanal 42. Der zweite Ast enthält einen weiteren ersten Stegelementteilkanal 44 und einen weiteren zweiten Stegelementteilkanal 45. Nach dem vorliegenden Ausführungsbeispiel verläuft der erste Stegelementteilkanal 41 des ersten Asts parallel zum ersten Stegelementteilkanal 44 des zweiten Asts. Der zweite Stegelementteilkanal 42 des ersten Asts verläuft parallel zum zweiten Stegelementteilkanal 45 des zweiten Asts. Nach dem vorliegenden Ausführungsbeispiel sind die ersten Stegelementteilkanäle 41, 44 im Wesentlichen gleich lang wie die zweiten Stegelementteilkanäle 42, 45. Der erste Stegelementteilkanal 41, 44 ist in Bezug auf den zweiten Stegelementteilkanal 42, 45 in einem Winkel angeordnet, der im Bereich von 80 Grad bis ungefähr 100 Grad liegt. Zudem verläuft der erste Stegelementteilkanal 41, 44 in einer ersten Ebene, hier der Schnittebene, und der zweite Stegelementteilkanal 42, 45 verläuft in einer zweiten Ebene, die parallel zur ersten Ebene angeordnet ist, aber von der ersten Ebene einen Abstand aufweist, er mindestens dem Stegelementdurchmesser oder der Stegelementdicke entspricht.

Der erste Stegelementkanal 12 kann nach dem vorliegenden Ausführungsbeispiel am ersten Ende 8 des ersten Stegelements 10 in einen ersten Mantelkanal 13 münden. Der erste Mantelkanal 13 verläuft zumindest teilweise durch das erste Einsatzmantelelement 11 oder an oder in der Nähe von dessen Innenwand. Der erste Stegelementkanal 12 kann am zweiten Ende 9 des ersten Stegelements 10 in einen zweiten Mantelkanal 43 münden. Der zweite Mantelkanal 43 verläuft zumindest teilweise durch das erste Einsatzmantelelement 11 oder an oder in der Nähe von dessen Innenwand. Die ersten und zweiten Mantelkanäle 13, 43 können zur Verbindung der ersten Stegelementkanäle 12 des ersten und des zweiten Asts des ersten Stegelements 10 ausgebildet sein.

Nach dem vorliegenden Ausführungsbeispiel umfasst das zweite Stegelement 20 einen ersten Ast und einen zweiten Ast. Der erste Ast enthält einen ersten Stegelementteilkanal 54 und den zweiten Stegelementteilkanal 55. Der zweite Ast enthält einen weiteren ersten Stegelementteilkanal 56 und einen weiteren zweiten Stegelementteilkanal 57. Nach dem vorliegenden Ausführungsbeispiel verläuft der erste Stegelementteilkanal 54 des ersten Asts parallel zum ersten Stegelementteilkanal 56 des zweiten Asts. Der zweite Stegelementteilkanal 55 des ersten Asts verläuft parallel zum zweiten Stegelementteilkanal 57 des zweiten Asts. Nach dem vorliegenden Ausführungsbeispiel sind die ersten Stegelementteilkanäle 54, 56 im Wesentlichen gleich lang wie als die zweiten Stegelementteilkanäle 55, 57.

Der zweite Stegelementkanal 22 kann nach dem vorliegenden Ausführungsbeispiel am ersten Ende 18 des zweiten Stegelements 20 in einen dritten Mantelkanal 46 münden. Der dritte Mantelkanal 46 verläuft zumindest teilweise durch das erste Einsatzmantelelement 11 oder an oder in der Nähe von dessen Innenwand. Der zweite Stegelementkanal 22 kann am zweiten Ende 19 des zweiten Stegelements 20 in einen vierten Mantelkanal 47 münden. Der vierte Mantelkanal 47 verläuft zumindest teilweise durch das erste Einsatzmantelelement 11 oder an dessen Innenwand. Die dritten und vierten Mantelkanäle 46, 47 können zur Verbindung der zweiten Stegelementkanäle 22 des ersten und des zweiten Asts des zweiten Stegelements 20 ausgebildet sein.

Das erste Einsatzelement 1 kann, wie in den vorherigen Ausführungsbeispielen je zwei gegenüber der Hauptströmungsrichtung in einem Winkel ungleich null angeordnete erste und zweite Gruppen 6, 7 von ersten Stegelementen 10 und zweiten Stegelementen 20 und einem fest mit zumindest einem Teil ersten Stegelemente 10 und der zweiten Stegelemente 20 verbundenen Einsatzmantelelement 11 umfassen. An diese ersten und zweiten Gruppen 6, 7 können weitere Gruppen von Stegelementen anschliessen, was zeichnerisch nicht dargestellt ist. Nach dem vorliegenden Ausführungsbeispiel sind alle Gruppenpaare gleich aufgebaut. Daher gilt die nachfolgende Beschreibung für die ersten Gruppen 6 sowie die zweiten Gruppen 7. Jede Gruppe kann eine Mehrzahl von Stegelementen umfassen. Je nach der Grösse des Raums und/oder der Breite der Stegelemente können 2 bis 20, vorzugsweise 4 bis 12 Stegelemente einer Gruppe parallel zueinander angeordnet sein.

Die erste Gruppe 6 von ersten Stegelementen 10 erstreckt sich über vier Gruppenebenen. Die Gruppenebenen enthalten die Längsachse des jeweils im Inneren des ersten Stegelements 10 verlaufenden ersten Stegelementkanals 12, wenn der erste Stegelementkanal 12 derart angeordnet ist, dass seine Längsachse mit der Mittenachse des ersten Stegelements 10 zusammenfällt. In der vorliegenden Darstellung verläuft jede der Gruppenebenen in einem rechten Winkel zur Zeichnungsebene. Die zweite Gruppe 7 von zweiten Stegelementen 20 erstreckt sich über vier Gruppenebenen. Die Gruppenebenen der ersten und zweiten Stegelemente 10, 20 können sich kreuzen oder parallel zueinander verlaufen.

In der vorliegenden Darstellung kreuzen sich die jeweils ersten Stegelementteilkanäle 41 und die zweiten Stegelementteilkanäle 42 des jeweiligen ersten Asts des ersten Stegelements 10 und die ersten Stegelementteilkanäle 54 und die zweiten Stegelementteilkanäle 55 des jeweiligen ersten Asts des zweiten Stegelements 20.

Das erste Stegelement 10 ist entlang seiner Längsachse im Bereich des ersten Stegelementteilkanals 41 des ersten Asts sowie des ersten Stegelementteilkanals 44 des zweiten Asts geschnitten, sodass im geschnittenen Bereich eine Hälfte des ersten Stegelementkanals 12 sichtbar ist. Der zweite Stegelementteilkanal 42 des ersten Asts des ersten Stegelements 10 und der zweite Stegelementteilkanal 45 des zweiten Asts des ersten Stegelements 10 ist versetzt zu dem entsprechenden ersten Stegelementteilkanal 41, 44 des ersten und zweiten Asts angeordnet, daher nicht geschnitten dargestellt.

Das zweite Stegelement 20 befindet sich in Bezug auf die Zeichnungsebene teilweise hinter dem ersten Stegelement 10. Dessen erster Stegelementteilkanal 54 des ersten Asts sowie der zugehörige erste Stegelementteilkanal 56 des zweiten Asts ist geschnitten dargestellt und liegt in der Zeichnungsebene. Der zweite Stegelementteilkanal 55 des ersten Asts des zweiten Stegelements 20 oder der zweiten Stegelemente 20 und der zweite Stegelementteilkanal 57 des zweiten Asts des zweiten Stegelements 20 oder der zweiten Stegelemente 20 ist versetzt angeordnet und ist daher nicht geschnitten dargestellt. Der durch das zweite Stegelement 20 verlaufende zweite Stegelementkanal 22 ist in diesem Bereich daher nur mittels einer strichlierten Linie dargestellt.

Jeder der ersten oder zweiten Stegelementkanäle 12, 22 kann eine Querschnittsfläche in der Form eines Rundelements aufweisen. Das Rundelement kann ein Element aus der Gruppe der Kreise, Ellipsen, abgerundeten Vierecke oder Vielecke umfassen.

Nach diesem Ausführungsbeispiel kreuzt sich die ersten Gruppe 6 mit der zweiten Gruppe 7 derart, dass zwei gemeinsame Kreuzungslinien ausgebildet werden, welche einen Schnittpunkt mit der Längsachse des Einsatzelements 1 haben. In diesen beiden Schnittpunkten sind nach dem vorliegenden Ausführungsbeispiel der erste und der zweite Stegelementverteilkanal und Stegelementsammelkanal 51, 52 für das Wärmeträgerfluid 60 angeordnet.

Das im Betriebszustand durch die Stegelementkanäle strömende Wärmeträgerfluid 60 wird durch strichlierte Pfeile dargestellt. Die Strömung des fliessfähigen Mediums 70 ist durch durchgezogene Pfeile symbolisiert und erfolgt in dieser Darstellung von rechts nach links. Nach dem vorliegenden Ausführungsbeispiel wird das Wärmeträgerfluid von einer nicht dargestellten Zuleitung in die ersten und zweiten Stegelementverteilkanäle und Stegelementsammelkanäle 51, 52 geleitet. Vom zweiten Stegelementverteilkanal und Stegelementsammelkanal 52 wird das Wärmeträgerfluid 60 in den ersten Stegelementteilkanal 41 des ersten Asts des ersten Stegelements 10 eingeleitet. Nach diesem Ausführungsbeispiel gibt es keine Verbindung mit dem zweiten Stegelementteilkanal 42 des ersten Asts des ersten Stegelements 10. Das Wärmeträgerfluid strömt im ersten Stegelementteilkanal 41 zum ersten Mantelkanal 13. Vom ersten Mantelkanal 13 wird das Wärmeträgerfluid in den zweiten Stegelementteilkanal 45 des zweiten Asts des ersten Stegelements 10 eingeleitet und strömt von dort in den ersten Stegelementteilkanal 44 des zweiten Asts des ersten Stegelements 10 zum zweiten Mantelkanal 43. Vom zweiten Mantelkanal 43 wird das Wärmeträgerfluid in den zweiten Stegelementteilkanal 42 des ersten Asts des ersten Stegelements 10 eingeleitet und strömt von dort in den zweiten Stegelementverteilkanal und Stegelementsammelkanal 52 zurück. Von dort aus gelangt das Wärmeträgerfluid entweder in eine weitere Stegelementanordnung der ersten Gruppe 6 oder wird zu einer Ableitung geführt, um den Wärmetauscher zu verlassen.

Vom ersten Stegelementverteilkanal und Stegelementsammelkanal 51 wird das Wärmeträgerfluid 60 in den ersten Stegelementteilkanal 54 des ersten Asts des zweiten Stegelements 20 eingeleitet. Nach diesem Ausführungsbeispiel gibt es keine Verbindung mit dem zweiten Stegelementteilkanal 55 des ersten Asts des zweiten Stegelements 20. Das Wärmeträgerfluid strömt im ersten Stegelementteilkanal 54 zum vierten Mantelkanal 47. Vom vierten Mantelkanal 47 wird das Wärmeträgerfluid in den zweiten Stegelementteilkanal 57 des zweiten Asts des zweiten Stegelements 20 eingeleitet und strömt von dort in den ersten Stegelementteilkanal 56 des zweiten Asts des zweiten Stegelements 20 zum dritten Mantelkanal 46. Vom dritten Mantelkanal 46 wird das Wärmeträgerfluid in den zweiten Stegelementteilkanal 55 des ersten Asts des zweiten Stegelements 20 eingeleitet und strömt von dort in den ersten Stegelementverteilkanal und Stegelementsammelkanal 51 zurück. Von dort aus gelangt das Wärmeträgerfluid entweder in eine weitere Stegelementanordnung der zweiten Gruppe 7 oder wird zu einer Ableitung geführt, um den Wärmetauscher zu verlassen.

Für jedes weitere erste oder zweite Stegelement der ersten oder zweiten Gruppe 6, 7, die an die dargestellten Stegelemente anschliessen, erfolgt die Strömung des Wärmeträgerfluids somit in analoger Weise. Die ersten Stegelemente 10 und die zweiten Stegelemente 20 können wie in den vorhergehenden Ausführungsbeispielen in einem Winkel von 25 bis 75 Grad zur Längsachse des Fluidkanals 4 angeordnet sein. Üblicherweise beträgt der Winkel 30 bis 60 Grad zur Längsachse des Fluidkanals 4, in vielen Fällen im Wesentlichen 45 Grad zur Längsachse des Fluidkanals 4. Jeder der ersten Stegelementkanäle 10 und der zweiten Stegelementkanäle 20 mündet spaltfrei in das erste Einsatzmantelelement 11 des ersten Einsatzelementes 1. Insbesondere bilden das erste Einsatzmantelelement 11 und jedes der ersten Stegelemente 10 sowie jedes der zweiten Stegelemente 20 ein monolithisches Bauelement aus, welches beispielsweise durch ein Schweissverfahren, ein Schrumpfverfahren, ein Giessverfahren, ein Spritzgiessverfahren oder additives Fertigungsverfahren herstellbar ist.

Es können beliebig viele Gruppen 6, 7 von Stegelementen in Hauptströmungsrichtung des fliessfähigen Mediums gesehen hintereinander angeordnet werden. Das erste Einsatzelement 1 oder gegebenenfalls das zweite Einsatzelement 2 kann auch nur aus einer ersten Gruppe 6 und einer zweiten Gruppe 7 von Stegelementen bestehen. Daher werden in der Beschreibung die erste Gruppe 6 und die zweite Gruppe 7 stellvertretend für eine Mehrzahl weiterer gleichartiger erster oder zweiter Gruppen angesehen. Wie viele Gruppenpaare im Einzelfall vorgesehen sind, hängt von der konkreten Wärmeaustausch- und/oder Mischaufgabe ab. Das heisst, wenn in diesen Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, von dieser Beschreibung mit erfasst sein. Der Einfachheit halber wird die Beschreibung zumeist auf eines der Gruppenpaare beschränkt. Jede der Gruppen kann den gleichen Aufbau wie die vorhergehende Gruppe aufweisen, der Aufbau benachbarter Gruppen kann sich auch voneinander unterscheiden. Jedes der gezeigten Ausführungsbeispiele kann mit jedem anderen Ausführungsbeispiel beliebig kombiniert werden. Die ersten Stegelementkanäle 12 und die zweiten Stegelementkanäle 22 verlaufen im Inneren der entsprechenden ersten Stegelemente 10 bzw. der zweiten Stegelemente 20, sodass keine Verbindung zwischen den Stegelementkanälen im Inneren der Stegelemente und dem Raum, welcher die Stegelemente umgibt, besteht. Der Raum enthält im Betriebszustand das fliessfähige Medium.

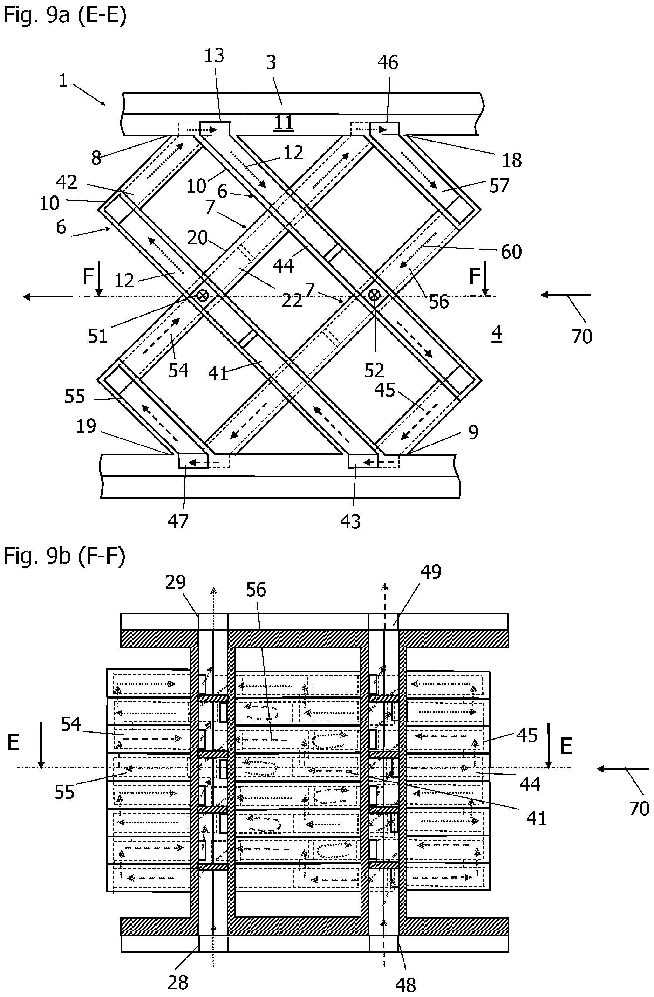

Fig. 9a zeigt einen Längsschnitt durch einen Teil eines ersten Einsatzelements 1 eines Wärmetauschers 5 nach einem neunten Ausführungsbeispiel. Das erste Einsatzelement 1 kann Bestandteil einer Anordnung sein kann, wie beispielsweise in Fig. 3 oder Fig. 4 gezeigt ist. Für gleiche oder gleichwirkende Bauteile wurden dieselben Bezugszeichen wie für das erste Ausführungsbeispiel verwendet. Wenn nicht anders angegeben, wird auf die Beschreibung zum ersten Ausführungsbeispiel verwiesen. Das erste Einsatzelement 1 ist nach dem vorliegenden Ausführungsbeispiel einteilig aufgebaut, beispielsweise bei Herstellung des ersten Einsatzelements 1 mittels eines additiven Fertigungsverfahrens. Nach dem vorliegenden Ausführungsbeispiel umfasst das erste Einsatzelement 1 ein erstes Einsatzmantelelement 11, welches eine Mehrzahl von ersten und zweiten Stegelementen 10, 20 enthält.

Fig. 9a zeigt exemplarisch vier zu einer ersten Gruppe 6 gehörige Stegelemente 10 sowie vier zu einer zweiten Gruppe 7 zugehörige Stegelemente 20. Im Einsatzmantelelement 11 ist ein Mantelkanal 13 ausgebildet, über welchen die Stegelementkanäle der zu einer Gruppe gehörigen Stegelemente miteinander verbunden sind.

Das erste Einsatzelement 1 hat eine Längsachse, die sich im Wesentlichen in Hauptströmungsrichtung eines Massestroms erstreckt, welcher das erste Einsatzelement 1 im Betriebszustand in einem vom ersten Einsatzelement 1 ausgebildeten Fluidkanal 4 durchströmt. Mit dem Massestrom ist ein fliessfähiges Medium 70 gemeint, welches den Fluidkanal 4 des Wärmetauschers durchströmt und welches von einem Wärmeträgerfluid 60 gekühlt oder erwärmt werden soll.

Das erste Stegelement 10 bzw. jedes der ersten Stegelemente, enthält ein erstes Ende 8 und ein zweites Ende 9, wobei das erste Ende 8 und das zweite Ende 9 des ersten Stegelements 10 mit dem Einsatzmantelelement 11 an verschiedenen Stellen verbunden sind. Das zweite Stegelement 20 bzw. jedes der zweiten Stegelemente enthält ein erstes Ende 18 und ein zweites Ende 19, wobei das erste Ende 18 und das zweite Ende 19 des zweiten Stegelements 20 mit dem ersten Einsatzmantelelement 11 an verschiedenen Stellen verbunden sind. Das erste Stegelement 10 bzw. jedes der ersten Stegelemente 10 und das zweite Stegelement 20 bzw. jedes der zweiten Stegelemente 20 kreuzen den Fluidkanal 4.

Das erste Stegelement 10 bzw. jedes der ersten Stegelemente 10 enthält einen ersten Stegelementkanal 12. Der erste Stegelementkanal 12 erstreckt sich vom ersten Ende 8 des ersten Stegelements 10 zum zweiten Ende 9 des ersten Stegelements 10. Das zweite Stegelement 20 bzw. jedes der zweiten Stegelemente 20 enthält einen zweiten Stegelementkanal 22. Der zweite Stegelementkanal 22 erstreckt sich vom ersten Ende 18 des zweiten Stegelements 20 zum zweiten Ende 19 des zweiten Stegelements 20. Nach dem vorliegenden Ausführungsbeispiel sind die ersten Stegelementkanäle 12 und die zweiten Stegelementkanäle 22 nicht durchgehend.

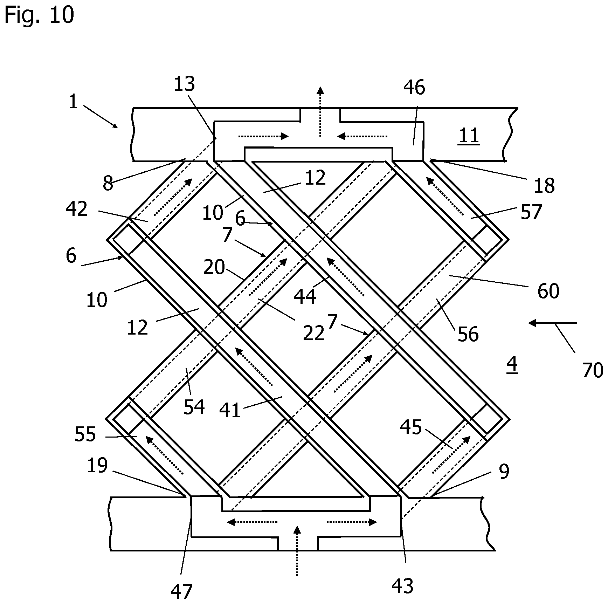

Das erste Einsatzelement 1 enthält einen ersten Stegelementverteilkanal 51 und einen zweiten Stegelementverteilkanal 52, der mit den ersten und zweiten Stegelementkanälen 12, 22 der ersten Stegelemente 10 und der zweiten Stegelemente 20 in fluidleitender Verbindung steht. Der erste Stegelementverteilkanal 51 ist zur Aufnahme und zum Austausch des Wärmeträgerfluids mit den ersten und zweiten Stegelementkanälen 12, 22 ausgebildet. Die ersten und zweiten Stegelementkanäle 12, 22 stehen mit einer Mehrzahl von Mantelkanälen 13, 43, 46, 47 in fluidleitender Verbindung. Der erste Stegelementverteilkanal 51 und der zweite Stegelementverteilkanal 52 können von je einer Zuleitung 28, 48 gespeist werden, was in Fig. 9b sichtbar ist. Das Wärmeträgerfluid wird in einem ersten Stegelementsammelkanal und in einem zweiten Stegelementsammelkanal gesammelt, wobei der entsprechende Stegelementverteilkanal in den entsprechenden Stegelementsammelkanal übergeht. Die Stegelementsammelkanäle können in je eine Ableitung 29, 49 münden. Jede der Ableitungen 29, 49 dient zum Abtransport des Wärmeträgerfluids. Selbstverständlich ist es alternativ auch möglich, dass die Stegelementverteilkanäle in einen Mantelverteilkanal und die Stegelementsammelkanäle in einen Mantelsammelkanal münden, ähnlich wie in Fig. 10 gezeigt.

Fig. 7 zeigt das erste Stegelement 10, durch welches der Längsschnitt gelegt ist, sodass dessen erster Stegelementkanal 12 teilweise sichtbar ist und das zweite Stegelement 20, welches sich hinter dem ersten Stegelement 10 befindet und ebenfalls teilweise geschnitten dargestellt ist. Weitere Stegelemente können hinter dem ersten und zweiten Stegelement 10, 20 angeordnet sein, sie sind in dieser Darstellung nicht sichtbar.

Unter der Länge eines Stegelements wird die Abmessung von dessen ersten Ende bis zu dessen zweiten Ende verstanden, wobei die Länge entlang der Mittenachse des Stegelements gemessen wird. Unter der Dicke des Stegelements wird die Abmessung normal zur Mittenachse von einer Kante zur gegenüberliegenden Kante verstanden. Insbesondere kann die Dicke bei rohrförmigen Stegelementen dem Durchmesser des Stegelements entsprechen.

Nach dem vorliegenden Ausführungsbeispiel weisen die ersten und zweiten Stegelemente 10, 20 je einen Knick auf. Nach dem vorliegenden Ausführungsbeispiel erfolgt im Knick eine Umlenkung der Strömung in einen Stegelementteilkanal, der in Bezug auf die Schnittebene um mindestens einen Stegelementdurchmesser oder einer Stegelementdicke versetzt angeordnet ist. Das erste Stegelement 10 enthält somit einen ersten Stegelementteilkanal 41 und einen zweiten Stegelementteilkanal 42. Der erste Stegelementteilkanal 41 ist in Bezug auf den zweiten Stegelementteilkanal 42 in einem Winkel angeordnet, der im Bereich von 80 Grad bis ungefähr 100 Grad liegt. Zudem verläuft der erste Stegelementteilkanal 41 in einer ersten Ebene, hier der Schnittebene, und der zweite Stegelementteilkanal 42 in einer zweiten Ebene, die parallel zur ersten Ebene angeordnet ist, aber von der ersten Ebene einen Abstand aufweist, er mindestens dem Stegelementdurchmesser oder der Stegelementdicke entspricht. Der erste Stegelementteilkanal 41 kann eine Länge aufweisen, die sich von der Länge des zweiten Stegelementteilkanals 42 unterscheidet. Insbesondere kann der erste Stegelementteilkanal 41 länger oder kürzer als der zweite Stegelementteilkanal 42 sein.

Der erste Stegelementkanal 12 kann nach dem vorliegenden Ausführungsbeispiel am ersten Ende 8 des ersten Stegelements 10 in einen ersten Mantelkanal 13 münden. Der erste Mantelkanal 13 verläuft zumindest teilweise durch das erste Einsatzmantelelement 11 oder an oder in der Nähe von dessen Innenwand. Der erste Stegelementkanal 12 kann am zweiten Ende 9 des ersten Stegelements 10 in einen zweiten Mantelkanal 43 münden. Der zweite Mantelkanal 43 verläuft zumindest teilweise durch das erste Einsatzmantelelement 11 oder an dessen Innenwand. Die ersten und zweiten Mantelkanäle 13, 43 können zur Verbindung der ersten Stegelementkanäle 12 eines ersten und des zweiten Asts des ersten Stegelements 10 ausgebildet sein.

Nach dem vorliegenden Ausführungsbeispiel umfasst das erste Stegelement 10 einen ersten Ast und einen zweiten Ast. Der erste Ast enthält den ersten Stegelementteilkanal 41 und den zweiten Stegelementteilkanal 42. Der zweite Ast enthält einen weiteren ersten Stegelementteilkanal 44 und einen weiteren zweiten Stegelementteilkanal 45. Nach dem vorliegenden Ausführungsbeispiel verläuft der erste Stegelementteilkanal 41 des ersten Asts parallel zum ersten Stegelementteilkanal 44 des zweiten Asts. Der zweite Stegelementteilkanal 42 des ersten Asts verläuft parallel zum zweiten Stegelementteilkanal 45 des zweiten Asts. Nach dem vorliegenden Ausführungsbeispiel sind die ersten Stegelementteilkanäle 41, 44 länger als die zweiten Stegelementteilkanäle 42, 45.

Zudem verläuft der erste Stegelementteilkanal 41 in einer ersten Ebene, hier der Schnittebene, und der zweite Stegelementteilkanal 42 in einer zweiten Ebene, die parallel zur ersten Ebene angeordnet ist, aber von der ersten Ebene einen Abstand aufweist, er mindestens dem Stegelementdurchmesser oder der Stegelementdicke entspricht. Der erste Stegelementteilkanal 41 kann eine Länge aufweisen, die sich von der Länge des zweiten Stegelementteilkanals 42 unterscheidet. Insbesondere kann der erste Stegelementteilkanal 41 länger oder kürzer als der zweite Stegelementteilkanal 42 sein.

Der zweite Stegelementkanal 22 kann nach dem vorliegenden Ausführungsbeispiel am ersten Ende 18 des zweiten Stegelements 20 in einen dritten Mantelkanal 46 münden. Der dritte Mantelkanal 46 verläuft zumindest teilweise durch das erste Einsatzmantelelement 11 oder an oder in der Nähe von dessen Innenwand. Der zweite Stegelementkanal 22 kann am zweiten Ende 19 des zweiten Stegelements 20 in einen vierten Mantelkanal 47 münden. Der vierte Mantelkanal 47 verläuft zumindest teilweise durch das erste Einsatzmantelelement 11 oder an dessen Innenwand. Die dritten und vierten Mantelkanäle 46, 47 können zur Verbindung der zweiten Stegelementkanäle 22 eines ersten und des zweiten Asts des zweiten Stegelements 20 ausgebildet sein.

Nach dem vorliegenden Ausführungsbeispiel umfasst das zweite Stegelement 20 einen ersten Ast und einen zweiten Ast. Der erste Ast enthält einen ersten Stegelementteilkanal 54 und den zweiten Stegelementteilkanal 55. Der zweite Ast enthält einen weiteren ersten Stegelementteilkanal 56 und einen weiteren zweiten Stegelementteilkanal 57. Nach dem vorliegenden Ausführungsbeispiel verläuft der erste Stegelementteilkanal 54 des ersten Asts parallel zum ersten Stegelementteilkanal 56 des zweiten Asts. Der zweite Stegelementteilkanal 55 des ersten Asts verläuft parallel zum zweiten Stegelementteilkanal 57 des zweiten Asts. Nach dem vorliegenden Ausführungsbeispiel sind die ersten Stegelementteilkanäle 54, 56 länger als die zweiten Stegelementteilkanäle 55, 57.

Das erste Einsatzelement 1 kann, wie in den vorherigen Ausführungsbeispielen je zwei gegenüber der Hauptströmungsrichtung in einem Winkel ungleich null angeordnete erste und zweite Gruppen 6, 7 von ersten Stegelementen 10 und zweiten Stegelementen 20 und einem fest mit zumindest einem Teil ersten Stegelemente 10 und der zweiten Stegelemente 20 verbundenen Einsatzmantelelement 11 umfassen. An diese ersten und zweiten Gruppen 6, 7 können weitere Gruppen von Stegelementen anschliessen, was in Fig. 9b dargestellt ist. Nach dem vorliegenden Ausführungsbeispiel sind alle Gruppenpaare im Wesentlichen gleich aufgebaut. Daher gilt die nachfolgende Beschreibung für die ersten Gruppen 6 sowie die zweiten Gruppen 7. Jede Gruppe kann eine Mehrzahl von Stegelementen umfassen. Je nach der Grösse des Raums und/oder der Breite der Stegelemente können 2 bis 20, vorzugsweise 4 bis 12 Stegelemente einer Gruppe parallel zueinander angeordnet sein.

Die erste Gruppe 6 von ersten Stegelementen 10 erstreckt sich über vier Gruppenebenen. Die Gruppenebenen enthalten die Längsachse des jeweils im Inneren des ersten Stegelements 10 verlaufenden ersten Stegelementkanals 12, wenn der erste Stegelementkanal 12 derart angeordnet ist, dass seine Längsachse mit der Mittenachse des ersten Stegelements 10 zusammenfällt. In der vorliegenden Darstellung verlaufen die Gruppenebenen in einem rechten Winkel zur Zeichnungsebene. Die zweite Gruppe 7 von zweiten Stegelementen 20 erstreckt sich über vier Gruppenebenen. Die Gruppenebenen der ersten und zweiten Stegelemente 10, 20 können sich kreuzen oder parallel zueinander verlaufen.

In der vorliegenden Darstellung kreuzen sich die jeweils ersten Stegelementteilkanäle 41 des jeweiligen ersten Asts und die ersten Stegelementteilkanäle 44 des jeweiligen zweiten Asts des ersten Stegelements 10 oder der ersten Stegelemente 10 mit den ersten Stegelementteilkanälen 54 des jeweiligen ersten Asts und den ersten Stegelementteilkanälen 56 des jeweiligen zweiten Asts des zweiten Stegelements 20 oder der zweiten Stegelemente 20. Die erste Gruppe 6 der ersten Stegelemente 10 kann eine Mehrzahl von ersten Stegelementen 10 umfassen, wie in den vorhergehenden Ausführungsbeispielen dargestellt. Die zweite Gruppe 7 der zweiten Stegelemente 20 kann eine Mehrzahl von zweiten Stegelementen 20 umfassen, wie in den vorhergehenden Ausführungsbeispielen dargestellt.

Eines der ersten Stegelemente 10 der ersten Gruppe 6 schliesst an ein zweites Stegelement 20 der zweiten Gruppe 7 an. Das zumindest eine erste Stegelement 10 ist somit kreuzweise zum zumindest einen zweiten Stegelement 20 angeordnet. Die ersten Stegelemente 10 der ersten Gruppe 6 wechseln somit mit den zweiten Stegelementen 20 der zweiten Gruppe 7 ab. Das erste Stegelement 10 ist entlang seiner Längsachse im Bereich des ersten Stegelementteilkanals 41 des ersten Asts sowie des ersten Stegelementteilkanals 44 des zweiten Asts geschnitten, sodass im geschnittenen Bereich eine Hälfte des ersten Stegelementkanals 12 sichtbar ist. Der zweite Stegelementteilkanal 42 des ersten Asts des ersten Stegelements 10 und der zweite Stegelementteilkanal 45 des zweiten Asts des ersten Stegelements 10 ist versetzt zu dem entsprechenden ersten Stegelementteilkanal 41, 44 des ersten und zweiten Asts angeordnet, daher nicht geschnitten dargestellt.

Das zweite Stegelement 20 befindet sich in Bezug auf die Zeichnungsebene teilweise hinter dem ersten Stegelement 10. Dessen erster Stegelementteilkanal 54 des ersten Asts sowie der zugehörige erste Stegelementteilkanal 56 des zweiten Asts ist daher nicht geschnitten dargestellt und der durch das zweite Stegelement 20 verlaufende zweite Stegelementkanal 22 ist in diesem Bereich daher nur mittels einer strichlierten Linie dargestellt. Der zweite Stegelementteilkanal 55 des ersten Asts des zweiten Stegelements 20 oder der zweiten Stegelemente 20 und der zweite Stegelementteilkanal 57 des zweiten Asts des zweiten Stegelements 20 oder der zweiten Stegelemente 20 ist versetzt angeordnet und liegt in der Zeichnungsebene und ist daher geschnitten dargestellt.

Jeder der ersten oder zweiten Stegelementkanäle 12, 22 kann eine Querschnittsfläche in der Form eines Rundelements aufweisen. Das Rundelement kann ein Element aus der Gruppe der Kreise, Ellipsen, abgerundeten Vierecke oder Vielecke umfassen.

Nach diesem Ausführungsbeispiel kreuzt sich die ersten Gruppe 6 mit der zweiten Gruppe 7 derart, dass zwei gemeinsame Kreuzungslinien ausgebildet werden, welche einen Schnittpunkt mit der Längsachse des Einsatzelements 1 haben. In diesen beiden Schnittpunkten sind nach dem vorliegenden Ausführungsbeispiel der erste Stegelementverteilkanal 51 für das Wärmeträgerfluid 60 und der zweite Stegelementverteilkanal 52 für das Wärmeträgerfluid 60 angeordnet. Die Funktionsweise des ersten Stegelementverteilkanals 51 und des zweiten Stegelementverteilkanals 52 entspricht im Wesentlichen dem in Fig. 6a und 6b, Fig. 7 oder Fig. 8 dargestellten Ausführungsbeispiel.

Allerdings unterscheidet sich der Strömungsverlauf des Wärmeträgerfluids 60 durch die Stegelementkanäle. Das im Betriebszustand durch die Stegelementkanäle strömende Wärmeträgerfluid 60 wird durch strichlierte Pfeile dargestellt, wobei für die Strömung des Wärmeträgerfluids des ersten Stegelementverteilkanals 51 eine andere Kennzeichnung als für die Strömung des Wärmeträgerfluids des zweiten Stegelementverteilkanals 52 gewählt worden ist. Nach dem vorliegenden Ausführungsbeispiel ist die Strömung derart geführt, dass sich das vom ersten Stegelementverteilkanal 51 herkommende Wärmeträgerfluid nicht mit dem vom zweiten Stegelementverteilkanal 52 herkommenden Wärmeträgerfluid vermischt. Die Strömung des fliessfähigen Mediums 70 ist durch durchgezogene Pfeile symbolisiert und erfolgt in dieser Darstellung von rechts nach links.

Nach dem vorliegenden Ausführungsbeispiel wird das Wärmeträgerfluid von der Zuleitung 28 in den ersten Stegelementverteilkanal 51 geleitet. Vom ersten Stegelementverteilkanal 51 wird das Wärmeträgerfluid 60 in den ersten Stegelementteilkanal 41 des ersten Asts des ersten Stegelements 10 eingeleitet. Das Wärmeträgerfluid strömt im ersten Stegelementteilkanal 41 in Richtung des zweiten Stegelementteilkanals 42 des ersten Asts und von dort in den ersten Mantelkanal 13. Vom ersten Mantelkanal 13 strömt das Wärmeträgerfluid in den ersten Stegelementteilkanal 44 des zweiten Asts des ersten Stegelements 10 bis zum ersten Kreuzungspunkt mit dem zweiten Stegelement 20. An diesem Kreuzungspunkt befindet sich ein Verbindungskanal zum ersten Stegelementteilkanal 54 des ersten Asts des zweiten Stegelements 20. Das Wärmeträgerfluid durchströmt den ersten Stegelementteilkanal 54 des ersten Asts des zweiten Stegelements 20 bis zum dritten Mantelkanal 46. Vom dritten Mantelkanal 46 strömt das Wärmeträgerfluid in den zweiten Stegelementteilkanal 57 des zweiten Asts des zweiten Stegelements 20 und von dort in die dahinter liegende untere Hälfte des ersten Einsatzelements 1.

Die Strömung des Wärmeträgerfluids 60 durch die untere Hälfte des ersten Einsatzelements 1 wird nun anhand der Strömung des Wärmeträgerfluids erläutert, welches durch den zweiten Stegelementverteilkanal 52 zugeführt wird. Das Wärmeträgerfluid von der Zuleitung 48 in den zweiten Stegelementverteilkanal 52 geleitet. Vom zweiten Stegelementverteilkanal 52 wird das Wärmeträgerfluid in den ersten Stegelementteilkanal 44 des zweiten Asts des ersten Stegelements 10 eingeleitet. Das Wärmeträgerfluid strömt im ersten Stegelementteilkanal 44 in Richtung des zweiten Stegelementteilkanals 45 des zweiten Asts und von dort in den zweiten Mantelkanal 43. Vom zweiten Mantelkanal 43 strömt das Wärmeträgerfluid in den ersten Stegelementteilkanal 41 des ersten Asts des ersten Stegelements 10 bis zum ersten Kreuzungspunkt mit dem zweiten Stegelement 20. An diesem Kreuzungspunkt befindet sich ein Verbindungskanal zum ersten Stegelementteilkanal 56 des zweiten Asts des zweiten Stegelements 20. Das Wärmeträgerfluid durchströmt den zweiten Stegelementteilkanal 56 des ersten Asts des zweiten Stegelements 20 bis zum vierten Mantelkanal 47. Vom vierten Mantelkanal 47 strömt das Wärmeträgerfluid in den zweiten Stegelementteilkanal 55 des ersten Asts des zweiten Stegelements 20 und von dort in den ersten Stegelementteilkanal 54 des ersten Asts des zweiten Stegelements 20 bis zum Kreuzungspunkt mit dem ersten Stegelementverteilkanal 51.

In Fig. 9b ist gezeigt, dass der erste Stegelementverteilkanal 51 und der zweite Stegelementverteilkanal 52 eine Mehrzahl von Kammern umfassen. Diese Kammern ermöglichen die Trennung der Wärmeträgerfluidströme des ersten und zweiten Stegelementverteilkanals 51, 52.

Für jedes weitere erste oder zweite Stegelement der ersten oder zweiten Gruppe, die an die dargestellten Stegelemente anschliessen, erfolgt die Strömung des Wärmeträgerfluids in analoger Weise, wie in Fig. 9b gezeigt ist. Das Wärmeträgerfluid kann wie in den vorherigen Ausführungsbeispielen über je eine Zuleitung 28, 48 zum entsprechenden ersten und zweiten Stegelementverteilkanal 51, 52 geleitet werden. Das Wärmeträgerfluid kann wie in den vorhergehenden Ausführungsbeispiel den Wärmetauscher über eine entsprechende Ableitung 29, 49 verlassen.

Die ersten Stegelemente 10 und die zweiten Stegelemente 20 können wie in den vorhergehenden Ausführungsbeispielen in einem Winkel von 25 bis 75 Grad zur Längsachse des Fluidkanals 4 angeordnet sein. Üblicherweise beträgt der Winkel 30 bis 60 Grad zur Längsachse des Fluidkanals 4, in vielen Fällen im Wesentlichen 45 Grad zur Längsachse des Fluidkanals 4.

Jeder der ersten Stegelementkanäle 10 und der zweiten Stegelementkanäle 20 mündet spaltfrei in das erste Einsatzmantelelement 11 des ersten Einsatzelementes 1. Insbesondere bilden das erste Einsatzmantelelement 11 und jedes der ersten Stegelemente 10 sowie jedes der zweiten Stegelemente 20 ein monolithisches Bauelement aus, welches beispielsweise durch ein Schweissverfahren, ein Schrumpfverfahren, ein Giessverfahren, ein Spritzgiessverfahren oder additives Fertigungsverfahren herstellbar ist.

Es können beliebig viele Gruppen 6, 7 von Stegelementen in Hauptströmungsrichtung des fliessfähigen Mediums gesehen hintereinander angeordnet werden. Das erste Einsatzelement 1 oder gegebenenfalls das zweite Einsatzelement 2 kann auch nur aus einer ersten Gruppe 6 und einer zweiten Gruppe 7 von Stegelementen bestehen. Daher werden in der Beschreibung die erste Gruppe 6 und die zweite Gruppe 7 stellvertretend für eine Mehrzahl weiterer gleichartiger erster oder zweiter Gruppen angesehen. Wie viele Gruppenpaare im Einzelfall vorgesehen sind, hängt von der konkreten Wärmeaustausch- und/oder Mischaufgabe ab. Das heisst, wenn in den folgenden Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, von dieser Beschreibung mit erfasst sein. Der Einfachheit halber wird die Beschreibung zumeist auf eines der Gruppenpaare beschränkt.

Jede der Gruppen kann den gleichen Aufbau wie die vorhergehende Gruppe aufweisen, der Aufbau benachbarter Gruppen kann sich auch voneinander unterscheiden. Jedes der gezeigten Ausführungsbeispiele kann mit jedem anderen Ausführungsbeispiel beliebig kombiniert werden.

Die ersten Stegelementkanäle 12 und die zweiten Stegelementkanäle 22 verlaufen im Inneren der entsprechenden ersten Stegelemente 10 bzw. der zweiten Stegelemente 20, sodass keine Verbindung zwischen den Stegelementkanälen im Inneren der Stegelemente und dem Raum, welcher die Stegelemente umgibt, besteht. Der Raum enthält im Betriebszustand das fliessfähige Medium 70.

Fig. 10 zeigt einen Längsschnitt durch einen Teil eines ersten Einsatzelements 1 eines Wärmetauschers 5 nach einem zehnten Ausführungsbeispiel. Das erste Einsatzelement 1 kann Bestandteil einer Anordnung sein, wie beispielsweise in Fig. 3 oder Fig. 4 gezeigt ist. Für gleiche oder gleichwirkende Bauteile wurden dieselben Bezugszeichen wie für das erste Ausführungsbeispiel verwendet. Wenn nicht anders angegeben, wird auf die Beschreibung zu den vorhergehenden Ausführungsbeispielen verwiesen. Das erste Einsatzelement 1 ist nach dem vorliegenden Ausführungsbeispiel einteilig aufgebaut, beispielsweise bei Herstellung des ersten Einsatzelements 1 mittels eines additiven Fertigungsverfahrens. Nach dem vorliegenden Ausführungsbeispiel umfasst das erste Einsatzelement 1 ein erstes Einsatzmantelelement 11, welches eine Mehrzahl von ersten und zweiten Stegelementen 10, 20 enthält. Das erste Einsatzelement 1 unterscheidet sich vom ersten Einsatzelement gemäss Fig. 9a oder Fig. 9b dahingehend, dass das Wärmeträgerfluid über die dritten und vierten Mantelkanäle 43, 47 zugeführt wird und das erste Einsatzelement über die ersten und vierten Mantelkanäle 13, 46 verlässt. Nach diesem Ausführungsbeispiel wird jedes der ersten Stegelemente 10 und der zweiten Stegelemente 20 vollständig durchströmt, wie auch im in Fig. 7 gezeigten Ausführungsbeispiel. Dieses Ausführungsbeispiel kann vorteilhafterweise zum Einsatz kommen, wenn das Wärmeträgerfluid den Wärmetauscher mit möglichst geringem Druckverlust durchströmen soll. Wie in den in Fig. 7 bis Fig. 9 dargestellten Ausführungsbeispielen werden die ersten Stegelemente und zweiten Stegelemente in der gezeigten Anordnung ebenso dicht angeordnet wie in den vorhergehenden Ausführungsbeispielen, sodass im Wesentlichen dieselbe Wärmeaustauschfläche zur Verfügung steht. Es können jedoch nach diesem Ausführungsbeispiel eine Mehrzahl von Mantelkanälen vorgesehen werden. Insbesondere kann auch für jedes Stegelement ein zugehöriger Mantelkanal vorgesehen werden, sodass sämtliche Stegelementkanäle der ersten Gruppen und zweiten Gruppen gleichzeitig von Wärmeträgerfluid durchströmt werden, womit die Vorteile der ersten bis sechsten Ausführungsbeispiele mit den Vorteilen der siebenten bis neunten Ausführungsbeispiele kombiniert werden können.

Die hintereinander angeordneten Gruppen von ersten und zweiten Stegelementen 10, 20 können zudem nach jedem der Ausführungsbeispiele überlappen, um so viel aktive Wärmeaustauschfläche wie möglich in dem vom Einsatzelement 1 gebildeten Volumen bereitzustellen. Unter Überlappen ist zu verstehen, dass mindestens ein Teil der Stegelemente einer ersten Gruppe 6 und ein Teil der Stegelemente einer nachfolgenden Gruppe und/oder ein Teil der Stegelemente einer vorhergehenden Gruppe im gleichen Rohrabschnitt angeordnet sind. Die Projektion der Länge des Stegelements auf die Längsachse ergibt eine Länge L1 und die Projektion des überlappenden Teils der Stegelemente der benachbarten Gruppe auf die Längsachse ergibt eine Länge L2, wobei L2 kleiner als L1 ist und L2 grösser 0 ist. Der betrachtete Rohrabschnitt wird dabei so definiert, dass er die Länge L1 aufweist, das heisst das Hüllvolumen des zentral angeordneten Stegelements 10 darstellt. Das Hüllvolumen ist bei einem zylinderförmigen Mantelelement mit kreisförmigem Querschnitt ein Hüllzylinder, bei einem Mantelelement mit rechteckigem oder vieleckigem Querschnitt ein Hüllquader.

Die Anordnung der Stegelemente zueinander kann in beliebigen Winkeln erfolgen. Stegelemente beliebiger Querschnittsfläche können miteinander in einem ersten oder zweiten Einsatzelement 1, 2 kombiniert werden. Insbesondere kann sich auch jedes Stegelement 10 der ersten Gruppe 6 von den anderen Stegelementen derselben Gruppe unterscheiden. Insbesondere kann sich jedes Stegelement 10 der zweiten Gruppe 7 den anderen Stegelementen derselben Gruppe unterscheiden. Auch die Stegelemente der ersten Gruppe 6 können sich von den Stegelementen der zweiten Gruppe 7 unterscheiden.

Eine Mehrzahl gleichartiger oder unterschiedlicher Stegelemente 10 kann entlang der ersten Gruppenebene angeordnet sein. Eine Mehrzahl gleichartiger oder unterschiedlicher Stegelemente 20 kann entlang der zweiten Gruppenebene angeordnet sein. Der Winkel, welchen die dargestellte Schnittlinie der ersten Gruppenebene in der Zeichnungsebene mit der Längsachse 4 einschliesst, kann sich von dem Winkel unterscheiden, welchen die dargestellte Schnittlinie der zweiten Gruppenebene in der Zeichnungsebene mit der Längsachse 4 einschliesst. Auch die Stegbreiten der Stegelemente 10 der ersten Gruppe 6 können sich untereinander und/oder von den Stegbreiten der Stegelemente 20 der zweiten Gruppe 7 unterscheiden.

Benachbarte Gruppen können wahlweise parallele Gruppenebenen aufweisen oder auch unterschiedliche Winkel zur Längsachse 4 einschliessen.

Die Erfindung ist nicht auf die vorliegenden Ausführungsbeispiele beschränkt. Die Stegelemente können sich in ihrer Anzahl und in ihren Abmessungen unterscheiden. Des Weiteren kann sich die Anzahl der Stegelementkanäle in den Stegelementen je nach dem geforderten Wärmebedarf für die Wärmeübertragung unterscheiden. Auch können die Neigungswinkel, den die Gruppen zur Längsachse einschliessen, je nach Anwendung variieren. Es können auch mehr als zwei Einsatzelemente hintereinander angeordnet werden.

Für eine Fachperson ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Wärmetauscher (5), enthaltend ein Mantelelement (3) und ein erstes Einsatzelement (1), wobei das erste Einsatzelement (1) im Betriebszustand im Inneren des Mantelelements (3) angeordnet ist, wobei das erste Einsatzelement (1) zumindest ein erstes Einsatzmantelelement (11) und mindestens ein erstes Stegelement (10) und ein zweites Stegelement (20) enthält, wobei durch das erste Einsatzelement (1) ein Fluidkanal (4) ausgebildet ist, wobei das erste Stegelement (10) und das zweite Stegelement (20) den Fluidkanal (4) kreuzen, wobei das erste Stegelement (10) einen ersten Stegelementkanal (12) und das zweite Stegelement (20) einen zweiten Stegelementkanal (22) für ein Wärmeträgerfluid enthalten, wobei das erste Einsatzmantelelement (11) mit zumindest einer Zuleitung (28, 48) und mit zumindest einer Ableitung (29, 49) für das Wärmeträgerfluid fluidleitend verbunden ist, **dadurch gekennzeichnet, dass** zumindest ein zweites Einsatzelement (2) im Inneren des Mantelelements (3) angeordnet ist, welches mit dem ersten Einsatzelement (1) fluiddicht verbunden ist, sodass ein Eintritt von Wärmeträgerfluid in den Fluidkanal (4) zwischen dem ersten Einsatzelement (1) und dem mindestens einen zweiten Einsatzelement (2) ausgeschlossen ist.

2. Wärmetauscher (5) nach Anspruch 1, wobei das erste Einsatzelement mit dem zweiten Einsatzelement an deren gemeinsamen Stirnfläche mittels einer Schweissverbindung oder einer Lötverbindung verbunden ist.

3. Wärmetauscher (5) nach Anspruch 1, wobei des erste Einsatzelement und das zweite Einsatzelement einstückig ausgebildet sind.

4. Wärmetauscher (5) nach einem der vorhergehenden Ansprüche, wobei das erste Einsatzelement (1) zumindest einen Mantelkanal (13, 43, 46, 47, 51, 52) enthält, der mit den ersten und zweiten Stegelementkanälen (12, 22) in fluidleitender Verbindung steht.

5. Wärmetauscher (5) nach Anspruch 4, wobei der Mantelkanal (13, 43, 46, 47, 51, 52) zur Aufnahme und zum Austausch des Wärmeträgerfluids mit den ersten und zweiten Stegelementkanälen (12, 22) ausgebildet ist.

6. Wärmetauscher (5) nach einem der vorhergehenden Ansprüche, wobei das erste Stegelement (10) ein erstes Ende (8) und ein zweites Ende (9) enthält, wobei das erste Ende (8) und das zweite Ende (9) des ersten Stegelements (10) mit dem ersten Einsatzmantelelement (11) an verschiedenen Stellen verbunden sind, wobei das zweite Stegelement (20) ein erstes Ende (18) und ein zweites Ende (19) enthält, wobei das erste Ende (18) und das zweite Ende (19) des zweiten Stegelements (10) mit dem ersten Einsatzmantelelement (11) an verschiedenen Stellen verbunden sind.

7. Wärmetauscher (5) nach Anspruch 6, wobei der Mantelkanal als zumindest ein Stegelementverteilkanal und/oder ein Stegelementsammelkanal (51, 52) ausgebildet ist, wobei zumindest einer der Stegelementverteilkanäle und/oder der Stegelementsammelkanäle (51, 52) nicht mit dem Stegelementende (8, 9, 18, 19) verbunden sind, welches an das Einsatzmantelelement anschliesst (11).

8. Wärmetauscher (1) nach einem der vorhergehenden Ansprüche, wobei zumindest einer der Mantelkanäle (13, 43, 46, 47, 51, 52) eine Zuleitung (28, 48) für das Wärmeträgerfluid und eine Ableitung (29, 49) für das Wärmeträgerfluid enthält oder mit zumindest der einen Zuleitung (28, 48) oder zumindest der einen Ableitung (29, 49) für das Wärmeträgerfluid fluidleitend verbunden ist.

9. Wärmetauscher (5) nach Anspruch 8, wobei zumindest einer der Mantelkanäle mit dem Stegelementverteilkanal (51) und zumindest ein weiterer Mantelkanal mit dem Stegelementsammelkanal (52) fluidleitend verbunden ist.

10. Wärmetauscher (5) nach einem der Ansprüche 7 bis 9, wobei der Stegelementverteilkanal (51) zur Zuführung von Wärmeträgerfluid zu einer Mehrzahl von ersten und/oder zweiten Stegelementkanälen (11, 22) von entsprechenden ersten und/oder zweiten Stegelementen (10, 20) ausgebildet ist und wobei der Stegelementsammelkanal (52) zur Ableitung von Wärmeträgerfluid von einer Mehrzahl von ersten und/oder zweiten Stegelementkanälen (11, 22) von entsprechenden von entsprechenden ersten und/oder zweiten Stegelementen (10, 20) ausgebildet ist.

11. Wärmetauscher (1) nach einem der vorhergehenden Ansprüche 4 bis 9, wobei zumindest einer der Mantelkanäle (13, 43, 46, 47, 51, 52) als ein Wärmeträgerfluidverteiler oder als ein Wärmeträgerfluidsammler ausgebildet ist.

12. Wärmetauscher (5) nach einem der vorhergehenden Ansprüche, wobei zumindest eines der ersten oder zweiten Stegelemente (10, 20) einen ersten Ast und einen zweiten Ast enthält.

13. Wärmetauscher (5) nach einem der vorhergehenden Ansprüche, wobei der Wärmetauscher zumindest ein drittes Einsatzelement enthält, welches mit dem ersten und zweiten Einsatzelement lösbar verbunden ist.

14. Wärmetauscher (5) nach einem der vorhergehenden Ansprüche, wobei das dritte Einsatzelement entweder mit dem ersten oder dem zweiten Einsatzelement mittels einer Klemmvorrichtung dichtend zusammenfügbar ist.

15. Verfahren zur Herstellung eines Wärmetauschers nach einem der vorhergehenden Ansprüche, **dadurch gekennzeichnet, dass** das erste Einsatzelement und zumindest das eine zweite Einsatzelement mittels eines additiven Fertigungsverfahrens hergestellt werden.
